# EUROPÄISCHE PATENTANMELDUNG

(11) **EP 3 886 025 A1**
(43) Veröffentlichungstag der Anmeldung: **29.09.2021**
(21) Anmeldenummer: 20168317.4
(22) Anmeldetag: 06.04.2020
(51) Int. Cl.: G06Q 20/40, G06Q 20/02, G06Q 20/08, G06Q 20/36, G06Q 40/02, G06Q 30/06, H04L 9/06

(54) **VERFAHREN ZUR DURCHFÜHRUNG VON TRANSAKTIONEN**

(30) Priorität: 27.03.2020 EP 20166382
(71) Anmelder: Giesen, Heinz, 48147 Münster (DE)
(72) Erfinder: GIESEN, Dr. Dr. Heinz, 48147 Münster (DE)
(74) Vertreter: Richardt Patentanwälte PartG mbB

(57) **Zusammenfassung**

Die Erfindung betrifft ein Verfahren zur Durchführung von Transaktionen zwischen einer Anzahl von Teilnehmern, wobei jedem der Teilnehmer zwei Pseudonyme (746, 752)zugeordnet sind, wobei die Zuordnung der Pseudonyme zu einem Teilnehmer, sowie die Transaktionsstammdaten und ein Entschlüsselungsschlüssel (758) des Teilnehmers auf einem Notarserver gespeichert sind, wobei ein Anwendungsprogramm mit den beiden Pseudonymen und einem korrespondierenden Verschlüsselungsschlüssel eines ersten der Teilnehmer für den ersten Teilnehmer initialisiert ist, wobei das Anwendungsprogramm (634) Transaktionsparameter und ein Pseudonym eines zweiten der Teilnehmer erfasst und mit dem Verschlüsselungsschlüssel ein Chiffrat aus den Transaktionsparametern und dem zweiten Pseudonym des ersten Teilnehmers erstellt, wobei das Anwendungsprogramm eine Transaktionsanfrage mit dem ersten Pseudonym des ersten Teilnehmers im Klartext und dem Chiffrat an einen Transaktionsserver (620) sendet, wobei der Transaktionsserver das erste Pseudonym an den Notarserver (610) sendet, um von diesem das verknüpft mit dem ersten Pseudonym gespeicherte zweite Pseudonym des ersten Teilnehmers zu erhalten, wobei das Verfahren eine Zuordnungsmanipulationsprüfung umfasst, ob das durch die Entschlüsselung erhaltene zweite Pseudonym identisch ist zu dem im Notarserver für den ersten Teilnehmer gespeicherten zweiten Pseudonym ist, wobei der Notarserver die für die Durchführung der Transaktion erforderlichen Stammdaten nur dann an den Transaktionsserver sendet, wenn die Zuordnungsmanipulationsprüfung ergibt, dass die verglichenen zweiten Pseudonyme identisch sind .

## Beschreibung

Die Erfindung betrifft ein Verfahren zur Durchführung von Transaktionen zwischen einer Anzahl von Teilnehmern.

Aus dem Stand der Technik sind insbesondere für den Finanzsektor eine Vielzahl von Verfahren zur Durchführung von Transaktionen bekannt. Ein häufiger Schwachpunkt dieser Verfahren ist die Manipulierbarkeit der transaktionslimitierenden Daten, wie beispielsweise Bankverbindungen von Sendern und Empfängern einer Überweisung. Dies ist insbesondere im Bereich des Online-Bankings, aufgrund der Zugreifbarkeit des Transaktionskanals, beispielsweise durch man-in-themiddle-Attacken, problematisch. Um diese Angriffe zu verhindern, wurde die Verwendung von vorgangsindividuellen Transaktionsnummern (TAN-Verfahren), welche nur dem Überweisenden und dem Finanzinstitut bekannt sind und die bei jedem Transaktionsauftrag mit übermittelt werden müssen, eingeführt. Dieses Verfahren wurde unter anderem durch das iTAN, oder das chipTAN-Verfahren weiter hinsichtlich seiner Sicherheit gegenüber Manipulationen verbessert, wobei sich insbesondere das chipTAN durch einen Medienbruch auszeichnet. Ein Medienbruch bedeutet hierbei den Übergang von einem Medium, beispielsweise dem Internet, zu einem anderen Medium, beispielsweise der visuellen Erfassung eines Bildes. Hierdurch wird die Angreifbarkeit des Verfahrens reduziert, da für eine Manipulation des Verfahrens beide Medien angegriffen werden müssten.

In der internationalen Patentanmeldung WO2014075862A1 wird die Verwendung eines Notarservers in Kombination mit einem Transaktionsserver beschrieben. Das Verfahren schützt die Transaktionsdaten, wie beispielsweise Bankverbindungen, vor Manipulation. Allerdings könnte ein etwaiger Angreifer, dem es gelingt, in den Transaktionsserver einzudringen, die Pseudonyme austauschen und dadurch bewirken, dass eine Transaktion zwischen anderen Teilnehmern durchgeführt wird als zwischen denen, zwischen welchen die Transaktion eigentlich stattfinden sollte.

Der Erfindung liegt demgegenüber die Aufgabe zugrunde, ein verbessertes Verfahren zur Durchführung von Transaktionen zu schaffen.

Die der Erfindung zugrunde liegende Aufgabe wird mit den Merkmalen der unabhängigen Patentansprüche gelöst. Ausführungsformen der Erfindung sind in den abhängigen Patentansprüchen angegeben. Ausführungsformen der Erfindung sind frei miteinander kombinierbar, sofern sie sich nicht gegenseitig ausschließen.

In einem Aspekt betrifft die Erfindung ein Verfahren zur Durchführung von Transaktionen zwischen einer Anzahl von Teilnehmern. Jedem der Teilnehmer ist in einem Register eines Notarservers mindestens zugeordnet:
- ein erstes eindeutiges Pseudonym des Teilnehmers,
- ein zweites eindeutiges Pseudonym des Teilnehmers;
- teilnehmerspezifische Transaktionsstammdaten;
- ein Entschlüsselungsschlüssel;

Das Verfahren umfasst ferner ein Bereitstellen mindestens eines Transaktionsservers und ein Bereitstellen eines Anwendungsprogramms, das für einen ersten der Teilnehmer initialisiert wurde. Das initialisierte Anwendungsprogramm beinhaltet:
- das erste Pseudonym des ersten Teilnehmers;
- das zweite Pseudonyms des ersten Teilnehmers;
- einen Verschlüsselungsschlüssel, der zu dem im Register für den ersten Teilnehmer gespeicherten Entschlüsselungsschlüssel korrespondiert.

Das Verfahren umfasst ferner:
- Erfassung eines Pseudonyms eines zweiten der Teilnehmer durch das Anwendungsprogramm,
- Übermittlung von Transaktionsparametern an das Anwendungsprogramm,
- Erzeugung eines Chiffrats durch Verschlüsselung zumindest des zweiten Pseudonyms des ersten Teilnehmers, des Pseudonyms des zweiten Teilnehmers und der Transaktionsparameter mit dem Verschlüsselungsschlüssel durch das Anwendungsprogramm,
- Übermittlung einer Transaktionsanfrage, die das erste Pseudonym des ersten Teilnehmers im Klartext und das Chiffrat beinhaltet, von dem Anwendungsprogramm an einen der Transaktionsserver,
- In Antwort auf den Erhalt der Transaktionsanfrage, Übermittlung zumindest des ersten Pseudonyms des ersten Teilnehmers von dem mindestens einen Transaktionsserver an den Notarserver,
- Identifikation des im Register gespeicherten Entschlüsselungsschlüssels anhand des ersten Pseudonyms des ersten Teilnehmers durch den Notarserver,
- Übermittlung des teilnehmerspezifischen Entschlüsselungsschlüssels durch den Notarserver an den Transaktionsserver,
- Entschlüsselung des Chiffrats mit dem teilnehmerspezifischen Entschlüsselungsschlüssel, um das zweite Pseudonym des ersten Teilnehmers, die Transaktionsparameter und das Pseudonym des zweiten Teilnehmers in entschlüsselter Form zu erhalten, durch den Transaktionsserver;
- Durchführung einer ersten Zuordnungsmanipulationsprüfung bezüglich der Zuordnung der Transaktionsparameter zum ersten Teilnehmer, wobei die Zuordnung als manipuliert gilt, wenn das durch die Entschlüsselung des Chiffrats erhaltene zweite Pseudonym des ersten Teilnehmers nicht identisch ist zu dem im Register des Notarservers für den ersten Teilnehmer gespeicherten zweiten Pseudonyms;
   - Übermittlung zumindest der Transaktionsstammdaten des ersten Teilnehmers an den mindestens einen Transaktionsserver durch den Notarserver nur dann, wenn die erste Zuordnungsmanipulationsprüfung ergibt, dass die Zuordnung nicht manipuliert wurde,
   - In Antwort auf den Empfang der Transaktionsstammdaten des ersten Teilnehmers, Durchführung oder Veranlassung der Transaktion zwischen dem ersten Teilnehmer und dem zweiten Teilnehmer unter Verwendung der Transaktionsparameter und den Transaktionsstammdaten durch den mindestens einen Transaktionsserver.

Ausführungsformen der Erfindung können den Vorteil haben, dass zum einen die zu verarbeitenden bzw. zu speichernde Daten ("Transaktionsparameter"), z.B. medizinische Daten eines Patienten, eine ID eines Test-Kits, ein zu überweisender Geldbetrag, etc.) in einer primär unbrauchbaren, d.h., verschlüsselten Form über das Netzwerk an den Transaktionsserver übertragen wird. Der Transaktionsserver hat zum Zeitpunkt des Empfangs der Transaktionsanfrage auch keinen geeigneten Entschüsselungsschlüssel. Nur dann, wenn für das erste Pseudonym des ersten Teilnehmers im Notarserver auch ein passender Entschlüsselungsschlüssel hinterlegt ist, empfängt der Transaktionsserver den Entschlüsselungsschlüssel und kann das Chiffrat entschlüsseln. Dies allein reicht aber für die Ausführung bzw. Veranlassung der Transaktion noch nicht. Es müssen vielmehr auch noch zumindest die erste Zuordnungsprüfung bestanden werden. In der ersten Zuordnungsprüfung wird überprüft, ob auf dem Notarserver für das erste Pseudonym des ersten Teilnehmers auch das zweite Pseudonym des ersten Teilnehmers, das in dem entschlüsselten Chiffrat enthalten war, hinterlegt ist. Nur unter der Voraussetzung, dass dieses zweite Pseudonym in identischer Form im Registereintrag für den ersten Teilnehmer im Register des Notarservers hinterlegt ist und an den Transaktionsserver zurückgegeben wird, gilt die Transaktionsanfrage als nicht-manipuliert. Somit kann der Transaktionsserver einem Angriffsszenario vorbeugen, wonach sich ein Angreifer unberechtigten Zugriff auf den Transaktionsserver verschafft hat und dort das erste Pseudonym des ersten Teilnehmers innerhalb der empfangenen Transaktionsanfrage mit einem Pseudonym eines anderen Teilnehmers ersetzt, z.B. um die Daten umzuleiten an einen beim Notarserver ebenfalls registrierten Kooperationspartner des Angreifers. Dies kann dadurch verhindert werden, dass das in dem Chiffrat enthaltene zweite Pseudonym mit dem vom Notarserver auf Basis des ersten Pseudonyms erhaltenen zweiten Pseudonym abgeglichen wird, denn wenn das erste Pseudonym durch ein anderes ersetzt würde, würde auch ein anderes zweites Pseudonym (oder gar keines) vom Notarserver identifiziert und zurückgegeben.

Die zu speichernden Daten (Transaktionsparameter) sind somit untrennbar dem ersten Teilnehmer (z.B. dem die Daten erstellenden und/oder verarbeitenden Teilnehmer) zugeordnet, denn das zweite Pseudonym des ersten Teilnehmers ist - zusammen mit den Transaktionsparametern - Bestandteil des Chiffrats, und kann mit Hilfe des im Klartext zusammen mit dem Chiffrat übermittelten ersten Pseudonyms durch den Notarserver dem ersten Teilnehmer eindeutig zugeordnet werden.

Auch der zweite Teilnehmer ist den Transaktionsparametern eindeutig und auf eine nicht-manipulierbare Weise zugeordnet, denn das Pseudonym des zweiten Teilnehmers ist ebenfalls Bestandteil des Chiffrats.

Somit ist gemäß Ausführungsformen auf manipulationssichere Weise sowohl ein "Fingerabdruck" des die Transaktionsparameter erstellenden bzw. verarbeitenden Teilnehmers wie auch ein "Fingerabdruck" des die Transaktionsparameter empfangenden Teilnehmers mit den Transaktionsparametern verknüpft.

Ausführungsformen der Erfindung haben weiterhin den Vorteil, dass gemäß Ausführungsformen der Erfindung die Transaktionsstammdaten, also z.B. die Kontonummer der Teilnehmer oder die Klarnamen oder Adressen der Teilnehmer, niemals über die potentiell unsichere Netzwerkverbindung zwischen den Endgeräten der Teilnehmer übertragen werden. Stattdessen werden lediglich die Pseudonyme übermittelt, also Datenwerte, aus welchen diese Transaktionsstammdaten nicht rekonstruiert werden können. Vielmehr sind die Transaktionsstammdaten der einzelnen beim Notarserver registrierten Teilnehmer im Register des Notarservers hinterlegt und werden nur nach Durchführung von Sicherheitsprüfungen, z.B. der ersten Zuordnungsmanipulationsprüfung, gezielt für einzelne Teilnehmer oder Teilnehmerpaare vom Notarserver an den Transaktionsserver übermittelt, um diesen in die Lage zu versetzen, die Transaktion durchzuführen oder zu veranlassen. Vorzugsweise befinden sich der Notarserver und der Transaktionsserver innerhalb einer besonders geschützten IT-Infrastruktur und vorzugsweise ist der Transaktionsserver dazu konfiguriert, die erhaltenen Transaktionsstammdaten der Teilnehmer einer angeforderten Transaktion unmittelbar nach Durchführung oder Veranlassung der Transaktion wieder zu löschen.

Ausführungsformen der Erfindung können weiterhin der Vorteil haben, dass die Haltung und Verarbeitung sensibler Daten der Teilnehmer (Transaktionsparameter, z.B. medizinische Daten eines Patienten, ein elektronisches Rezept für Arzneimittel, zu überweisende Geldbeträge, etc.) strikt getrennt ist von der Verwaltung der Teilnehmeraccounts. Der Notarserver erhält die sensiblen Transaktionsparameter nicht, da diese nur vom Endgerät der Teilnehmer an den Transaktionsserver gesendet werden, nicht aber vom Transaktionsserver an den Notarserver. Umgekehrt erhält ein Transaktionsserver allenfalls temporär für einzelne Teilnehmer deren Transaktionsstammdaten, um die angeforderte Transaktion durchzuführen. Somit ist sichergestellt, dass die Situation nicht eintreten kann, dass durch das Eindringen in ein einzelnes Rechnersystem sowohl die Transaktionsstammdaten als auch die sensiblen Transaktionsparameter mehrerer Teilnehmer offen liegen und die sensiblen Daten einzelnen Teilnehmern mit offengelegten Identitäten zugeordnet werden können.

Nach Ausführungsformen der Erfindung liegen die zweiten Pseudonyme, Entschlüsselungsschlüssel und Transaktionsstammdaten im Register des Notarservers in verschlüsselter Form vor, die ersten Pseudonyme der Teilnehmer liegen im Klartext vor. Der Notarserver ist dazu konfiguriert, nach Erhalt eines ersten Pseudonyms von dem Transaktionsserver selektiv nur denjenigen Teilnehmerregistereintrag samt darin enthaltenen zweitem Pseudonym, Entschlüsselungsschlüssel und/oder Transaktionsstammdaten zu entschlüsseln, dessen erstes Pseudonym identisch ist zu dem vom Transaktionsserver empfangenen Pseudonym. Nachdem der Transaktionsserver in Antwort auf den Erhalt des ersten Pseudonyms das zweite Pseudonym, den Entschlüsselungsschlüssel und später nach erfolgreicher erster Zuordnungsmanipulationsprüfung die Transaktionsstammdaten und ggf. weitere Daten des Teilnehmers übermittelt hat, löscht der Notarserver die temporär im Klartext vorliegenden, entschlüsselten zweiten Pseudonyme, Entschlüsselungsschlüssel und/oder Transaktionsstammdaten. Dies kann die Sicherheit weiter erhöhen.

Nach Ausführungsformen wird die Anzahl und Art des zumindest einen Transaktionsservers, der die Transaktionsstammdaten vom Notarserver erhält und/oder die Art der von dem zumindest einen Transaktionsserver durchgeführten Transaktionen individuell für einzelne Transaktionsparameter oder für die Gesamtheit der Transaktionsparameter durch teilnehmerspezifisch festgelegte Transaktionskontrolldaten bestimmt, die im Register des Notarservers verknüpft mit dem ersten Pseudonym des jeweiligen Teilnehmers gespeichert sind.

Ausführungsformen der Erfindung können den Vorteil haben, dass die Kontrolle über die Ausführung der Transaktionen serverseitig implementiert ist, also im Zusammenspiel zwischen Notarserver und dem zumindest einen Transaktionsserver realisiert ist. Es ist also nicht möglich, dass durch Manipulation des Anwendungsprogramms auf einem vergleichsweise wenig geschützten Endgerät die Datenverarbeitung im Rahmen der angefragten Transaktion manipuliert wird. Dies bietet einen zusätzlichen Schutz vor dem Verlust oder der Manipulation der sensiblen Transaktionsparameter.

Nach Ausführungsformen der Erfindung geben die Transaktionskontrolldaten an, welche anderen Teilnehmer oder Teilnehmergruppen welche Typen von Daten dieses Teilnehmer unter welchen Bedingungen lesen, verarbeiten, speichern, löschen, modifizieren oder weiterleiten dürfen, und/oder geben an, ob eine Bestätigung on dem ersten und/oder zweiten Teilnehmer eingeholt werden muss, bevor die Transaktion ausgeführt wird.

Je nach Anwendungsszenario können die Transaktionskontrolldaten applikationsübergreifend, teilnehmerspezifisch und/oder Transaktionsparameterspezifisch definiert und berücksichtigt werden.

Beispielsweise kann eine applikationsübergreifende Definition der Transaktionskontrolldaten vorsehen, dass alle Transaktionsparameter, die Blutdruckwerte oder Blutzuckerwerte eines Patienten sind, direkt von dem jeweiligen Anwendungsprogramm (z.B. Blutdruck-App oder Blutzucker-Überwachungs-App) in die elektronische Patientenakte des Patienten gespeichert werden dürfen, sofern die hier beschriebenen Zuordnungsmanipulationsprüfungen und ggf. weitere Sicherheitsprüfungen positiv verliefen. Die Transaktionskontrolldaten können aber vorsehen, dass alle Transaktionsparameter, die genomische Sequenzdaten eines Patienten sind, nur nach zusätzlicher expliziter Bestätigung durch ein Anwendungsprogramm auf dem Endgerät des Patienten in dessen elektronische Patientenakte gespeichert werden dürfen, wobei die explizite Bestätigung durch den Patienten für jede Transaktion zur Speicherung genomischer Daten zusätzlich zu den hier beschriebenen Zuordnungsmanipulationsprüfungen erfolgen muss. Somit kann global für eine große Vielzahl von Anwendungsprogrammen definiert werden, wie mit den von den jeweiligen Anwendungsprogrammen erhobenen Daten verfahren werden soll. Dies reduziert den Konfigurationsaufwand für die Teilnehmer und erhöht auch die Sicherheit, denn ab einer gewissen Anzahl an Anwendungsprogrammen besteht bei einer durchgehend anwendungsprogrammspezifischen Konfiguration ein Risiko, dass ein Teilnehmer mehr von seinen Daten preisgibt, als er dies eigentlich wünscht. Wenn der Teilnehmer die Art der Verarbeitung bestimmter Arten von Transaktionsparametern ändern möchte, kann er dies gemäß Ausführungsformen der Erfindung zentral für sämtliche Anwendungsprogramme tun, die für ihn initialisiert wurden.

Beispielsweise kann der Notarserver ein Web-Interface, z.B. über ein Webportal, bereitstellen, über welche sich einzelne Teilnehmer einloggen und die auf dem Notarserver für sie jeweils hinterlegten Transaktionskontrolldaten editieren können. Zusätzlich oder alternativ dazu können die einzelnen Anwendungsprogramme eine Schnittstelle zum Austausch von Transaktionskontrolldaten mit dem Notarserver haben sowie eine Nutzerschnittstelle (z.B. GUI), die es dem Teilnehmer erlaubt, seine Transaktionskontrolldaten über die GUI dieser App für diese App aber ggf. auch mit Wirkung für andere Apps zu ändern. Der Notarserver ist dazu konfiguriert, die Änderungen der Transaktionskontrolldaten von dem Anwendungsprogramm zu empfangen, die in dem Register für dieses Anwendungsprogramm und diesen Teilnehmer hinterlegten Transaktionskontrolldaten entsprechend zu aktualisieren und zu prüfen, ob die Änderungen Aspekte betreffen, die global für weitere Anwendungsprogramme geändert werden müssen, die für den Teilnehmer registriert bzw. initialisiert sind. In diesem Fall veranlasst der Notarserver eine Aktualisierung auch der Transaktionskontrolldaten dieser weiteren Anwendungsprogramme im Registerdatensatz dieses einen Teilnehmers.

Ausführungsformen der Erfindung können zudem den Vorteil einer hohen Flexibilität haben, denn der Teilnehmer kann die für ihn beim Notarserver hinterlegten Transaktionskontrolldaten teilnehmerindividuell ändern.

Nach Ausführungsformen der Erfindung ist der Entschlüsselungsschlüssel, der jedem der Teilnehmer in dem Register zugeordnet ist, sowie der zu diesem korrespondierende Verschlüsselungsschlüssel, jeweils ein für den jeweiligen Teilnehmer individuell erzeugter, einmaliger kryptographischer Schlüssel.

Dies kann die Sicherheit weiter erhöhen, denn der Transaktionsserver erhält vom Notarserver in Reaktion auf die Weiterleitung des ersten Pseudonyms des ersten Teilnehmers einen Entschlüsselungsschlüssel, der lediglich auf Chiffrate anwendbar ist, die von einem für diesen ersten Teilnehmer initialisierten Anwendungsprogramm erzeugt wurde. Die Chiffrate, die in Transaktionsanfragen anderer Teilnehmer enthalten sind, kann der Transaktionsserver mit diesem Schlüssel somit nicht entschlüsseln. Dies kann die Sicherheit erhöhen, denn für den Fall, dass ein Angreifer erfolgreich in den Transaktionsserver eindringen und den Entschlüsselungsschlüssel für eine Transaktionsanfrage in Erfahrung bringen sollte, kann dieser Angreifer damit nicht die Chiffrate anderer Teilnehmer entschlüsseln.

Nach Ausführungsformen der Erfindung sind die Teilnehmer natürliche Personen, juristische Personen, Datenspeicher oder sonstige physische Objekte, insbesondere medizinische Geräte oder Kits, oder eine Kombination von zwei oder mehr der vorgenannten Arten von Teilnehmern umfasst.

Ausführungsformen können den Vorteil haben, dass hier mit der gleichen Systemarchitektur und Sicherheitsinfrastruktur eine große Vielzahl von unterschiedlichen Transaktionen abgebildet werden kann. Die Entwicklung neuer Anwendungen, z.B. für das Überwachen von physiologischen Parametern von Patienten, zum datengestützten Gesundheitsmonitoring oder zur softwaregestützten Diagnoseassistenz kann somit erheblich vereinfacht werden, denn die Entwickler der jeweiligen Applikation müssen in dem neu entwickelten Anwendungsprogramm lediglich sicherstellen, dass im Zuge der Initialisierung des Anwendungsprogramms für einen bestimmten Teilnehmer dessen Pseudonyme, Schlüssel und optional weitere Konfigurationsdaten in dem Anwendungsprogramm auf sichere Weise hinterlegt werden. Das Anwendungsprogramm muss zudem Transaktionsanfragen so erstellen, dass die Pseudonyme der Teilnehmer auf die hier beschriebene Weise zur Bildung eines Chiffrats genutzt werden. Vorzugsweise sollte das neue Anwendungsprogramm dazu konfiguriert sein, dass in Interoperation von Notarserver und Anwendungsprogramm verschiedene Daten im Zuge der Initialisierung einer Instanz des neuen Anwendungsprogramms für einen bestimmten Teilnehmer sowohl in dieser Instanz des Anwendungsprogramms als auch im Registereintrag dieses Teilnehmers auf dem Notarserver hinterlegt werden. Die Hinterlegung der verschiedenen Daten erfolgt so, dass einige dieser Daten in Kopie im Anwendungsprogramm und im Notarserver-Registereintrag des Teilnehmers gespeichert werden, z.B. die erstellten Pseudonyme, Transaktionskontrolldaten und weitere Konfigurationsdaten, die spezifisch für das neu entwickelte Anwendungsprogramm erstellt wurden. Einige andere Daten können so gespeichert werden, dass im Anwendungsprogramm und dem Notarserver-Registereintrag funktional komplementäre Daten gespeichert werden, also z.B. der Verschlüsselungsschlüssel im Anwendungsprogramm und der Entschlüsselungsschlüssel im Registereintrag, wobei die beiden Schlüssel als asymmetrisches kryptographisches Schlüsselpaar ausgebildet sind. All dies lässt sich erheblich schneller implementieren als wenn jeder Anwendungsentwickler selbst die Infrastruktur bereitstellen müsste, um die Sicherheit der übertragenen und/oder gespeicherten Teilnehmerdaten sicherzustellen. Ausführungsformen können z.B. verwendet werden für Transaktionen zur Speicherung, zum Lesen und/oder zur rechnerischen Auswertung sensibler medizinischer Daten, zum Erstellen, Übertragen und Speichern von Arzneimittelrezepten, zur Überweisung von Geldbeträgen.

Beispielsweise kann gemäß Ausführungsformen der Erfindung im Falle einer Pandemie in kürzester Zeit ein Anwendungsprogramm (Pandemie-App) entwickelt werden, welches den Pandemiestatus eines Teilnehmers (z.B. "unbekannt", "infiziert", "immun") speichert. Beispielsweise kann das Anwendungsprogramm eine Statusänderung von "unbekannt" in "infiziert" nur dann erlauben, wenn der Eintrag von einem als Arzt registrierten Teilnehmer erstellt oder bestätigt wird. Je nach Ausführungsform kann die "Pandemie-Applikation" den Status von "infiziert" auf "immun" ändern, wenn ein Arzt dies bestätigt oder automatisch nach Ablauf einer Zeitspanne, innerhalb welcher für die jeweilige Pandemie bekannt ist, dass nach Überwindung der Infektion Immunität eingetreten ist. Die App könnte dazu konfiguriert sein, den aktuellen Status des Patienten nach einer Authentifizierung des Patienten gegenüber der Pandemie-App dadurch zu bestätigen, dass es den Pandemie-Status des Patienten mittels einer Transaktionsanfrage zum Lesen des Pandemiestatus aus der Patientenakte oder einer speziellen Pandemie-Datenbank an den Transaktionsserver sendet und den als Resultat der Ausführung der Lese-Transaktion erhaltenen Pandemiestatus über eine GUI der Pandemie-App anzeigt. Dies hätte den Vorteil, dass sowohl die Betreiber einer Pandemie-Datenbank und/oder Gesundheitsbehörden, die ggf. auf diese zugreifen dürfen, immer auf dem neuesten Stand bezüglich des Infektionsstatus großer Bevölkerungsteile sind, ohne die Namen und Adressen der Patienten zu kennen, die im Kontext demographischer Analysen ohnehin irrelevant sind. Der Patient hätte den Vorteil, dass er sich gegenüber Dritten (z.B. Arbeitgeber, Kooperationspartnern, Gesundheitsamt, Sicherheitspersonal am Eingang besonders geschützter Einrichtungen wie Krankenhäusern, Alten- und Pflegeheimen) mit dieser App als "immun" und damit ungefährlich für noch nicht infizierte/immune Personen ausweisen kann. Durch die Nutzung der vom Notar- und Transaktionsserver bereitgestellten Sicherheitsinfrastruktur würde eine solche Pandemie-App in kürzester Zeit so entwickelt werden können, dass die von dieser veranlasste Datenverarbeitung den im Gesundheitsbereich sehr hohen Sicherheitsanforderungen genügt.

Nach Ausführungsformen der Erfindung ist der erste Teilnehmer der Ersteller oder Bearbeiter der Transaktionsparameter. Zusätzlich oder alternativ dazu ist der zweite Teilnehmer ein Datenspeicher oder ein eine natürliche oder juristische Person repräsentierender Empfänger der Transaktionsparameter.

Die Flexibilität im Hinblick auf die Teilnehmer kann vorteilhaft sein, da mit der gleichen IT-Infrastruktur bestehend aus Notarserver und einem oder mehreren Transaktionsserver eine Vielzahl unterschiedlicher Prozesse abgebildet werden kann. Ausführungsformen der Erfindung bieten somit eine flexible und schnell erweiterbare und dabei gleichzeitig sehr sichere IT-Infrastruktur zur Übermittlung, Speicherung und Durchführung von Transaktionsanfragen und entsprechenden Transaktionen.

Nach Ausführungsformen der Erfindung umfasst das Verfahren ferner eine Initialisierung des Anwendungsprogramms für den ersten Teilnehmer.

Beispielsweise umfasst nach Ausführungsformen der Erfindung die Initialisierung folgende Schritte:
- Erzeugung des ersten und zweiten Pseudonyms und Speicherung des ersten und zweiten Pseudonyms im Register des Notarservers und in dem Anwendungsprogramm;
- Erzeugen des Verschlüsselungsschlüssels und des Entschlüsselungsschlüssels, insbesondere durch Ableitung des Verschlüsselungsschlüssels oder Entschlüsselungsschlüssels von zumindest einem der Pseudonyme des ersten Teilnehmers, und Speicherung des Verschlüsselungsschlüssels im Anwendungsprogramm und des Entschlüsselungsschlüssels im Register des Notarservers.

Beispielsweise können die ersten und zweiten Pseudonyme als für das Anwendungsprogramm oder einen von dem Anwendungsprogramm unterstützten Transaktionstyp individuell erzeugte, einmalige Pseudonyme des Teilnehmers erzeugt werden. Der Verschlüsselungsschlüssel und der Entschlüsselungsschlüssel können als für das Anwendungsprogramm oder einen von dem Anwendungsprogramm unterstützten Transaktionstyp individuell erzeugtes, einmaliges kryptographisches Schlüsselpaar des Teilnehmers erzeugt werden.

Ausführungsformen können den Vorteil haben, dass durch die Erzeugung bzw. Verwendung von Anwendungsprogrammspezifischen Teilnehmerpseudonymen die einzelnen Anwendungsprogramme sicherheitstechnisch voneinander isoliert sind. Sollte also beispielsweise der Klarname einer Person, der ein von einer Blutdruck-App verwendeten Pseudonym zugewiesen ist, in Verbindung mit diesem Pseudonym bekannt werden, ist damit nicht automatisch auch offenbart, welche Person hinter den von einer Blutzucker-App verwendeten Pseudonymen steckt, denn die verschiedenen Anwendungsprogramme bzw. "Apps" verwenden unterschiedliche, anwendungsspezifische Pseudonyme für die Teilnehmer, für die die jeweiligen Anwendungsprogramme initialisiert wurden.

Nach Ausführungsformen der Erfindung erfolgt die Initialisierung für den ersten Teilnehmer für jeweils eines von mehreren verschiedenen Anwendungsprogrammen.

Zusätzlich oder alternativ dazu erfolgt die Initialisierung des Anwendungsprogrammes für ein oder mehrere weitere Teilnehmer. Beispielsweise kann ein Anwendungsprogramm als Multi-User Anwendungsprogramm ausgebildet sein und ein Register mit den Pseudonymen, Schlüsseln und optional auch weiteren Daten mehrerer Teilnehmer enthalten. Die Teilnehmer müssen sich vor Nutzung des Anwendungsprogramm bei diesem anmelden, z.B. mittels Passwort, biometrischer Daten und/oder eines Hardwaretokens. Beispielsweise können Patientenverwaltungsprogramme oder komplexe medizinische Spezialanwendungen in Krankenhäusern als Multi-User Anwendungsprogramme ausgebildet sein.

Vorzugsweise werden im Zuge der Initialisierung eines Anwendungsprogrammes für einen der Teilnehmer die für den jeweiligen Teilnehmer erzeugten applikationsspezifischen Daten (z.B. Anwendungsprogrammspezifische Kontrolldaten, Anwendungsprogramm-IDs, etc.) verknüpft mit einem globalen Identifikator des jeweiligen Teilnehmers verknüpft in dem Register des Notarservers gespeichert. Der globale Teilnehmeridentifikator ist für alle Applikationen, die für einen Teilnehmer initialisiert werden, identisch und ist so in dem Register gespeichert, dass der globale Teilnehmeridentifikator nur dem Notarserver bekannt ist.

Die Verwendung eines globalen Identifikators kann vorteilhaft sein, da der Notarserver dadurch in die Lage versetzt wird, mehrere Anwendungsprogramme, die für einen bestimmten beim Notarserver registrierten Teilnehmer initialisiert wurden, miteinander zu verknüpfen, ohne dass es hierfür erforderlich ist, dass die verschiedenen Anwendungsprogramme die gleichen Pseudonyme für einen bestimmten Teilnehmer nutzen (was ein Sicherheitsproblem darstellen kann). Der Notarserver wird dadurch in die Lage versetzt, bestimmte Transaktionskontrolldaten eines Teilnehmers global für mehrere Anwendungsprogramme durchzusetzen. Wenn der Teilnehmer beispielsweise einmalig definiert, dass genomische Sequenzdaten nur nach expliziter Bestätigung gespeichert werden dürfen und/oder nur in einer bestimmten Datenbank gespeichert werden dürfen und/oder nur in einer besonders verschlüsselten Weise gespeichert werden dürfen, kann der Notarserver anhand des globalen Identifikators des Teilnehmers erkennen, welche anwendungsprogrammspezifschen Teildatensätze eines Teilnehmers (umfassend z.B. mehrere Pseudonyme, den Entschlüsselungsschlüssel) einem bestimmten Teilnehmer zugeordnet sind.

Gemäß bevorzugten Ausführungsformen ist der zur Erzeugung des Chiffrats verwendete Verschlüsselungsschlüssel sowie der dazu korrespondierende Entschlüsselungsschlüssel sowohl teilnehmerspezifisch als auch anwendungsprogrammspezifisch. Dies kann die Sicherheit erhöhen, denn die Chiffrate, die von verschiedenen Anwendungsprogrammen für einen bestimmten Teilnehmer erzeugt werden, werden nicht sofort transparent, wenn der Entschlüsselungsschlüssel des Teilnehmers bekannt werden sollte. Vielmehr ist von dem Verlust bzw. Bekanntwerden eines Entschlüsselungsschlüssels nur ein Teilnehmer und nur die Daten der zu diesem Entschlüsselungsschlüssel korrespondierendem Anwendungsprogramm betroffen.

Nach Ausführungsformen der Erfindung befindet sich der Notarserver und jeder der zumindest einen Transaktionsserver innerhalb einer besonders geschützten IT-Umgebung, beispielsweise innerhalb eines Rechenzentrums oder eines Rechenzentrumsverbundes oder innerhalb eines verteilten Computersystems, welches durch verschiedene technische und/oder organisatorische Maßnahmen besonders vor einem unberechtigten Zugriff Dritter geschützt ist. Die Endgeräte der Teilnehmer sind typischerweise außerhalb dieser besonders geschützten IT-Umgebung. Beispielsweise sind die Endgeräte über das Internet mit dem Transaktionsserver verbunden. Der Notarserver ist vorzugsweise dazu konfiguriert, Transaktionsanfragen und/oder sonstige Anfragen, die von einem Rechner außerhalb der geschützten IT-Umgebung erhalten werden, zu ignorieren. Der Notarserver kann also mit dem zumindest einen Transaktionsserver Daten im Kontext der Initialisierung oder Durchführung einer bestimmten Transaktion austauschen, nicht jedoch direkt mit einem Endgerät. Ein Datenaustausch zwischen Notarserver und Endgerät wird vorzugsweise nur zum Zwecke der Initialisierung eines Anwendungsprogrammes für einen bestimmten, beim Notarserver registrierten, Teilnehmer zugelassen.

Nach Ausführungsformen der Erfindung umfasst die Initialisierung eine Speicherung von anwendungsprogrammspezifischen Teilnehmerdaten des ersten Teilnehmers und einer Anwendungsprogramm-ID im Anwendungsprogramm und in Kopie in dem Register des Notarservers. Die anwendungsprogrammspezifischen Teilnehmerdaten und die Anwendungsprogramm-ID sind Teil der nach erfolgter Initialisierung später versendeten Transaktionsanfragen. Das Verfahren umfasst eine Weiterleitung der anwendungsprogrammspezifischen Teilnehmerdaten und der Anwendungsprogramm-ID vom Transaktionsserver an den Notarserver. Vorzugsweise umfasst das Verfahren eine Durchführung einer zweiten Zuordnungsmanipulationsprüfung durch den Notarserver bezüglich der Zuordnung der Transaktionsanfrage zu einem Anwendungsprogramm, wobei die Zuordnung als manipuliert gilt, wenn im Register keine mit dem ersten Pseudonym verknüpft gespeicherte Anwendungsprogramm-ID des Anwendungsprogramm gespeichert ist und/oder wenn die als Bestandteil der Transaktionsanfrage erhaltenen anwendungsprogrammspezifischen Teilnehmerdaten nicht mit den Teilnehmerdaten übereinstimmen, die in dem Register verknüpft mit dem ersten Pseudonym des ersten Teilnehmers gespeichert sind. Der Notarserver sendet die Transaktionsstammdaten nicht an den Transaktionsserver, wenn die zweite Zuordnungsmanipulationsprüfung eine Manipulation der Zuordnung feststellt.

Beispielsweise können die anwendungsprogrammspezifischen Teilnehmerdaten folgende Daten umfassen: anwendungsspezifische Schlüssel zur Absicherung der Kommunikation zwischen Endgerät mit dem Anwendungsprogramm und dem Notarserver ("Kanalschlüssel"), Konfigurationsdaten des Anwendungsprogramms, eine im Zuge der Initialisierung des Anwendungsprogramms für den Teilnehmer erfasste Hardware-ID Endgeräts (GUID), auf dem das Anwendungsprogramm instanziiert ist, eine Anwendungsprogramm-ID, biometrische Daten des Teilnehmers, für den das Anwendungsprogramm initialisiert wurde, sonstige Identifikatoren des Teilnehmers, für den das Anwendungsprogramm initialisiert wurde (z.B. Personalausweisnummer, Reisepassnummer, etc.), Transaktionskontrolldaten und Kombinationen von zwei oder mehr der vorgenannten Daten. Beispielsweise kann der Kanalschüssel zum Aufbau eines sicheren Datenübertragungskanals (z.B. HTTPS) im Zuge der Initialisierung des Anwendungsprogramms zwischen Notarserver und Anwendungsprogramm genutzt werden.

Nach Ausführungsformen der Erfindung umfasst das Verfahren eine im Rahmen der Initialisierung des Anwendungsprogramms für den ersten Teilnehmer durchgeführte Speicherung von anwendungsprogrammspezifischen Transaktionskontrolldaten im Anwendungsprogramm und in Kopie in dem Register des Notarservers. Die anwendungsspezifischen Transaktionskontrolldaten spezifizieren Rechte und/oder Rollen des ersten Teilnehmers bezüglich der von dem Anwendungsprogramm bereitgestellten Transaktionsparameter. Beispielsweise kann ein Patient in seinen Transaktionskontrolldaten festlegen, dass nur bestimmte Ärzte auf dessen elektronische Patientenakte lesend und/oder schreibend zugreifen können.

Das Verfahren umfasst ferner:
- Identifikation, durch den Notarserver in Antwort auf den Empfang des ersten Pseudonyms des ersten Teilnehmers vom Transaktionsserver, der im Register verknüpft mit dem ersten Pseudonym gespeicherten Transaktionskontrolldaten dieses Anwendungsprogramms;
- Übermittlung der identifizierten anwendungsprogrammspezifischen Transaktionskontrolldaten an den Transaktionsserver;
- Durchführung oder Veranlassung der Transaktion unter Berücksichtigung der anwendungsspezifischen Transaktionskontrolldaten durch den Transaktionsserver.

Beispielsweise können zwar bereits in der Transaktionsanfrage Transaktionskontrolldaten vorhanden sein, z.B. solche, die in dem Anwendungsprogramm gespeichert sind. Auf dem Notarserver können jedoch zusätzliche, applikationsspezifische oder applikationsübergreifende Kontrolldaten gespeichert sein, die an den Transaktionsserver übermittelt werden.

Nach Ausführungsformen umfasst das Verfahren eine Registrierung des ersten und/oder des zweiten Teilnehmers im Zuge einer Registrierung dieses Teilnehmers für das Anwendungsprogramm jeweils für eine oder mehrere der Transaktionstypen, die von dem Transaktionsserver unterstützt werden und welche zudem durch das Anwendungsprogramm unterstützt werden. Eine Registrierung eines Teilnehmers für ein Anwendungsprogramm kann z.B. die Erzeugung und Hinterlegung von Pseudonymen und Schlüsseln für dieses Anwendungsprogramm auf dem Notarserver und in dem Anwendungsprogramm umfassen. Die Unterstützung eines Transaktionstyps durch ein Anwendungsprogramm beinhaltet, dass das Anwendungsprogramm dazu konfiguriert ist, eine Transaktionsanfrage für diesen Transaktionstyp zu erzeugen.

Nach Ausführungsformen führt der Notarserver eine Prüfung, ob der erste Teilnehmer für den in der Transaktionsanfrage spezifizierten Transaktionstyp registriert ist, durch. Der Notarserver übermittelt die Transaktionsstammdaten des ersten Teilnehmers an den Transaktionsserver nur dann, wenn der erste Teilnehmer für den in der Transaktionsanfrage spezifizierten Transaktionstyp registriert ist.

Nach Ausführungsformen hat der erste Teilnehmer sich für mehrere verschiedene Anwendungsprogramme registriert, die unterschiedliche Anwendungen implementieren. Die von den unterschiedlichen Anwendungen unterstützten Transaktionstypen überlappen, sodass ein Transaktionstyp des Transaktionsservers von den mehreren Anwendungsprogrammen angefragt werden kann. Beispielsweise kann ein Anwendungsprogramm ein Patientenverwaltungsprogramm und das andere Anwendungsprogramm eine App eines Sequenzierdienstleisters sein, welche beide eine bestimmten Transaktionstyp zur Überweisung von Geldbeträgen nutzen.

Der Notarserver erzeugt einen graphischen Code für den ersten Teilnehmer für eines der Anwendungsprogramme, wobei der graphische Code für jeden von diesem einen Anwendungsprogramm unterstützen Transaktionstyp zumindest ein erstes und zweites Pseudonym beinhaltet, sowie optional weitere Daten wie z.B. Verschlüsselungsschlüssel und/oder Transaktionskontrolldaten. Dieser graphische Code wird nun von dem einen Anwendungsprogramm erfasst, z.B. während das Anwendungsprogramm für diesen einen Teilnehmer initialisiert wird. Der Code kann auch von einem anderen Anwendungsprogramm erfasst werden, z.B. um das Pseudonym eines Teilnehmers einer Transaktion zu erfassen.

Nach Ausführungsformen erfolgt die Erfassung des ersten und/oder zweiten Pseudonyms des ersten und/oder zweiten Teilnehmers durch ein Erfassung eines graphischen Codes, in welchem das erste und/oder zweite Pseudonym kodiert enthalten ist.

Der Notarserver erzeugt für jeden der Teilnehmer und für jedes Anwendungsprogramm, für das der Teilnehmer registriert ist, einen graphischen Code, wobei der Code vorzugsweise für jede der von diesem Anwendungsprogramm unterstützen Transaktionstypen ein erstes und/oder zweites Pseudonym und vorzugsweise weitere die Durchführung einer Transaktion dieses Transaktionstyps bestimmende Daten beinhaltet. Der Notarserver stellt jeden der erzeugten graphischen Codes an den Teilnehmer, für den er ausgestellt wurde, bereit, um dem Teilnehmer zu ermöglichen, durch Vorlage des graphischen Codes als erster und/oder zweiter Teilnehmer an einer Transaktion eines der vordefinierten Transaktionstypen teilzunehmen.

Nach Ausführungsformen umfasst das Anwendungsprogramm mindestens ein erstes und ein zweites Modul, wobei das erste und zweite Modul jeweils dazu konfiguriert ist, durch Erfassung eines graphischen Codes, der vom Notarserver für den ersten oder zweiten Teilnehmer erzeugt wurde, sowohl ein Pseudonym des Transaktionsteilnehmers als auch den Typ der auszuführenden Transaktion zu erfassen und eine Transaktionsanfrage für den jeweils erfassten Typ der auszuführenden Transaktion zu erstellen, wobei die Transaktionsanfragen, die von dem ersten und zweiten Modul erzeugt werden, Anfragen für unterschiedliche Typen von Transaktionen sind.

In einem weiteren Aspekt betrifft die Erfindung ein System zur Durchführung oder Veranlassung von Transaktionen zwischen einer Anzahl von Teilnehmern. Das System umfasst:
- einen Notarserver, wobei der Notarserver ein Register beinhaltet, welches einen Registereintrag für jeden der Teilnehmer beinhaltet, wobei der Registereintrag jedes der Teilnehmer jeweils umfasst:
   - ein erstes eindeutiges Pseudonym des Teilnehmers,
   - ein zweites eindeutiges Pseudonym des Teilnehmers;
   - teilnehmerspezifische Transaktionsstammdaten;
   - ein Entschlüsselungsschlüssel;
- zumindest einen Transaktionsserver, wobei der zumindest eine Transaktionsserver eine Schnittstelle zu dem Notarserver und zu zumindest einem Anwendungsprogramm umfasst, wobei das Anwendungsprogramm für einen ersten der Teilnehmer initialisiert wurde, wobei der zumindest eine Transaktionsserver dazu ausgebildet ist, um:
   - Empfang einer Transaktionsanfrage, die das erste Pseudonym des ersten Teilnehmers im Klartext und ein Chiffrat beinhaltet, von dem Anwendungsprogramm
   - Senden des ersten Pseudonyms der Transaktionsanfrage an den Notarserver;
   - In Antwort auf das Senden des ersten Pseudonyms, Empfang des Entschlüsselungsschlüssels, das dem ersten Teilnehmer im Register des Notarservers über das erste Pseudonym zugeordnet ist, von dem Notarserver;
   - Entschlüsselung des Chiffrats mit dem Entschlüsselungsschlüssel, um zumindest zu erhalten: das erste Pseudonym des ersten Teilnehmers; ein zweites Pseudonyms des ersten Teilnehmers; und Transaktionsparameter;

Der zumindest eine Transaktionsserver und/oder der Notarserver ist ausgebildet zur Durchführung einer ersten Zuordnungsmanipulationsprüfung bezüglich der Zuordnung der Transaktionsparameter zum ersten Teilnehmer. Die Zuordnung gilt als manipuliert, wenn das durch die Entschlüsselung des Chiffrats erhaltene zweite Pseudonym des ersten Teilnehmers nicht identisch ist zu dem im Register des Notarservers für den ersten Teilnehmer gespeicherten zweiten Pseudonyms. Der Notarserver ist ausgebildet zur Übermittlung zumindest der Transaktionsstammdaten des ersten Teilnehmers an den mindestens einen Transaktionsserver nur unter der Voraussetzung, wenn die erste Zuordnungsmanipulationsprüfung ergibt, dass die Zuordnung nicht manipuliert wurde. Das Bestehen der ersten Zuordnungsmanipulationsprüfung ist gemäß Ausführungsformen ein notwendiges aber noch kein hinreichendes Kriterium für die Übermittlung der Transaktionsstammdaten an den zumindest einen Transaktionsserver.

Der zumindest eine Transaktionsserver ist dazu ausgebildet, in Antwort auf den Empfang der Transaktionsstammdaten des ersten Teilnehmers, die angefragte Transaktion zwischen dem ersten Teilnehmer und dem zweiten Teilnehmer unter Verwendung der Transaktionsparameter und den Transaktionsstammdaten durchzuführen oder zu veranlassen.

Der Notarserver ist ausgebildet zur Identifikation des im Register gespeicherten Entschlüsselungsschlüssels anhand des ersten Pseudonyms des ersten Teilnehmers durch den Notarserver; und zur Übermittlung des teilnehmerspezifischen Entschlüsselungsschlüssels durch den Notarserver an den Transaktionsserver.

Nach Ausführungsformen sind in dem Register des Notarservers teilnehmerspezifische Transaktionskontrolldaten in den Registereinträgen der jeweiligen Teilnehmer gespeichert. Der Notarserver umfasst eine Schnittstelle, die jedem der Teilnehmer nach erfolgreicher Authentifikation eine Manipulation der in dem Registereintrag dieses Teilnehmers gespeicherten Transaktionskontrolldaten ermöglicht. Der Notarserver ist ausgebildet zum:
- Empfang von Änderungen der Transaktionskontrolldaten eines der Teilnehmer bezüglich eine der Anwendungen und/oder bezüglich eines Transaktionstyps über die Schnittstelle von dem einen Teilnehmer;
- Identifikation aller derjenigen Anwendungen und/oder Transaktionstypen, die für den Teilnehmer registriert sind und für welche der Registereintrag des Teilnehmers Transaktionskontrolldaten enthält, die die gleichen Transaktionsaspekte kontrollieren wie die empfangenen Änderungen;
- Aktualisierung der Transaktionskontrolldaten dieser identifizierten Anwendungsprogramme und/oder Transaktionstypen im Registerdatensatz dieses einen Teilnehmers.

Bei der Schnittstelle kann es sich insbesondere um eine Schnittstelle zu einem Webportal, über welches sich einzelne Teilnehmer gegenüber dem Notarserver authentifizieren können, handeln. Zusätzlich oder alternativ dazu kann die Schnittstelle als Schnittstelle zu einem oder mehreren Anwendungsprogrammen, das bzw. die für einen der Teilnehmer initialisiert wurde(n) und das bzw. die es dem Teilnehmer ermöglicht/ermöglichen, sich gegenüber dem Anwendungsprogramm zu authentifizieren, ausgebildet sein.

Nach Ausführungsformen umfasst das System ferner zumindest ein Anwendungsprogramm, in manchen Ausführungsformen auch mehrere Anwendungsprogramme. Das Anwendungsprogramm wurde für einen ersten der Teilnehmer initialisiert, wobei das initialisierte Anwendungsprogramm beinhaltet:
- das erste Pseudonym des ersten Teilnehmers;
- das zweite Pseudonyms des ersten Teilnehmers;
- einen Verschlüsselungsschlüssel, der zu dem im Register für den ersten Teilnehmer gespeicherten Entschlüsselungsschlüssel korrespondiert.

Das Anwendungsprogramm ist konfiguriert zum:
- Erfassen des Pseudonyms des zweiten Teilnehmers;
- Empfang von Transaktionsparametern,
- Erzeugung eines Chiffrats durch Verschlüsselung zumindest des zweiten Pseudonyms des ersten Teilnehmers, des Pseudonyms des zweiten Teilnehmers und der Transaktionsparameter mit dem Verschlüsselungsschlüssel;
- Erzeugung der Transaktionsanfrage, die das erste Pseudonym des ersten Teilnehmers im Klartext und das Chiffrat beinhaltet.

In einem weiteren Aspekt betrifft die Erfindung ein Anwendungsprogramm zur Durchführung von Transaktionen zwischen einer Anzahl von Teilnehmern, wobei das Anwendungsprogramm über zumindest einen Transaktionsserver operativ gekoppelt ist an einen Notarserver, der jedem der Teilnehmer in einem Register mindestens zuordnet:
- ein erstes eindeutiges Pseudonym des Teilnehmers,
- ein zweites eindeutiges Pseudonym des Teilnehmers;
- teilnehmerspezifische Transaktionsstammdaten;
- ein Entschlüsselungsschlüssel.

Das Anwendungsprogramm ist initialisiert für den ersten Teilnehmer. Das initialisierte Anwendungsprogramm beinhaltet:
- das erste Pseudonym des ersten Teilnehmers;
- das zweite Pseudonyms des ersten Teilnehmers;
- einen Verschlüsselungsschlüssel, der zu dem im Register für den ersten Teilnehmer gespeicherten Entschlüsselungsschlüssel korrespondiert.

Das Anwendungsprogramm ist konfiguriert zur:
- Erfassung eines Pseudonyms eines zweiten der Teilnehmer;
- Erfassung von Transaktionsparametern,
- Erzeugung eines Chiffrats durch Verschlüsselung zumindest des zweiten Pseudonyms des ersten Teilnehmers, des Pseudonyms des zweiten Teilnehmers und der Transaktionsparameter mit dem Verschlüsselungsschlüssel durch das Anwendungsprogramm
- Übermittlung einer Transaktionsanfrage, die das erste Pseudonym des ersten Teilnehmers im Klartext und das Chiffrat beinhaltet, von dem Anwendungsprogramm an den Transaktionsserver.

Nach einer Ausführungsform der Erfindung dient das Verfahren zur Durchführung von Transaktionen zwischen einer Anzahl von bei einem Notarserver registrierten Teilnehmern. Jedem Teilnehmern der Transaktion ist jeweils ein vorzugsweise teilnehmerspezifischer und anwendungsprogrammspezifischer Entschlüsselungsschüssel, Transaktionsstammdaten, die vorzugsweise ebenfalls anwendungsspezifisch und teilnehmerspezifisch sind, sowie mindestens zwei eindeutige Pseudonym (die vorzugsweise ebenfalls anwendungsspezifisch und teilnehmerspezifisch sind), zugeordnet. Die Zuordnung der Pseudonyme und Identifikatoren zu den jeweiligen Teilnehmern ist auf dem Notarserver hinterlegt. Beispielsweise kann ein Register des Notarservers (z.B. ein Verzeichnis oder eine relationale Datenbank) für jeden registrierten Teilnehmer einen Registereintrag beinhalten, der eine globale, applikationsübergreifende Teilnehmer-ID beinhaltet sowie für jedes Anwendungsprogramm, für das sich der Teilnehmer registriert hat bzw. das für diesen Teilnehmer initialisiert wurde, einen eigenen Datensatz (Teil-Registereintrag) beinhaltet. Jeder anwendungsprogrammspezifische Teilregistereintrag eines Teilnehmers kann z.B. die anwendungsspezifischen Transaktionsstammdaten, Pseudonyme, Entschlüsselungsschlüssel sowie optional weitere Daten wie z.B. Transaktionskontrolldaten und/oder anwendungsspezifische Konfigurationsdaten dieses Teilnehmers enthalten.

Transaktionsdaten, hier auch als "transaktionslimitierende Daten" oder "Transaktionsstammdaten" bezeichnet, sind hierbei solche Daten, ohne deren Kenntnis eine Durchführung einer Transaktion nicht möglich ist, und welche typischerweise über mehrere Transaktionen hinweg konstant sind. Im Falle einer Überweisung wären die Transaktionsstammdaten beispielsweise die Bankverbindungen der Teilnehmer, im Falle der Übermittlung einer Nachricht beispielsweise Post- oder e-Mail-Adressen. Transaktionsstammdaten bleiben für eine Vielzahl von Transaktionen gleich, können also als Stammdaten bezeichnet werden. Die Transaktionsstammdaten eines Teilnehmers können für verschiedene Applikationen verschieden sein.

Ein Notarserver ist wie auch ein Transaktionsserver ein Servercomputer. Dieser muss nicht zwingend eine physische Entität darstellen, sondern kann auch vollständig virtuell ausgeführt sein, beispielsweise als ausgelagerte Recheneinheit in einem Computernetzwerk. Beispielsweise können der Notarserver und/oder der zumindest eine Transaktionsserver als Cloudcomputersystem ausgebildet sein. Dabei ist ein Notarserver vorzugsweise so ausgeführt, dass die gespeicherten Daten des Notarservers vor einem Zugriff durch Dritte geschützt sind und nur auf Anfrage eines Transaktionsservers dem Transaktionsserver bereitgestellt werden. Vorzugsweise ist auch jeder der zumindest einen Transaktionsserver dazu ausgebildet, die von ihm verwalteten Daten, insbesondere Transaktionsanfragen mit Transaktionsparametern (Bewegungsdaten), sicher zu verwahren und vor dem unautorisierten Zugriff Dritter zu schützten.

Gemäß einer Ausführungsform werden die Pseudonyme und sowie ein teilnehmerspezifischer Verschlüsselungsschlüssel eines ersten Teilnehmers durch das Anwendungsprogramm erfasst, z.B. im Zuge der Initialisierung des Anwendungsprogramms für den ersten Teilnehmer. Die Erfassung der besagten Daten kann beispielsweise durch manuelle Eingabe oder durch das Auslesen eines Datenspeichers oder durch Scannen eines optischen Codes, z.B. eines QR Codes, geschehen.

Beispielsweise kann es sich bei dem Anwendungsprogramm um ein Patientenverwaltungsprogramm handeln, das für einen bestimmten Arzt dadurch initialisiert wird, dass der Arzt ein Dokument, das diesen als Arzt ausweist, vor die Kamera seines Endgeräts hält. Das Programm kann z.B. dazu dienen, sensible medizinische Daten eines Patienten in dessen elektronische Patientenakte auf einem Transaktionsserver zu speichern. Bei den sensiblen medizinischen Daten kann es sich z.B. um einen den Patienten identifizierenden graphischen Code (z.B. Barcode, Matrixcode, QR Code, etc.), Blutdruckdaten, verschriebene Medikamente, erstellte Diagnosen etc. handeln.

Es kann sich aber auch um andere Formen der Transaktion handeln. Am Beispiel einer Finanztransaktion wäre der erste Teilnehmer der Überweisende bzw. Sender. Die Erfassung des Pseudonyms des Zahlungsempfängers, hier als "zweiter Teilnehmer bezeichnet", erfolgt vorzugsweise auf sensorischem Weg, also beispielsweise durch Auslesen einer Magnetkarte oder die visuelle Erfassung eines Barcodes oder eines QR-Codes, das das Pseudonym des zweiten Teilnehmers kodiert hat. Bei dem Pseudonym des zweiten Teilnehmers kann es sich dabei vorzugsweise um ein Pseudonym handeln, das in funktionaler oder im Hinblick auf seine Erzeugung dem "zweiten" Pseudonym des zweiten Teilnehmers entspricht, wobei auf dem Notarserver auch für den zweiten Teilnehmer zumindest ein erstes und ein zweites Pseudonym hinterlegt sind, die analog zu den ersten und zweiten Pseudonymen des ersten Teilnehmers gebildet werden. Im Prinzip kann aber auch jegliches anderes Pseudonym verwendet werden, das im Register des Notarservers für den zweiten Teilnehmer hinterlegt ist.

Sobald das Anwendungsprogramm die oben genannten Pseudonyme aller Teilnehmer, die an der Transaktion beteiligt sind, erfasst hat, werden dem Anwendungsprogramm die Transaktionsparameter mitgeteilt. Wiederum am Beispiel einer Finanztransaktion wären die Transaktionsparameter der zu überweisende Betrag oder ein Verwendungszweck. Transaktionsparameter können also für jede Transaktion unterschiedlich sein und als Bewegungsdaten bezeichnet werden. In anderen Anwendungsszenarien bzw. Anwendungsprogrammen können die Transaktionsparameter aus medizinischen Daten bestehen oder aus einem Identifikator eines Test-kits, z.B. zur Probenentnahme (Blut, Urin, Speichel, etc.), bei einem Patienten.

Nachdem die Pseudonyme der Teilnehmer sowie die Transaktionsparameter durch das Anwendungsprogramm erfasst wurden, wird der gesamte Transaktionsdatensatz, welcher zumindest das zweite Pseudonym des ersten Teilnehmers, das Pseudonym des zweiten Teilnehmers und Transaktionsparameter beinhaltet, mit dem Verschlüsselungsschlüssel des ersten Teilnehmers verschlüsselt und das so erhaltene Chiffrat zusammen mit dem ersten Pseudonym des ersten Teilnehmers in eine Transaktionsanfrage integriert. Die Transaktionsanfrage kann weitere Parameter beinhalten. Das Anwendungsprogramm sendet die Transaktionsanfrage an zumindest einen Transaktionsserver. Beispielsweise kann der Notarserver mit mehreren Transaktionsservern verbunden sein, die verschiedene Transaktionen durchführen und veranlassen. Die Durchführung und Veranlassung der Transaktion kann anwendungsspezifisch erfolgen, z.B. dadurch, dass anwendungsspezifische Transaktionskontrollparameter die Auswahl des zu verwendenden Transaktionsservers und/oder die Art der Ausführung der Transaktion steuern. Das Anwendungsprogramm kann dazu vorkonfiguriert sein, die Transaktionsanfrage an einen geeigneten Transaktionsserver zu senden, der die benötigte Transaktion auch durchführen bzw. veranlassen kann. Die Weiterleitung kann hierbei beispielsweise über das Internet oder einen beliebigen anderen Kommunikationskanal erfolgen. Sobald der Transaktionsserver die Transaktionsanfrage erhält, extrahiert er aus dieser das erste Pseudonym des ersten Teilnehmers, das in Klartextform enthalten ist, und sendet dieses an den Notarserver.

Der Notarserver durchsucht das Register nach einem Teilnehmerdatensatz, der ein erstes Pseudonym enthält, das mit dem vom Transaktionsserver empfangenen ersten Pseudonym identisch ist. Falls der Teilnehmerdatensatz ganz oder teilweise verschlüsselt vorliegt, entschlüsselt der Notarserver den Teilnehmerdatensatz, dessen zugeordnetes Pseudonym mit dem empfangenen erste Pseudonym identisch ist ("matcht"), zumindest soweit, dass das mit diesem ersten Pseudonym verknüpft gespeicherte zweite Pseudonym der zu dem Verschlüsselungsschlüssel korrespondierende Entschlüsselungsschlüssel und die Transaktionsstammdaten in entschlüsselter Form vorliegen. Der Entschlüsselungsschlüssel und optional auch das zweite Pseudonym werden an den Transaktionsserver zurückgesendet. Falls eine nachfolgende erste Zuordnungsmanipulationsprüfung durch den Transaktionsserver durchgeführt wird, wird zudem auch das im Register ermittelte zweite Pseudonym des ersten Teilnehmers an den Transaktionsserver gesendet.

Der Transaktionsserver entschlüsselt das Chiffrat mit dem vom Notarserver erhaltenen Entschlüsselungsschlüssel.

Falls die nachfolgende erste Zuordnungsmanipulationsprüfung durch den Notarserver erfolgt, sendet der Transaktionsserver das durch die Entschlüsselung erhaltene zweite Pseudonym des ersten Teilnehmers an den Notarserver.

Im nächsten Schritt wird vom Notarserver oder vom Transaktionsserver eine erste Zuordnungsmanipulationsprüfung durchgeführt. Hierbei wird das zweite Pseudonym des ersten Teilnehmers, das der Notarserver im Register anhand des ersten Pseudonyms dieses Teilnehmers identifiziert hat, mit dem durch die Entschlüsselung des Chiffrats erhaltenen zweiten Pseudonyms verglichen. Bei Identität der verglichenen zweiten Pseudonyme gilt die erste Zuordnungsprüfung als bestanden, die Zuordnung der Transaktionsparameter zu dem ersten Teilnehmer also als nicht manipuliert.

Optional können vom Notarserver und/oder Transaktionsserver weitere Prüfungen durchgeführt werden. Falls die Prüfungen auf dem Transaktionsserver durchgeführt werden, werden die Ergebnisse dem Notarserver übermittelt.

Da auf dem Notarserver eine Zuordnung der Pseudonyme und der Transaktionsstammdaten zu den entsprechenden Teilnehmern hinterlegt ist, ist der Notarserver in der Lage, die für das Anwendungsprogramm und die an der Transaktion beteiligten ersten und zweiten Teilnehmer anhand ihrer Pseudonyme zu identifizieren. Der Notarserver ist dazu konfiguriert, dem Transaktionsserver die Transaktionsstammdaten der Teilnehmer zu übermitteln, sofern alle durchzuführenden Zuordnungsmanipulationsprüfungen zum Ergebnis haben, dass die Transaktionsanfrage bzw. die Zuordnung von Transaktionsparametern zum ersten Teilnehmer nicht manipuliert ist. Sobald der Transaktionsserver die Transaktionsstammdaten der Teilnehmer empfangenen hat, kann er entweder die Transaktion durchführen oder anstoßen.

Die beschriebene Ausführungsform ist besonders vorteilhaft, da die Transaktionsanfrage sowohl das Pseudonym des zweiten Teilnehmers als auch die Transaktionsparameter in verschlüsselter Form beinhaltet und im Klartext lediglich das erste Pseudonym des ersten Teilnehmers enthält. Es ist also nicht möglich, die Transaktionsdaten, wie beispielsweise Bankverbindungen oder Klarnamen von Patienten, die in der Transaktionsanfrage enthalten sind, zu manipulieren. Auch ein Austauschen des ersten Pseudonyms, um das Chiffrat einem anderen Teilnehmer auf manipulative Weise zuzuweisen, ist ausgeschlossen, da diese Manipulation im Zuge der ersten Zuordnungsmanipulationsprüfung entdeckt werden würde.

Nach einer Ausführungsform der Erfindung sind den Pseudonymen der Teilnehmer jeweils eine Reihe von Daten zugeordnet. Damit eine Transaktion durchgeführt werden kann, müssen zunächst die Transaktionsstammdaten eines jeden Teilnehmers im Register des Notarservers hinterlegt sein. Diese werden wie zuvor beschrieben dem Transaktionsserver durch den Notarserver auf Anfrage bereitgestellt. Neben diesen Transaktionsstammdaten und/oder als Bestandteil dieser Transaktionsstammdaten können im Register des Notarservers Informationen gespeichert sein, die einen Teilnehmer eindeutig identifizieren. Dies können zum Beispiel Name, Adresse, Geburtsort und Geburtsdatum, eine Ausweisnummer oder eine Kombination dieser Daten sein. Weiter ist gemäß Ausführungsformen der Erfindung zu jedem Teilnehmer eine eindeutige Kanal-Information auf dem Notarserver hinterlegt, welche geeignet ist, einen Kommunikationskanal zwischen Notarserver und Anwendungsprogramm zu spezifizieren. Dies kann beispielsweise eine E-Mail-Adresse des Teilnehmers oder auch eine Postadresse sein. Es kann auch eine Applikationsschnittstelle zu dem Anwendungsprogramm sein, um Initialisierungsdaten mit dem Anwendungsprogramm auszutauschen.

Die Aufnahme der vorgenannten Daten kann beispielsweise bei der Registrierung eines Teilnehmers am Notarserver dadurch erfolgen, dass jeder Teilnehmer ein Formular mit persönlichen Daten ausfüllt. Die eingetragenen Daten werden anschließend in den Notarserver eingegeben oder durch diesen erfasst. Die Daten der Teilnehmer sind hierbei nur dem Notarserver bekannt und vor dem Zugriff durch andere geschützt. Im Zuge der Registrierung kann weiter beispielsweise durch eine Kontrolle eines Ausweisdokuments die Identität des Teilnehmers verifiziert werden.

Wie zuvor erwähnt, sind jedem Teilnehmer zumindest zwei eindeutige Pseudonyme zugeordnet. Das erste Pseudonym des Teilnehmers kann z.B. eine Zufallszahl sein, oder ein aus einer Zufallszahl abgeleiteter Wert. Das zweite Pseudonym kann ebenfalls eine Zufallszahl sein, die unabhängig vom ersten Pseudonym erzeugt wurde, oder es kann sich bei dem zweiten Pseudonym um ein von dem ersten Pseudonym abgeleitetes Pseudonym handeln. Beispielsweise kann der Notarserver dazu ausgebildet sein, das zweite anwendungsspezifische Pseudonym durch kryptographische Verschlüsselung einer Kombination des ersten anwendungsspezifischen Pseudonyms eines Teilnehmers mit einer globalen, anwendungsprogrammübergreifenden Teilnehmer-ID ("notary.server.ID") zu erzeugen. In manchen Ausführungsformen erfolgt die Hinterlegung des zweiten Pseudonyms eines Teilnehmers im Register nicht statisch, sondern dynamisch, und der Notarserver leitet dynamisch mittels kryptographischer Operationen das zweite Pseudonym aus anderen Teilnehmerdaten ab, z.B. aus dem ersten Pseudonym und der globalen anwendungsprogrammübergreifenden Teilnehmer-ID.

Nach einer Ausführungsform der Erfindung wird das zweite Pseudonym durch Verschlüsselung von zumindest eines Teils der für den Teilnehmer im Register hinterlegten Daten eines Teilnehmers durch den Notarserver berechnet. Beispielsweise kann das zweite Pseudonym durch Verschlüsselung des ersten Pseudonyms, der globalen anwendungsprogrammübergreifenden Teilnehmer-ID und optional auch anwendungsprogrammspezifischer Transaktionskontrolldaten spezifisch für den ersten Teilnehmer und eine bestimmte Anwendung berechnet werden . Der zur Verschlüsselung verwendete Schlüssel und auch ein für die Entschlüsselung des als Chiffrat erzeugten zweiten Pseudonyms wird ausschließlich auf dem Notarserver hinterlegt, sodass das zweite Pseudonym nur durch den Notarserver gebildet und/oder entschlüsselt werden kann. Hierdurch muss nicht zwingend der vollständige Datensatz eines jeden Teilnehmers auf dem Notarserver hinterlegt werden, sondem lediglich eine Zuordnung von Pseudonymen und Schlüsseln. Dabei kann zur Verschlüsselung ein beliebiges Verfahren verwendet werden.

Wie zuvor beschrieben, besteht die Gefahr, dass Transaktionsparameter, welche in einer Transaktionsanfrage enthalten sind, manipuliert werden. Dies kann allerdings gemäß einer Ausführungsform der Erfindung verhindert werden, da die Transaktionsparameter in verschlüsselter Form, also als Bestandteil eines Chiffrats, zum Transaktionsserver übermittelt werden. Die Entschlüsselung des Transaktionsdatensatzes erfolgt dann durch den Transaktionsserver unter Verwendung eines anwendungsprogrammspezifischen Entschlüsselungsschlüssels, der vom Notarserver auf Basis des ersten Pseudonyms in der Transaktionsanfrage bereitgestellt wurde. Durch eine geeignete Wahl des Verschlüsselungsverfahrens kann die Sicherheit des zuvor beschriebenen Verfahrens an die jeweiligen Sicherheitsanforderungen angepasst werden.

Die Art der Verschlüsselung sowie der verwendete Schlüssel können gemäß einer Ausführungsform der Erfindung für jede Art von Transaktion oder auch für jede Transaktion selbst individuell festgelegt werden. Es können hierbei symmetrische, asymmetrische oder auch hybride Verschlüsselungsverfahren verwendet werden. Weiter ist es möglich, einen Transaktionsdatensatz nur teilweise zu verschlüsseln. So können zum Beispiel kritische Transaktionsparameter, wie beispielsweise ein Überweisungsbetrag oder eine geheime Information geschützt werden, während unkritische Transaktionsparameter, wie beispielsweise ein Begleittext, nicht verschlüsselt werden müssen. Das erste Pseudonym wird innerhalb eines ggf. verschlüsselten Kommunikationskanals immer im Klartext übermittelt und außerhalb des Chiffrats übertragen.

In bevorzugten Ausführungsformen wird die Transaktionsanfrage vom Anwendungsprogramm an den Transaktionsserver über einen geschützten, vorzugsweise verschlüsselten Kommunikationskanal übermittelt, z.B. über eine HTTPS Verbindung. Es ist in diesem Fall möglich, dass die Transaktionsanfrage in ihrer Gesamtheit einschließlich des ersten Pseudonyms HTTPS verschlüsselt ist. Unter dem Ausdruck "Klartext" ist hier also nicht zu verstehen, dass die Transaktionsanfrage notwendigerweise in ihrer Gesamtheit unverschlüsselt übermittelt wird, sondern nur, dass die Transaktionsanfrage zunächst als Kombination eines Chiffrats und des ersten Pseudonyms in Klartextform gebildet wird, wobei es möglich ist, dass die Transaktionsanfrage in ihrer Gesamtheit zusätzlich verschlüsselt wird, z.B. per HTTPS.

Nach einer Ausführungsform der Erfindung wird eine Transaktion nur dann durchgeführt, wenn zumindest ein Teil der Teilnehmer der Transaktion durch den Transaktionsserver oder den Notarserver authentifiziert wurde. Hierbei erfolgt die Authentifizierung der Teilnehmer vorzugsweise erst nach Eingang der Transaktionsanfrage bei einem Transaktionsserver. Dadurch, dass die Teilnehmer der Transaktion durch Transaktions- oder Notarserver authentifiziert wurden, und dadurch, dass eine erste Zuordnungsmanipulationsprüfung und optional weitere Prüfungen durchgeführt werden, wird vor der Durchführung der Transaktion sichergestellt, dass die in der Transaktionsanfrage enthaltenen Pseudonyme der Teilnehmer und die Transaktionsparameter nicht ausgetauscht oder anderweitig manipuliert wurden. Ein Austauschen der Pseudonyme würde nach dieser Ausführungsform also spätestens bei der Zuordnungsmanipulationsprüfung erkannt.

Nach einer Ausführungsform der Erfindung erfolgt die Authentifizierung der Teilnehmer über Anwendungsprogramme, welche jeweils auf die Teilnehmer registriert sind unter zusätzlicher Verwendung eines Gültigkeitszeitfensters für eine Transaktionsanfrage. Hierbei ist vorzugsweise jedem Teilnehmer ein eigenes Anwendungsprogramm zugeordnet und die Zuordnung der Anwendungsprogramme zu den Teilnehmern auf dem Notarserver hinterlegt. Soll nun eine Transaktionsanfrage an einen Transaktionsserver übermittelt werden, wird zunächst für diese Transaktionsanfrage ein Gültigkeitszeitfenster festgelegt. Die Transaktionsanfrage wird dann durch einen Transaktionsserver nur dann verarbeitet, wenn der Verarbeitungszeitpunkt in das Gültigkeitszeitfenster der Transaktionsanfrage fällt. Hierzu wird durch das Anwendungsprogramm ein Zeitstempel in die Transaktionsanfrage eingefügt. Dieser dokumentiert den Zeitpunkt, an dem die Transaktionsanfrage erstellt wurde.

Geht nun eine Transaktionsanfrage bei einem Transaktionsserver ein, überprüft dieser, ob die aktuelle Zeit innerhalb des Gültigkeitszeitfensters unter Berücksichtigung des Zeitstempels der Transaktionsanfrage liegt. Ist dies der Fall, wird über das oder die Anwendungsprogramme der Teilnehmer eine Bestätigung der Transaktionsanfrage angefordert. Hierbei kann die Anforderung entweder durch den Transaktionsserver oder auch den Notarserver versendet werden. Eine Bestätigungsanforderung kann beispielsweise darin bestehen, dass, ausgelöst durch Transaktions- oder Notarserver, auf dem Anwendungsprogramm der Teilnehmer ein Popup-Fenster geöffnet wird, welches den Teilnehmer darüber informiert, dass eine Transaktionsanfrage eingegangen ist. Es besteht dann die Möglichkeit, diese Transaktionsanfrage zu bestätigen oder abzulehnen. Erst wenn alle angeforderte Bestätigungen eingegangen sind, wird eine Transaktion durchgeführt.

Für den Fall, dass der Zeitpunkt der Verarbeitung einer Transaktionsanfrage außerhalb des Gültigkeitszeitfensters liegt, wird die Transaktionsanfrage durch den Transaktionsserver verworfen. Hierdurch wird ein Zurückhalten der Transaktionsanfrage zur späteren Verarbeitung verhindert. Durch die Zuordnungsmanipulationsprüfung, vorzugsweise in Kombination mit einer Authentifizierung der Teilnehmer, wird weiter vermieden, dass eine Transaktion an einen falschen Empfänger erfolgt. Es kann beispielsweise der Sender seinerseits mit der Bestätigung der Transaktionsanfrage warten, bis bei den Empfängern die Anforderung einer Bestätigung eingegangen ist. Sobald eine Bestätigungsanforderung bei den Empfängern eingegangen ist, ist sichergestellt, dass die Pseudonyme der Empfänger nicht manipuliert wurden.

Nach einer Ausführungsform der Erfindung ist das Anwendungsprogramm, welches die Pseudonyme erfasst und an welches die Transaktionsparameter übermittelt werden, auf einen der Teilnehmer registriert. Hierdurch ist dessen Pseudonym dem Anwendungsprogramm bekannt und muss nicht für jeden Transaktionsauftrag erneut erfasst werden. Wird ein Transaktionsdatensatz von diesem Anwendungsprogramm verschickt, wird automatisch das Pseudonym des Teilnehmers, auf den das Anwendungsprogramm registriert wurde, in die Transaktionsanfrage eingefügt. Weiter ist durch die Registrierung des Anwendungsprogramms auf den Teilnehmer eine eindeutige Zuordnung des Anwendungsprogramms zu diesem Teilnehmer durch den Notarserver oder auch den Transaktionsserver möglich. Hierdurch können Transaktionsanfragen, welche von dem registrierten Anwendungsprogramm an den Transaktionsserver gesendet werden, einem ersten Teilnehmer eindeutig zugeordnet werden. Eine unbemerkte Manipulation des Pseudonyms des ersten Teilnehmers ist damit ausgeschlossen. Weiter kann gemäß der nachfolgend beschriebenen Ausführungsform die Registrierung eines Anwendungsprogramms auf einen Teilnehmer auch eine Zuordnung des Anwendungsprogramms zu einem Endgerät enthalten. Hierdurch kann verhindert werden, dass das Anwendungsprogramm vom Endgerät des Teilnehmers extrahiert und auf einem anderen Endgerät gegen den Willen des Teilnehmers genutzt wird.

Nach einer Ausführungsform der Erfindung beinhaltet die Registrierung eines Anwendungsprogramms auf einen Teilnehmer folgende Schritte:
Zunächst wird durch das Anwendungsprogramm das erste und zweite Pseudonym des Teilnehmers, auf den das Anwendungsprogramm registriert werden soll, und vorzugsweise auch der anwendungsprogrammspezifische Verschlüsselungsschlüssel und/oder weitere Daten wie z.B. Transaktionskontrolldaten, sensorisch erfasst. Dies kann wahlweise während der Installation des Anwendungsprogramms oder danach geschehen. Anschließend ermittelt das Anwendungsprogramm einen Parameter, welcher das Endgerät, auf dem das Anwendungsprogramm installiert ist, eindeutig identifiziert. Dies kann beispielsweise der Globally Unique Identifier (GUID) des Endgeräts sein, welcher meist in der Hardware des Endgeräts hinterlegt ist. Anschließend übermittelt das Anwendungsprogramm den das Endgerät eindeutig identifizierenden Parameter an den Notarserver. Bevor diese Daten auf dem Notarserver gespeichert werden, muss jedoch zunächst verifiziert werden, dass es sich bei dem Teilnehmer, der eine Registrierung einer Anwendungssoftware auf ein Pseudonym durchführen will, auch tatsächlich um den Teilnehmer handelt, welcher auf dem Notarserver zu diesen Pseudonymen zugeordnet ist. Hierzu wird neben den bereits genannten Daten eine dem Teilnehmer durch den Notarserver eindeutig zuordenbare Teilnehmer-Information an den Notarserver übermittelt. Dies kann beispielsweise eine Sicherheitsfrage, eine persönliche Information, welche im Datensatz des Teilnehmers enthalten ist, oder auch eine beliebige Nummer sein, die bei der Anmeldung des Teilnehmers am Notarserver erzeugt wurde und nur dem Teilnehmer und dem Notarserver bekannt ist. Bei Eingang einer Registrierungsanfrage am Notarserver überprüft dieser nun, ob die übermittelte Teilnehmer-Information im Datensatz des Teilnehmers, welchem das Pseudonym zugeordnet ist, enthalten ist. Ist dies der Fall, wird dem anwendungsprogrammspezifischen Teildatensatz des Teilnehmers in dem Register des Notarservers zusätzlich eine Information über das Endgerät, auf dem ein Anwendungsprogramm registriert wurde, hinzugefügt.

Nach einer Ausführungsform der Erfindung ist der Transaktionsserver Server, der dazu konfiguriert ist, Transaktionsanfragen, die Transaktionsparameter, ein erstes Pseudonym in Klartextform und ein Chiffrat mit Transaktionsparametern enthalten, von einem oder mehreren Instanzen mindestens eines Anwendungsprogrammes zu empfangen, aus der Anfrage das erste Pseudonym des ersten Teilnehmers zu extrahieren und an den Notarserver zu senden. Der Transaktionsserver ist zudem dazu konfiguriert, nur in dem Falle, dass eine Zuordnungsmanipulationsprüfung bezüglich des ersten Teilnehmers und der Transaktionsparameter erfolgreich durchgeführt wurde, die angefragte Transaktion durchzuführen oder zu veranlassen.

Der Notarserver enthält Datensätze der Teilnehmer des Verfahrens, wobei die Datensätze folgende Informationen beinhalten: Das erste und zweite Pseudonym eines Teilnehmers, sowie Daten, die den Teilnehmer eindeutig identifizieren, z.B. Kontodaten oder Adressdaten, und/oder Transaktionsstammdaten des Teilnehmers.

Der Notarserver stellt auf Anfrage des Transaktionsservers die transaktionsrelevanten Daten, die zu einem im Transaktionsdatensatz enthaltenen Pseudonym gehören, dem Transaktionsserver bereit.

Nach einer Ausführungsform der Erfindung beinhaltet das zuvor beschriebene System weiter ein Endgerät eines Teilnehmers, wobei auf dem Endgerät des Teilnehmers ein Anwendungsprogramm, welches die Durchführung des zuvor beschriebenen Verfahrens ermöglicht, installiert ist.

Nach einer Ausführungsform der Erfindung ist der Notarserver des zuvor beschriebenen System angepasst, das Endgerät, auf dem das Anwendungsprogramm installiert ist, einem Teilnehmer eindeutig zuzuordnen.

Nach einer Ausführungsform der Erfindung wird ein Computerprogrammprodukt vorgestellt, welches angepasst ist, um die zuvor beschrieben Verfahrensschritte durchzuführen.

Unter einem "Teilnehmer", auch als "Nutzer" bezeichnet, wird hier jegliche Entität verstanden, die an einer Transaktion beteiligt sein kann, z.B. als Sender von Transaktionsparametern oder Empfänger von Transaktionsparametern. Beispielsweise kann ein Teilnehmer eine natürliche oder juristische Person sein oder ein Datenspeicher oder ein elektronisches Zugriffsverwaltungssystem oder eine Sache, die z.B. mit einem identifizierenden Etikett mit optisch erfassbarem Code versehen ist, oder dergleichen.

Unter einem "Pseudonym" wird hier ein Identifikator eines Teilnehmers verstanden, welches anstelle eines "echten" bzw. offiziellen Identifikators (z.B. bürgerlicher Name, IP-Adresse und Port bei einem digitalen Dienst) verwendet wird und der Verschleierung der Identität des Teilnehmers dient.

Unter einem "Endgerät" wird hier ein Datenverarbeitungsgerät verstanden, z.B. ein monolithisches oder verteiltes Computersystem, ein Gerät oder Fahrzeug mit einer Datenverarbeitungseinheit, oder ein portables Computersystem, insbesondere ein Notebook, ein Tablet-Computer oder ein Smartphone.

Unter einem "Anwendungsprogramm", auch "Applikation" oder "App" genannt, wird hier ein Softwareprogramm oder ein Softwaremodul verstanden, welches dazu konfiguriert ist, eine nützliche oder gewünschte nicht systemtechnische Funktionalität zu bearbeiten oder zu unterstützen. Es dient der "Lösung von Benutzerproblemen". Beispiele für Anwendungsgebiete sind: Patientenverwaltungsprogramme, Smartphone-Apps von Gesundheitsdiensten und Datenanalysediensten, E-Mail-Programme, Webbrowser, Textverarbeitung, Programme zur Organisation von Personengruppen oder Gütern, etc.

Unter einem "Transaktionsserver" wird hier ein Computersystem verstanden, das zur Durchführung oder Veranlassung von Transaktionen dient.

Unter einem "Notarserver" wird hier ein Computersystem verstanden, das zur sicheren Speicherung und Verwaltung von Teilnehmeraccounts dient.

Unter einer "Transaktion" wird hier eine Übertragung von Objekten oder deren digitalen Repräsentanten oder Daten von einem Teilnehmer an ein oder mehrere andere Teilnehmer verstanden.

Unter "Transaktionsstammdaten" werden hier Daten verstanden, die einem Teilnehmer im Wesentlichen statisch zugewiesen sind und ohne deren Kenntnis eine Transaktion zu und von diesem Teilnehmer nicht durchgeführt werden kann. Beispielsweise also Adressdaten oder Kontoverbindungsdaten einer Person.

Unter "Transaktionsparametern" werden hier Daten verstanden, die im Zuge der Transaktion von einem zum anderen Teilnehmer übertragen werden oder welche Informationen bezüglich der bei der Transaktion übertragenen Objekte oder deren digitale Repräsentanten beinhalten. Sie können sich von Transaktion zu Transaktion unterscheiden. Beispiel für Transaktionsparameter wäre ein zu überweisender Geldbetrag oder ein aktuell gemessener Blutdruckwert, der gespeichert werden soll.

Unter "Transaktionskontrolldaten" werden hier Daten verstanden, die die Art und Weise, wie, wo, wann und/oder von wem eine Transaktion durchgeführt wird, spezifizieren, und/oder die vom Notarserver oder Transaktionsserver ausgewertet werden, um die Art und Weise, wie, wo, wann und von wem eine Transaktion durchgeführt wird, in Abhängigkeit vom Ergebnis dieser Auswertung zu spezifizieren. Beispielsweise können Transaktionskontrolldaten Wenn-Dann Bedingungen beinhalten, die festlegen, wer Transaktionsparameter eines bestimmten Typs verarbeiten soll und/oder ob für diese Transaktionsparameter eine explizite Bestätigung des oder der Teilnehmer erforderlich ist.

Nach Ausführungsformen der Erfindung unterstützt der Transaktionsserver eine vordefinierte Menge an Transaktionstypen. Die Erfassung des ersten und/oder zweiten Pseudonyms des ersten und/oder zweiten Teilnehmers erfolgt durch Erfassung eines graphischen Codes (z.B. QR Code). Das erste und/oder zweite Pseudonym identifiziert (nach Bereitstellung der Transaktionsstammdaten durch den Notarserver) nicht nur den Sender oder Empfänger einer Transaktion, sondern auch den Typ der vom Transaktionsserver durchzuführenden Transaktion. Der Notarserver ist dazu konfiguriert, für jeden der Teilnehmer und jede der vom Transaktionsserver unterstützen Transaktionstypen, für die der Teilnehmer registriert ist, einen Code zu erzeugen, der das erste und/oder zweite Pseudonym und vorzugsweise weitere die Durchführung der Transaktion bestimmende Daten beinhaltet und die dem jeweiligen Teilnehmer, für den der Code ausgestellt wurde, zur Verfügung zu stellen, um diesem zu ermöglichen, durch Vorlage des QR Codes als erster und/oder zweiter Teilnehmer an einer Transaktion eines der vordefinierten Transaktionstypen teilzunehmen.

Das Anwendungsprogramm umfasst nach Ausführungsformen mindestens ein erstes und ein zweites Modul, das jeweils dazu konfiguriert ist, durch Erfassung eines QR-Codes sowohl ein Pseudonym eines Transaktionsteilnehmers als auch den Typ der auszuführenden Transaktion zu erfassen und eine Transaktionsanfrage für die jeweils auszuführende Transaktion zu erstellen, wobei die Transaktionsanfragen, die von dem ersten und zweiten Modul erzeugt werden, Anfragen für unterschiedliche Typen von Transaktionen sind. Insbesondere kann z.B. ein Modul eine Transaktionsanfrage zur Bezahlung medizinischer oder sonstiger Dienstleistungen oder Produkte erzeugen und das andere Modul eine Transaktionsanfrage zur Erfassung, Speicherung, Löschung, Analyse, Aufbereitung, Manipulation oder Verschiebung von medizinischen Daten.

Der Fachmann wird verstehen, dass Aspekte der vorliegenden Erfindung als Gerät, Verfahren oder Computerprogramm oder Computerprogrammprodukt ausgeführt sein können. Entsprechend können Aspekte der vorliegenden Erfindung die Form einer reinen Hardware-Ausführungsform, einer reinen Software-Ausführungsform (darunter Firmware, im Speicher befindliche Software, Mikro-Code, usw.) oder einer Software- und Hardware-Aspekte kombinierenden Ausführungsform annehmen, die hierin alle allgemein als "Schaltkreis", "Modul" oder "System" bezeichnet sein können. Des Weiteren können Aspekte der vorliegenden Erfindung die Form eines Computerprogramms oder Computerprogrammprodukts annehmen, welches durch ein computerlesbares Medium oder durch mehrere computerlesbare Medien in Form von computerausführbarem Code getragen wird. Ein Computerprogramm umfasst ebenfalls den computerausführbarem Code. "Computerausführbarer Code" kann auch als "Computerprogrammanweisungen" bezeichnet werden.
Eine beliebige Kombination von einem oder mehreren computerlesbaren Medium (en) kann verwendet werden. Das computerlesbare Medium kann ein computerlesbares Signalmedium oder ein computerlesbares Speichermedium sein. Ein "computerlesbares Speichermedium", wie hierin verwendet, umfasst ein materielles Speichermedium, das Anweisungen speichern kann, die durch einen Prozessor einer Computervorrichtung ausführbar sind. Das computerlesbare Speichermedium kann als computerlesbares nicht-flüchtiges Speichermedium bezeichnet werden. Das computerlesbare Speichermedium kann auch als ein greifbares computerlesbares Medium bezeichnet werden. In einigen Ausführungsformen kann ein computerlesbares Speichermedium auch in der Lage sein Daten zu speichern, die es ermöglichen, dass durch den Prozessor der Rechnervorrichtung auf sie zugegriffen wird. Beispiele von computerlesbaren Speichermedien umfassen, sind aber nicht beschränkt auf: eine Diskette, eine magnetische Festplatte, eine Festkörper-Festplatte, Flash-Speicher, einen USB-Stick, Random Access Memory (RAM), Festwertspeicher (ROM), eine optische Platte, eine magneto-optische Platte, und die Registerdatei des Prozessors. Beispiele für optische Platten umfassen Compact Disks (CD) und Digital Versatile Disks (DVD), zum Beispiel CD-ROM, CD-RW, CD-R, DVD-ROM, DVD-RW oder DVD-R-Disks. Der Begriff computerlesbares Speichermedium bezieht sich auch auf verschiedene Arten von Aufzeichnungsmedien, die dafür geeignet sind von der Rechnervorrichtung über ein Netzwerk oder eine Kommunikationsverbindung abgerufen zu werden. Zum Beispiel können Daten über ein Modem, über das Internet oder über ein lokales Netzwerk abgerufen werden. Computerausführbarer Code, der auf einem computerlesbaren Medium ausgeführt wird, kann über jedes geeignete Medium übermittelt werden, einschließlich, aber nicht darauf beschränkt, drahtlose, drahtgebundene, Lichtwellenleiter, RF, etc., oder jede geeignete Kombination der vorstehenden Medien.

Ein computerlesbares Signalmedium kann ein ausgebreitetes Datensignal beinhalten, das den computerlesbaren Programmcode zum Beispiel in einem Basissignal (baseband) oder als Teil eines Trägersignals (Trägerwelle) enthält. Solch ein Ausbreitungssignal kann in einer beliebigen Form ausgebildet sein, darunter, jedoch nicht beschränkt auf, eine elektromagnetische Form, eine optische Form oder jede geeignete Kombination davon. Bei einem computerlesbaren Signalmedium kann es sich um ein beliebiges computerlesbares Medium handeln, das kein computerlesbares Speichermedium ist und das ein Programm zur Verwendung durch oder in Verbindung mit einem System, Gerät oder Vorrichtung zur Ausführung von Anweisungen übertragen, verbreiten oder transportieren kann. Ein "Computer-Speicher" oder "Speicher" ist ein Beispiel für ein computerlesbares Speichermedium. Ein Computer-Speicher ist jeder Speicher, der einem Prozessor direkt zugänglich ist.

Ein "Computer-Datenspeicher" oder "Datenspeicher" ist ein weiteres Beispiel eines computerlesbaren Speichermediums. Computer-Datenspeicher ist jedes nichtflüchtige computerlesbare Speichermedium. In einigen Ausführungsformen kann ein Computerspeicher auch ein Computer-Datenspeicher sein oder umgekehrt.

Ein "Prozessor", wie er hierin verwendet wird, umfasst eine elektronische Komponente, die in der Lage ist, eine programm- oder maschinenausführbare Anweisung oder computerausführbaren Code auszuführen. Eine Bezugnahme auf die Rechnervorrichtung, die einen "Prozessor" umfasst, sollte so interpretiert werden, dass sie möglicherweise mehr als einen Prozessor oder Verarbeitungskerne umfasst. Der Prozessor kann zum Beispiel ein Multi-Core-Prozessor sein. Ein Prozessor kann sich auch auf eine Sammlung von Prozessoren innerhalb eines einzigen Computersystems oder verteilt auf mehrere Computersysteme beziehen. Der Begriff Rechnervorrichtung oder des Computers soll auch so interpretiert werden, um möglicherweise auf eine Sammlung oder ein Netzwerk von Rechnervorrichtungen oder Computern, die jeweils einen Prozessor oder Prozessoren umfassen, hinzuweisen. Der computerausführbare Code kann durch mehrere Prozessoren ausgeführt werden, die innerhalb derselben Rechnervorrichtung oder sogar über mehrere Computer verteilt sein können.

Computerausführbarer Code kann maschinenausführbare Anweisungen oder ein Programm umfassen, das einen Prozessor veranlasst, einen Aspekt der vorliegenden Erfindung durchzuführen. Computerausführbarer Code zum Ausführen von Operationen für Aspekte der vorliegenden Erfindung kann in jeder beliebigen Kombination einer oder mehrerer Programmiersprachen geschrieben sein, darunter eine objektorientierte Programmiersprache wie Java, Smalltalk, C++ oder Ähnliche und herkömmliche verfahrensorientierte Programmiersprachen wie die Programmiersprache "C" oder ähnliche Programmiersprachen, und in maschinenausführbare Anweisungen übersetzt werden. In einigen Fällen kann der computerausführbare Code in der Form einer höheren Programmiersprache oder in einer vor-übersetzten Form vorliegen, und in Verbindung mit einem Interpreter verwendet werden, der die maschinenausführbaren Anweisungen generiert.

Der computerausführbare Code kann vollständig auf dem Rechner eines Benutzers, teilweise auf dem Rechner des Benutzers, als eigenständiges Software-Paket, teilweise auf dem Rechner des Benutzers und teilweise auf einem entfernt angeordneten Rechner oder vollständig auf dem entfernt angeordneten Rechner oder Server ausgeführt werden. In letzterem Fall kann der entfernt angeordnete Rechner mit dem Rechner des Benutzers durch eine beliebige Art von Netzwerk verbunden sein, einschließlich einem lokalen Netzwerk (LAN) oder einem Weitverkehrsnetz (WAN), oder die Verbindung kann mit einem externen Rechner hergestellt werden (zum Beispiel über das Internet unter Verwendung eines Internet-Dienstanbieters).

Die Computerprogrammanweisungen können auf einem Prozessor oder auf mehreren Prozessoren ausgeführt werden. Im Falle mehrerer Prozessoren können diese auf mehre unterschiedliche Entitäten (z.B. Clients, Servern) verteilt sein. Jeder Prozessor könnte einen für die jeweilige Entität vorgesehenen Teil der Instruktionen ausführen. Wenn also von einem System oder Verfahren die Rede ist, das mehrere Entitäten umfasst, so verstehen sich die Computerprogrammanweisungen so, dass diese so angepasst sind, um durch einen der jeweiligen Entität zugeordneten oder zugehörigen Prozessor ausgeführt zu werden.

Aspekte der vorliegenden Erfindung werden unter Bezugnahme auf Flussdiagramm-Darstellungen und/oder Blockschaltbilder von Verfahren, Vorrichtungen (Systemen) und Computerprogramm-produkten gemäß Ausführungsformen der Erfindung beschrieben. Es wird darauf hingewiesen, dass jeder Block oder Teile der Blöcke der Flussdiagramme, Darstellungen und/oder der Blockschaltbilder durch Computerprogrammanweisungen, gegebenenfalls in Form eines computerausführbaren Codes, ausgeführt werden können. Es wird weiter darauf hingewiesen, dass Kombinationen von Blöcken in verschiedenen Flussdiagrammen, Darstellungen und/oder Blockschaltbildern kombiniert werden können, wenn sie sich nicht gegenseitig ausschließen. Diese Computerprogrammanweisungen können einem Prozessor eines Universalrechners, Spezialrechners oder einer anderen programmierbaren Datenverarbeitungsvorrichtung bereitgestellt werden, um eine Vorrichtung zu erzeugen, so dass die über den Prozessor des Computers oder der anderen programmierbaren Datenverarbeitungsvorrichtung ausgeführten Anweisungen Mittel zur Ausführung der in dem Block oder den Blöcken der Flussdiagramme und/oder der Blockschaltbilder festgelegten Funktionen/Schritte erzeugen.

Diese Computerprogrammanweisungen können auch auf einem computerlesbaren Medium gespeichert sein, die einen Computer oder andere programmierbare Datenverarbeitungsvorrichtungen oder andere Vorrichtungen steuern können, dass sie auf eine bestimmte Art funktionieren, so dass die auf dem computerlesbaren Medium gespeicherten Anweisungen ein Herstellungserzeugnis hervorrufen, einschließlich Anweisungen, welche die/den in dem Block oder den Blöcken der Flussdiagramme und/oder der Blockschaltbilder festgelegte/n Funktion/Schritt umsetzen.

Die Computerprogrammanweisungen können auch auf einen Computer, anderen programmierbaren Datenverarbeitungsvorrichtungen oder anderen Vorrichtungen gespeichert werden, um die Ausführung einer Reihe von Prozessschritten auf dem Computer, anderen programmierbaren Datenverarbeitungsvorrichtungen oder anderen Vorrichtungen zu verursachen, um einen auf einem Computer ausgeführten Prozess zu erzeugen, so dass die auf dem Computer oder den anderen programmierbaren Vorrichtungen ausgeführten Anweisungen Verfahren zur Umsetzung der in dem Block oder den Blöcken der Flussdiagramme und/oder der Blockschaltbilder festgelegten Funktionen/Schritte erzeugen.

Im Weiteren werden Ausführungsformen der Erfindung mit Bezugnahme auf die Zeichnungen näher erläutert. Es zeigen:
- Figur 1: ein Flussdiagramm eines erfindungsgemäßen Verfahrensablaufs,
- Figur 2: ein Flussdiagramm eines erfindungsgemäßen Verfahrensablaufs, wobei der Notarserver die erste Zuordnungskontrollprüfung durchführt;
- Figur 3: ein Flussdiagramm eines erfindungsgemäßen Verfahrensablaufs, wobei der Transaktionsserver die erste Zuordnungskontrollprüfung durchführt;
- Figur 4: ein Flussdiagramm eines erfindungsgemäßen Verfahrensablaufs mit registriertem Programm und Authentifizierung der Teilnehmer;
- Figur 5: ein Flussdiagramm eines erfindungsgemäßen Verfahrensablaufs zur Registrierung eines Anwendungsprogramms auf einem Teilnehmer;
- Figur 6: ein Blockdiagramm eines Systems, welches die Durchführung eines erfindungsgemäßen Verfahrens ermöglicht;
- Figur 7: ein Blockdiagramm eines Endgeräts und des Notarservers während der Initialisierung des Anwendungsprogramms;
- Figur 8: ein Blockdiagramm des Inhalts des Registereintrags eines Teilnehmers für mehrere unterschiedliche Anwendungsprogramme;
- Figur 9: ein Blockdiagramm eines Endgeräts und des Notarservers während der Einleitung einer Transaktion;
- Figur 10: ein Blockdiagramm bezüglich der Ableitung eines graphischen Codes aus anwendungsprogrammspezifischen Teilnehmerdaten;
- Figur 11: ein Blockdiagramm eines Systems mit zusätzlicher Prüfung der Transaktionskontrolldaten; und
- Figur 12: ein Blockdiagramm eines Systems mit transaktionstyp-bezogener Teilnehmerregistrierung.

Im Weiteren werden Elemente der nachfolgenden Ausführungsformen, die einander entsprechen oder identisch sind, jeweils mit denselben Bezugszeichen gekennzeichnet.

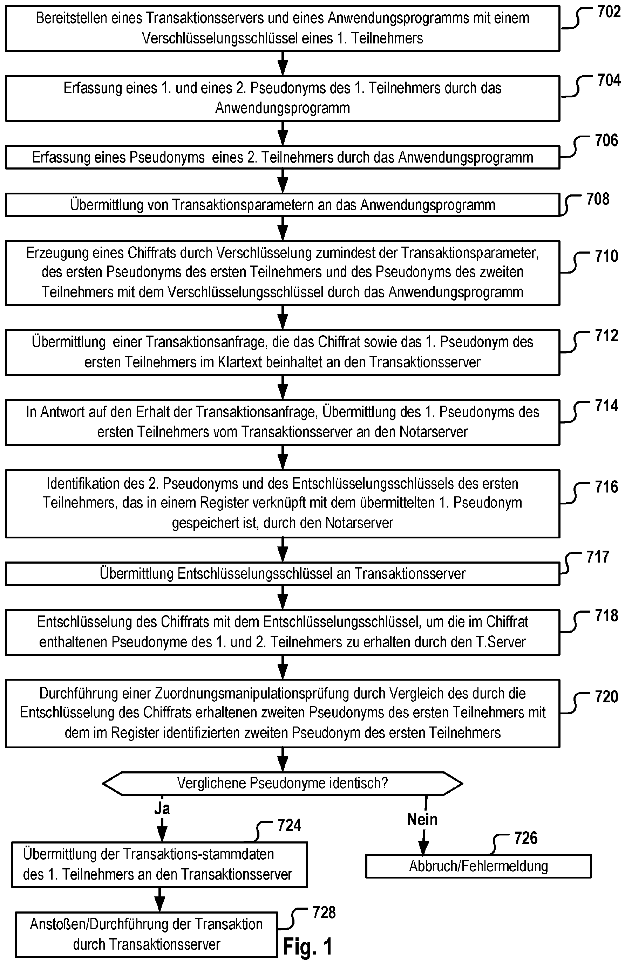

Die **Figur 1** zeigt ein Flussdiagramm einer erfindungsgemäßen Ausführungsform des Verfahrens. Eine Durchführbarkeit des Verfahrens setzt zumindest das Vorhandensein von einem Transaktionsserver, einem Notarserver, einer Anzahl von Teilnehmern sowie ein Anwendungsprogramm voraus. Dabei ist jedem Teilnehmer zumindest ein erstes und ein zweites eindeutiges Pseudonym zugeordnet, wobei die Zuordnung der Pseudonyme zu den Teilnehmern auf dem Notarserver hinterlegt ist. Weiterhin sind auf dem Notarserver den Teilnehmern deren Transaktionsstammdaten zugeordnet. Die Transaktionsstammdaten eines Teilnehmers können beispielsweise dessen Bankverbindungen, Postadressen, eine Adresse eines Cloudspeicherdienstes, Name und Anschrift einer natürlichen Person oder ähnliches sein. Außerdem ist jedem der bei dem Notarserver registrierten Teilnehmer für jede Anwendung, die für diesen Teilnehmer initialisiert wurde, ein Paar aus einem kryptographischen Verschlüsselungsschlüssel und einem dazu korrespondierenden Entschlüsselungsschlüssel zugewiesen, wobei der Entschlüsselungsschlüssel im Register des Notarservers und der Verschlüsselungsschlüssel in dem Anwendungsprogramm, das für den Teilnehmer initialisiert wurde, gespeichert ist.

In einem ersten Schritt 702 wird das Anwendungsprogramm und zumindest ein Transaktionsserver bereitgestellt. Beispielsweise kann die Bereitstellung des Anwendungsprogramms das Herunterladen und Installieren des Anwendungsprogramms auf ein Endgerät des ersten Teilnehmers umfassen. Das Endgerät kann z.B. ein Desktopcomputer oder ein portabler Computer, insbesondere ein Notebook, Tablet-Computer oder Smartphone sein.

In einem Schritt 704 werden die ersten und zweiten Pseudonyme sowie der für dieses Anwendungsprogramm vom Notarserver spezifisch erstellten Verschlüsselungsschlüssel des ersten Teilnehmers, z.B. eines Arztes, welcher an der Transaktion beteiligt ist, erfasst. Die Erfassung der Pseudonyme und des Verschlüsselungsschlüssels erfolgt hierbei durch das Anwendungsprogramm, beispielsweise im Zuge der Initialisierung des Anwendungsprogrammes für den Arzt durch Auslesen eines Speichers, in dem die Pseudonyme und der Verschlüsselungsschlüssel hinterlegt sind oder durch die visuelle Erfassung eines optisch erfassbaren Codes, welcher die Pseudonyme und den Verschlüsselungsschlüssel des Arztes enthält. Der Schritt 704 kann z.B. einmalig im Zuge der Initialisierung des Anwendungsprogrammes für den ersten Teilnehmer erfolgen und muss für später erfolgte Transaktionen nicht wiederholt werden, da die Pseudonyme und der Verschlüsselungsschlüssel vorzugsweise dauerhaft in dem Anwendungsprogramm gespeichert werden.

Nachdem die Pseudonyme und der Verschlüsselungsschlüssel des ersten Teilnehmers erfasst wurden, werden durch das Anwendungsprogramm in Schritt 706 auch ein Pseudonym des zweiten Teilnehmers erfasst. Beispielsweise kann der zweite Teilnehmer ebenso ein erstes und zweites Pseudonym, das vom Transaktionsserver spezifisch für den zweiten Teilnehmer und für diese Anwendung erstellt wurde, besitzen. Der Notarserver kann die Pseudonyme des zweiten Teilnehmers in einem Registereintrag des zweiten Teilnehmers für dieses Applikationsprogramm gespeichert haben und einen QR Code (oder anderen optisch erfassbaren Code) erstellen, der dem Anwendungsprogramm so zur Verfügung gestellt wird, wie es die konkrete Anwendung erfordert. Beispielswiese kann der zweite Teilnehmer eine spezielle Zieldatenbank repräsentieren, die z.B. dazu ausgebildet ist, selektiv Genomsequenzdaten oder Blutzuckerdaten oder medizinisch zusammenhängende Patientendaten zu speichern. Dadurch, dass das Anwendungsprogramm entweder für jede einzelne auszuführende Transaktion oder einmal für mehrere künftig auszuführende Transaktionen den QR Code mit dem Pseudonym des zweiten Teilnehmers einliest, kann festgelegt werden, dass die Zieldatenbank die durch das Pseudonym identifizierte Datenbank ist. Die Transaktionsparameter können beispielsweise ein zwischen zwei Teilnehmern zu übertragender Datensatz an sensiblen medizinischen Daten eines Patienten sein.

Im Schritt 708 werden die in der Transaktion zu übertragenden Transaktionsparameter von dem Anwendungsprogramm erfasst. Beispielsweise können die medizinischen Daten manuell eingegeben werden, oder es kann sich um automatisch erfasste Röntgenbilder, MRT Bilder oder sonstige Daten, die im jeweiligen Anwendungskontext relevant sind, handeln.

In Schritt 710 erzeugt das Anwendungsprogramm ein Chiffrat, indem es zumindest das zweite Pseudonym des ersten Teilnehmers, das (erste oder zweite) Pseudonym des zweiten Teilnehmers und die Transaktionsparameter mit dem Verschlüsselungsschlüssel verschlüsselt. Optional kann das Chiffrat auch weitere Daten enthalten, z.B. Transaktionskontrolldaten und/oder die Geräte-ID des Endgeräts und/oder eine Anwendungsprogramm-ID des Anwendungsprogramms.

In Schritt 712 erzeugt das Anwendungsprogramm eine Transaktionsanfrage, die zumindest das Chiffrat und das erste Pseudonym des ersten Teilnehmers in Klartext enthält. Die Transaktionsanfrage wird an den Transaktionsserver über eine Netzwerkverbindung gesendet.

In Schritt 714 sendet der Transaktionsserver in Antwort auf den Erhalt der Transaktionsanfrage das erste Pseudonym an den Notarserver, da der Transaktionsserver nicht die Pseudonyme den Teilnehmern und deren Transaktionsstammdaten zuordnen kann. Ohne die Kenntnis der Transaktionsstammdaten der Teilnehmer ist die Transaktion jedoch nicht durchführbar. Der Notarserver ist wiederum aufgrund der bei ihm hinterlegten Zuordnung von Teilnehmern und Pseudonymen in der Lage, den Pseudonymen, welche vom Transaktionsserver übermittelt wurden, die entsprechenden Teilnehmer zuzuordnen.

In Schritt 716 durchsucht der Notarserver das Register nach Teilnehmereinträgen, die ein erstes Pseudonym beinhalten, welches identisch ist zu dem vom Transaktionsserver empfangenen ersten Pseudonym. Wird kein solcher Teilnehmereintrag (Teilnehmerdatensatz) gefunden, wird die angefragte Transaktion nicht durchgeführt und z.B. mit oder ohne Fehlermeldung abgebrochen. Wird ein solcher Teilnehmereintrag (Teilnehmerdatensatz) gefunden, wird das zweite Pseudonym, das dem gleichen (hier: ersten) Teilnehmer zugewiesen ist und das dem gleichen Anwendungsprogramm wie das erste Pseudonym zugewiesen ist, identifiziert. Außerdem wird ein mit dem ersten Pseudonym verknüpft gespeicherter Entschlüsselungsschlüssel identifiziert, der für das Anwendungsprogramm spezifisch ist und zu dem vom Anwendungsprogramm verwendeten Verschlüsselungsschlüssel korrespondiert oder zumindest korrespondieren sollte, sofern das erste Pseudonym nicht von einem Angreifer während der Übertragung oder Verarbeitung der Transaktionsanfrage zu bzw. durch den Transaktionsserver manipuliert wurde.

Zumindest der identifizierte Entschlüsselungsschlüssel und optional auch das im Register gespeicherte zweite Pseudonym des ersten Teilnehmers werden in Schritt 717 vom Notarserver an den Transaktionsserver zurückgegeben.

In Schritt 718 entschlüsselt der Transaktionsserver mit dem Entschlüsselungsschlüssel das Chiffrat und erhält dadurch das zweite Pseudonym des ersten Teilnehmers, die Transaktionsparameter und das Pseudonym des zweiten Teilnehmers in unverschlüsselter Form.

In Schritt 720 führt der Notarserver oder der Transaktionsserver eine erste Zuordnungsmanipulationsprüfung durch, um festzustellen, ob die Zuordnung des ersten Pseudonyms zu dem Chiffrat und den darin enthaltenen Transaktionsparametern manipuliert wurde. Hierzu wird das vom Notarserver im Register identifizierte zweite Pseudonym mit dem entschlüsselten zweiten Pseudonym des ersten Teilnehmers verglichen. Wird hier keine Identität der verglichenen zweiten Pseudonyme festgestellt, gilt die Zuordnung als manipuliert. In diesem Fall folgt in Schritt 726 ein Abbruch des Verfahrens, optional weitere Schritte zur Warnung der Teilnehmer oder Identifikation der Problemursache. Falls Identität der verglichenen zweiten Pseudonyme des ersten Teilnehmers festgestellt wird, gilt die Zuordnung des ersten Pseudonyms zu den Transaktionsparametern als nicht manipuliert. Optional folgen nun weitere vom Transaktionsserver oder Notarserver durchzuführende Prüfschritte bezüglich der Integrität der Transaktionsanfrage. Falls die erste Zuordnungsmanipulationsprüfung und alle optional gemäß mancher Ausführungsformen zusätzlich durchgeführten Prüfungen ergeben, dass die Transaktionsanfrage authentisch ist, übermittelt der Notarserver an den Transaktionsserver in Schritt 724 die Transaktionsstammdaten des ersten und zweiten Teilnehmers, sodass der Transaktionsserver eine Transaktion gemäß der zuvor erhaltenen Transaktionsanfrage anstoßen oder durchführen kann.

Die optional weiteren Prüfschritte können z.B. Prüfschritte beinhalten, ob weitere Daten, die zusammen mit den Transaktionsparametern verschlüsselt wurden und in das Chiffrat integriert wurden, auf dem Notarserver für den ersten Teilnehmer und für dieses Anwendungsprogramm in identischer Form im Register hinterlegt sind. Diese weiteren Daten können z.B. eine Hardware-ID des Endgeräts, auf dem das Anwendungsprogramm instanziiert ist, eine Anwendungsprogramm-ID, eine Transaktionstyp-ID, ein oder mehrere Attribute (z.B. des Teilnehmers oder der angefragten Transaktion) und/oder Transaktionskontrollparameter umfassen. Die weiteren Daten können vorzugsweise zumindest teilweise Transaktionstypspezifisch konfiguriert sein, wobei dies optional bis auf die Ebene einzelner Attribute möglich ist. Die weitere Prüfung kann z.B. aus einer zweiten Zuordnungskontrollprüfung bestehen, in welcher in analoger Weise wie für das zweite Pseudonym des ersten Teilnehmers beschrieben geprüft wird, ob die durch Entschlüsselung des Chiffrats erhaltenen weiteren Daten in identischer Form im Register des Notarservers für den ersten Teilnehmer und für dieses Anwendungsprogramm hinterlegt sind. Beispielsweise kann ein Anwendungsprogramm, das als Patientenmanagementprogramm ausgebildet ist, die Kostenstelle des Krankenhauses in Form eines Transaktionskontrolldaten-Attributwertes bei jeder zahlungsspezifischen Transaktionsanfrage in das Chiffrat integrieren, sodass die Zahlungstransaktion so durchgeführt werden kann, dass die Überweisung auf der für den Arzt zuständigen Kostenstelle verbucht wird, wobei die Kostenstelle für den Arzt auch auf dem Notarserver hinterlegt ist und mit der im Chiffrat angegebenen Kostenstelle im Zuge der zweiten Zuordnungsmanipulationsprüfung abgeglichen wird.

Gemäß einer Ausführungsform sendet der Transaktionsserver zusammen mit dem ersten Pseudonym des ersten Teilnehmers gleich auch das Pseudonym des zweiten Teilnehmers an den Notarserver um dem Notarserver eine Identifikation der Transaktionsstammdaten des zweiten Teilnehmers zu ermöglichen. Gemäß anderer Ausführungsformen wird das Pseudonym des zweiten Teilnehmers vom Transaktionsserver erst dann an den Notarsender gesendet, wenn die erste Zuordnungsmanipulationsprüfung ergibt, dass keine Manipulation vorliegt.

Die Hardware-ID des Endgeräts kann z.B. in einem Globally Unique Identifier (GUID) des Endgeräts, auf dem das Anwendungsprogramm installiert ist, bestehen, wobei die GUID im Zuge der Initialisierung des Anwendungsprogramms für den ersten Teilnehmer im Registereintrag des ersten Teilnehmers im Notarserver gespeichert wird.

Da das Anwendungsprogramm gemäß Ausführungsformen der Erfindung auf den ersten Teilnehmer registriert ist, sind dessen Pseudonyme dem Anwendungsprogramm ab Initialisierung des Anwendungsprogramms bekannt. Daher muss nur das Pseudonym des zweiten Teilnehmers während des laufenden Betriebs des Anwendungsprogramms erfasst werden. Auch die Globally Unique Identifier (GUID) des Endgeräts wird vorzugsweise während der Initialisierung durch das Anwendungsprogramm erfasst. Analog zum zuvor beschriebenen Verfahren werden die Pseudonyme der Teilnehmer durch den Transaktionsserver aus dem Transaktionsdatensatz extrahiert und an den Notarserver übermittelt. Zusätzlich zu den Pseudonymen kann auch die GUID, welche Bestandteil des Chiffrats sein kann, nach dessen Entschlüsselung an den Notarserver weitergegeben. Der Notarserver prüft nun, ob die erhaltene GUID im Datensatz des ersten Teilnehmers enthalten ist. Ist dies nicht der Fall, wird das Verfahren abgebrochen. Stimmt jedoch die Zuordnung der GUID mit dem Pseudonym des Teilnehmers überein, so wird die Transaktion durchgeführt oder veranlasst. Durch die Verwendung eines registrierten Anwendungsprogramms und die Berücksichtigung der GUId bzw. einer Endgerät oder Anwendungsprogrammspezifischen Hardware- oder Software-ID wird eine unbemerkte Manipulation der Transaktionsanfrage verhindert. Wurde die Transaktionsanfrage von einer Anwendungsprogramminstanz oder einem Endgerät gesendet, das dem Notarserver nicht bekannt ist, kann der Notarserver keine identische Hard- bzw. Software-ID zurückgeben und die Transaktion wird nicht durchgeführt, da die Transaktionsanfrage von einem nicht registrierten Gerät bzw. Anwendungsprogramm stammt. Gleiches gilt analog für die Zuordnungsprüfung von anderen Transaktionskontrollparameter, die innerhalb einer registrierten Software unterschiedlich und feingranular definiert sein können.

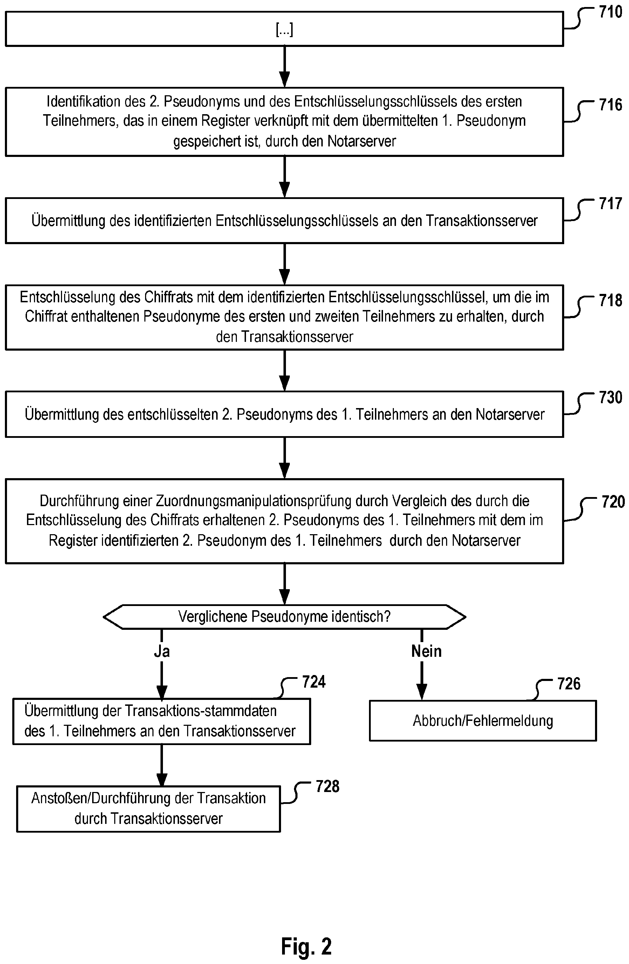

Die **Figur 2** zeigt ein Flussdiagramm einer erfindungsgemäßen Ausführungsform des Verfahrens, wobei die erste Zuordnungskontrollprüfung vom Notarserver durchgeführt wird. In diesem Fall sendet der Transaktionsserver in Schritt 730 auch das durch Entschlüsselung des Chiffrats erhaltene zweite Pseudonym des ersten Teilnehmers an den Notarserver. Schritt 720 wird durch den Notarserver vorgenommen.

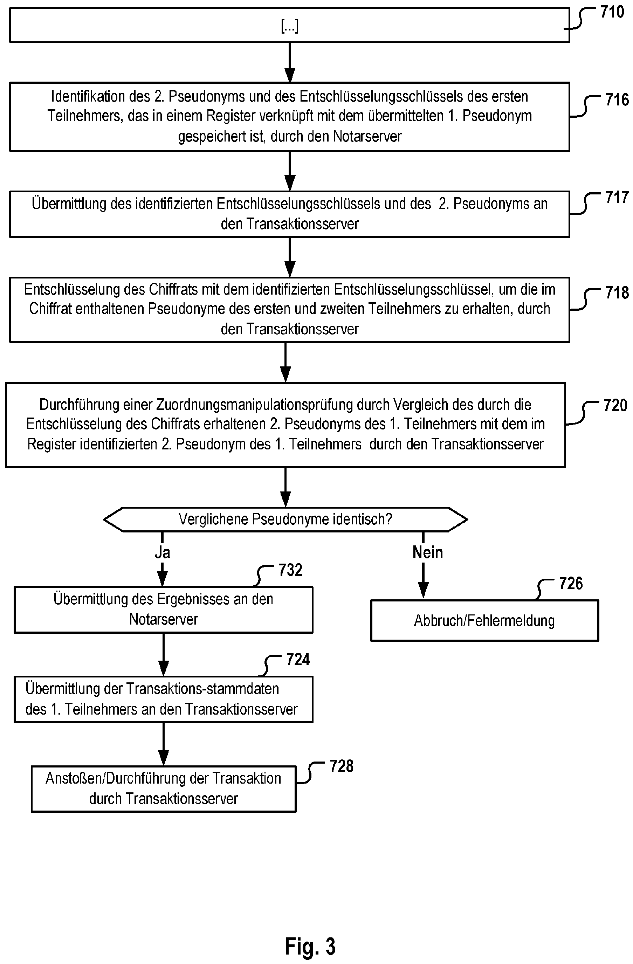

Die **Figur 3** zeigt ein Flussdiagramm einer erfindungsgemäßen Ausführungsform des Verfahrens, wobei die erste Zuordnungskontrollprüfung in Schritt 720 vom Transaktionsserver durchgeführt wird. In diesem Fall sendet der Notarserver in Schritt 717 neben dem identifizierten Entschlüsselungsschlüssel des ersten Teilnehmers auch das im Register gespeicherte zweite Pseudonym des ersten Teilnehmers an den Transaktionsserver, sodass der Transaktionsserver in Schritt 720 das vom Notarserver erhaltene zweite Pseudonym mit dem im Chiffrat enthaltenen, entschlüsselten zweiten Pseudonym vergleichen kann. In diesem Fall muss wird in einem zusätzlichen Schritt 732 das Ergebnis der ersten Zuordnungsmanipulationsprüfung vom Transaktionsserver an den Notarserver gesendet.

Die in den Figuren 2 und 3 mit [...] angedeuteten Schritte verlaufen identisch zu jenen der Figur 1.

**Figur 3** zeigt weitere, eine Teilnehmerauthentifizierung betreffende Schritte des Verfahrens gemäß weiterer Ausführungsformen der Erfindung. Die Schritte 201-206 verlaufen identisch oder analog zu jenen der Figur 1.

Nachdem der Notarserver die Pseudonyme des ersten und zweiten Teilnehmers, welche in der Transaktionsanfrage enthalten sind, vom Transaktionsserver erhalten und entschlüsselt wurden, wird eine Authentifizierungsanfrage an die Teilnehmer gesendet 305. Hierzu ist es notwendig, dass jeder Teilnehmer über ein registriertes Anwendungsprogramm verfügt. Der Notarserver muss überdies in der Lage sein, mit den Anwendungsprogrammen der Teilnehmer zu kommunizieren. Zum Zwecke der Authentifizierung kann beispielsweise eine Anfrage an das Anwendungsprogramm der Teilnehmer geschickt werden, welche durch die Teilnehmer manuell bestätigt werden muss. Die Anfrage kann hierbei beispielsweise die Information enthalten, zwischen wem eine Transaktion durchgeführt werden soll und welche Transaktionsparameter übermittelt wurden.

Wird die Authentifizierungsanfrage 306 von wenigstens einem Teilnehmer nicht bestätigt, so wird das Verfahren abgebrochen 307. Wenn jedoch alle Teilnehmer die Authentifizierungsanfrage bestätigen, wird das Verfahren gemäß den zuvor beschriebenen Schritten 105 - 107 fortgesetzt.

Durch den zusätzlichen Schritt der Authentifizierungsabfrage kann beispielsweise ein erster Teilnehmer, welcher eine Transaktion an die übrigen Teilnehmer durchführen will, seinerseits mit der Bestätigung der Authentifizierungsanfrage warten, bis er weiß, dass alle anderen Teilnehmer ebenfalls die Authentifizierungsanfrage bestätigt haben. Dies kann beispielsweise dadurch realisiert sein, dass der erste Teilnehmer die weiteren Teilnehmer anruft und nachfragt, ob eine Authentifizierungsanfrage, welche der vorgesehenen Transaktion entspricht, eingegangen ist. Die Bestätigungsanfrage kann auch auf jedem anderen Kommunikationsweg digital oder analog erfolgen. Beispielsweise kann die von den Teilnehmern jeweils verwendete Anwendungssoftware eine Schnittstelle haben, um digital im Hintergrund eine Anfrage, ob eine Bestätigungsanfrage bezüglich einer aktuell durchzuführenden Transaktion positiv beantwortet wurde, zu verwenden und eine entsprechende Antwort zu verarbeiten. Sobald eine positive Antwort bezüglich der Bestätigungsanfrage, ist ausgeschlossen, dass die Transaktion, welche durchgeführt werden soll, an andere Personen umgeleitet wird.

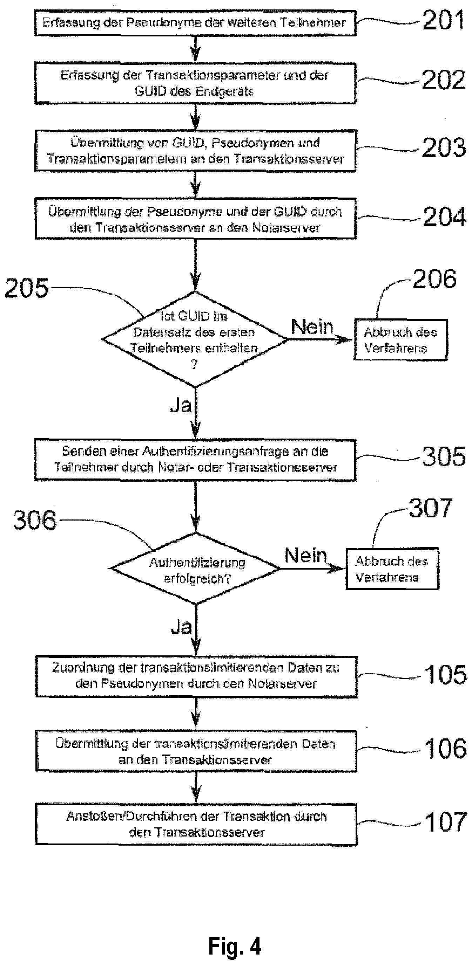

Die **Figur 4** ist ein Flussdiagramm einer erfindungsgemäßen Ausführungsform des Verfahrens, wobei das Verfahren um die zusätzlichen Schritte der Registrierung eines Anwendungsprogrammes sowie der Anfrage einer Authentifizierung gemäß Ausführungsformen der Erfindung erweitert ist.

Das Anwendungsprogramm wird für den ersten Teilnehmer initialisiert wie bereits für Ausführungsformen der Erfindung beschrieben, wobei hier die GUID des Endgeräts des ersten Teilnehmers ermittelt wird. Sobald die GUID, welche im Chiffrat der Transaktionsanfrage enthalten ist, dem ersten Pseudonym des ersten Teilnehmers eindeutig zugeordnet werden konnte, wird eine Authentifizierungsanfrage an die übrigen Teilnehmer durch den Notar- oder den Transaktionsserver gesendet 305. Erst nach erfolgreicher Authentifizierung der weiteren Teilnehmer werden die erste und/oder zweite Zuordnungsmanipulationsprüfung durchgeführt. Dabei können die Sicherheitsabfragen 204 sowie 305 auch in Ihrer Reihenfolge vertauscht sein. Insgesamt ist durch diese Ausprägungsform des Verfahrens die Identität des ersten Teilnehmers aufgrund der Registrierung gesichert, während die Identität der weiteren Teilnehmer aufgrund der Authentifizierungsanfrage gesichert ist. Somit wird insgesamt eine unbemerkte Manipulation von Pseudonymen der Teilnehmer der Transaktion verhindert.

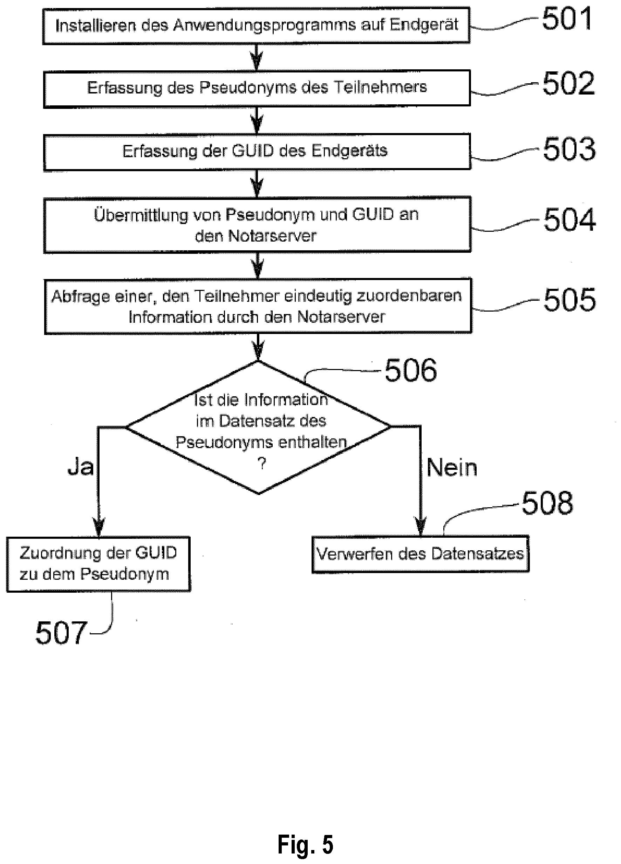

**Figur 5** ist ein Flussdiagramm eines erfindungsgemäßen Verfahrens zur Registrierung eines Anwendungsprogramms auf einen Teilnehmer.

In einem ersten Schritt 501 wird das Anwendungsprogramm auf einem Endgerät des Teilnehmers installiert. Ein Endgerät kann hierbei beispielsweise ein Smartphone, ein Personal Computer, ein Tablet PC oder Ähnliches sein. In einem zweiten Schritt 502 wird das erste und zweite Pseudonym des Teilnehmers, welcher das Anwendungsprogramm registrieren möchte, durch das Anwendungsprogramm erfasst. Die Erfassung der Pseudonyme kann wahlweise noch während der Installation des Anwendungsprogramms erfolgen oder danach. Die Erfassung der Pseudonyme selbst kann beispielsweise durch Einlesen eines graphischen Codes oder Auslesen eines Speichermediums erfolgen. Die ersten und zweiten Pseudonyme des ersten Teilnehmers werden nach der Erfassung derselben durch das Anwendungsprogramm gespeichert. Zudem wird ein Verschlüsselungsschlüssel des ersten Teilnehmers erfasst, wobei der Verschlüsselungsschlüssel vorzugsweise teilnehmerspezifisch und für das Anwendungsprogramm spezifisch erstellt wurde.

Gemäß manchen Ausführungsformen wird durch das Anwendungsprogramm zudem der Globally Unique Identifier des Endgeräts erfasst 503. Dieser ist üblicherweise in der Hardware des Endgeräts hinterlegt. Nachdem die Pseudonyme und GUID erfasst wurden, werden sie an den Notarserver übermittelt 504. Der Notarserver identifiziert nach Eingang einer entsprechenden Anfrage des Transaktionsservers anhand des ersten Pseudonyms und/oder des zweiten Pseudonyms weitere Daten, die im Register des Notarservers dem ersten Teilnehmer und dem Anwendungsprogramm zugeordnet sind, z.B. die GUID. Der Notarserver kann daraufhin über einen bei der Registrierung durch eine Kanal-Information spezifizierten Kommunikationskanal zwischen Anwendungsprogramm und Notarserver eine zusätzliche Teilnehmer-Information des Teilnehmers abfragen. Der entsprechende Kommunikationskanal kann beispielsweise durch eine Post- oder E-Mail Adresse definiert sein. Eine Teilnehmer-Information kann beispielsweise das Geburtsdatum, die Adresse, die Personalausweisnummer des Teilnehmers oder Ähnliches sein. Hierbei ist es notwendig, dass die Teilnehmer-Information eingangs bei der Registrierung des Teilnehmers beim Notarserver im Datensatz des Teilnehmers hinterlegt wurde und dem Teilnehmer durch den Notarserver zugeordnet werden kann. Der Notarserver überprüft nach Eingang der Teilnehmer-Information, ob die übermittelte Teilnehmer-Information im Datensatz, welcher dem Pseudonym auf dem Notarserver zugeordnet ist, enthalten ist 506. Ist dies der Fall, wird die GUID des Endgeräts, auf dem das Anwendungsprogramm installiert wurde, dem Datensatz des ersten Pseudonyms des ersten Teilnehmers zugeordnet 507. Ist die Teilnehmer-Information jedoch nicht im Datensatz des Pseudonyms enthalten, wird der Datensatz verworfen und die Registrierung abgebrochen 508.

Die Registrierung des Anwendungsprogramms auf einen Teilnehmer ermöglicht es dem Notarserver, eine Authentifizierungsanfrage an dieses Anwendungsprogramm zu schicken. Dies trägt gemäß den obigen Ausführungen zur Sicherheit des Verfahrens bei. Weiter steigert eine Registrierung des Anwendungsprogramms die Anwenderfreundlichkeit, da die Pseudonyme des Teilnehmers, auf den das Anwendungsprogramm registriert ist, nicht bei jedem Transaktionsvorgang erneut eingelesen werden müssen, sondern durch das Anwendungsprogramm dem Transaktionsdatensatz automatisch hinzugefügt wird.

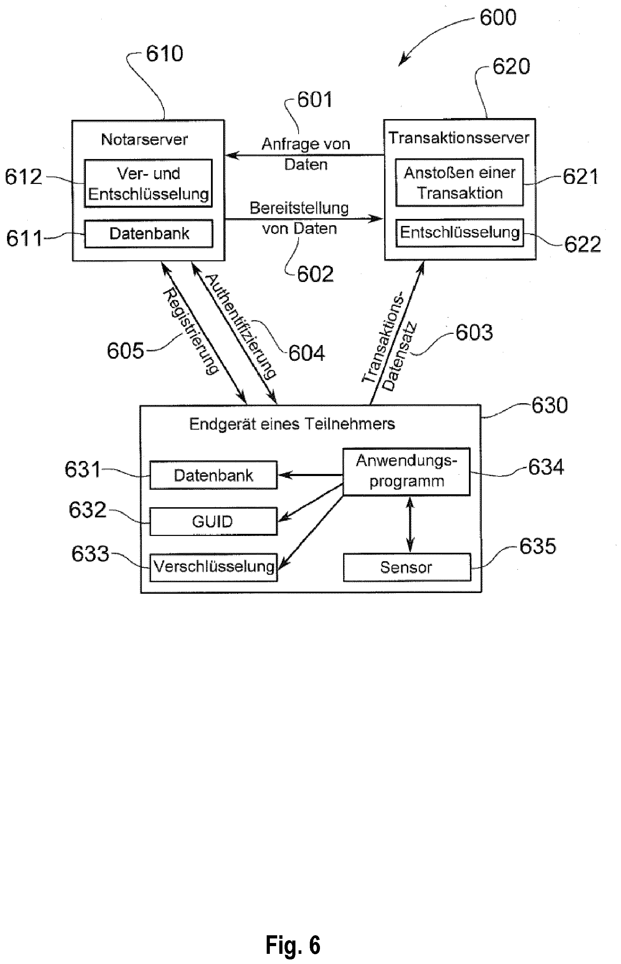

Die **Figur 6** zeigt ein System 600, welches die Durchführung eines Verfahrens gemäß einer Ausführungsform der Erfindung ermöglicht. Hierzu werden im Wesentlichen ein Notarserver 610, ein Transaktionsserver 620 sowie das Endgerät eines Teilnehmers 630 benötigt. Das System kann aber auch mehrere Transaktionsserver und/oder mehrere Endgeräte mehrerer Teilnehmer umfassen.

Der Notarserver 610 enthält eine Datenbank 611, hier auch als "Register" bezeichnet, auf welcher zumindest die Zuordnung von Pseudonymen und kryptographischen Schlüsseln zu Teilnehmern sowie die Transaktionsstammdaten der Teilnehmer hinterlegt sind. Die Gesamtheit des für einen bestimmten Teilnehmer und ein bestimmtes Anwendungsprogramm beim Notarserver hinterlegten Daten kann auch als anwendungsspezifischer Teilnehmerdatensatz bezeichnet werden, bzw. einfach als "Teilnehmerdatensatz", z.B. wenn für einen Teilnehmer nur ein einziges Anwendungsprogramm registriert ist.

Für den Fall, dass gemäß obiger Ausführung eines der Pseudonyme eines Teilnehmers dessen verschlüsselter Teilnehmerdatensatz oder ein Teil dieses Teilnehmerdatensatzes ist, enthält der Notarserver weiterhin Mittel zur Ver- und Entschlüsselung 612 von Datensätzen der Teilnehmer. Dies kann beispielsweise ein Prozessor mit zugeordnetem Datenspeicher sein, wobei der Datenspeicher einen vom Prozessor ausführbaren Programmcode enthält, der Computerausführbare Anweisungen enthält, welche angepasst sind, um einen Datensatz gemäß eines bestimmten Verschlüsselungsverfahrens zu ver- und entschlüsseln.

Der Transaktionsserver 620 enthält Mittel zum Anstoßen einer Transaktion 621, was zum Beispiel im Falle einer Finanztransaktion eine Kommunikationsverbindung mit einer Bank sein kann. Für den Fall, dass zur Erhöhung der Sicherheit des Verfahrens die Transaktionsdatensätze durch das Anwendungsprogramm verschlüsselt werden, enthält der Transaktionsserver 620 weiterhin Mittel zur Entschlüsselung 622 der Transaktionsdatensätze, welche analog zu 612 ausgeführt sein können.

Das Endgerät eines Teilnehmers 630 enthält eine Datenbank 631, in welcher beispielsweise nach erfolgter Registrierung eines Anwendungsprogramms das anwendungsspezifische erste und zweite Pseudonym und der anwendungsspezifische Verschlüsselungsschlüssel des Teilnehmers gespeichert ist. Weiter enthält das Endgerät eines Teilnehmers 630 eine Nummern- oder Zeichenfolge, welche das Endgerät eindeutig identifiziert 632, zum Beispiel die GUID des Endgeräts. Das Anwendungsprogramm kann z.B. ein Verschlüsselungsmodul 633 zur Verschlüsselung von Datensätzen 633 und zur Bildung eines Chiffrats enthalten, wobei das Modul 633 analog zu 612 ausgebildet sein kann. Weiter enthält das Endgerät 630 das Anwendungsprogramm 634, welches zur Durchführung der Transaktionen benötigt wird. Dieses ist in der Lage auf die GUID 632, auf die Datenbank 631 sowie auf die Mittel zur Verschlüsselung 633 zuzugreifen. Weiter enthält das Endgerät 630 einen Sensor 635, mit dem Pseudonyme von Teilnehmern erfasst werden können. Dieser Sensor ist operativ an das Anwendungsprogramm gekoppelt, sodass das Anwendungsprogramm Informationen vom Sensor empfangen kann.

Zwischen dem Endgerät 630 und dem Notarserver 610 bestehen Kommunikationskanäle, welche zur Authentifizierung eines Teilnehmers 604 sowie zur Registrierung eines Anwendungsprogramms auf einen Teilnehmer 605 genutzt werden können. Sowohl Anwendungsprogramm als auch Notarserver haben vorzugsweise spezielle Programmschnittstellen, die zum geschützten Datenaustausch untereinander ausgebildet sind. Weiter besteht ein Kommunikationskanal zwischen dem Endgerät 630 und dem Transaktionsserver 620, über welchen Transaktionsdatensätze 603 vom Endgerät an den Transaktionsserver übermittelt werden. Da der Transaktionsserver 620 Pseudonyme zunächst nicht verarbeiten kann, besteht zwischen dem Transaktionsserver 620 und dem Notarserver 610 ebenfalls eine Kommunikationsverbindung, über welche der Transaktionsserver 620 Daten von Teilnehmern anfragen kann 601, woraufhin der Notarserver 610 dem Transaktionsserver 620 entsprechende Daten bereitstellen kann 602.

Anhand des Systems 600 wird im Folgenden das Verfahren gemäß Figur 4 erläutert. Dabei wird davon ausgegangen, dass das Anwendungsprogramm auf einen der Teilnehmer registriert ist, der hier als "erster Teilnehmer" bezeichnet wird. Zum Zwecke einer besseren Übersichtlichkeit wird hierbei nur ein Transaktionsserver eingesetzt. Weiter ist auch nur ein Endgerät eines Teilnehmers dargestellt, welches stellvertretend für eine Vielzahl von Endgeräten der Teilnehmer anzusehen ist.

Zunächst werden die Pseudonyme der Teilnehmer der Transaktion durch den Sensor 635 erfasst und an das Anwendungsprogramm 634 weitergegeben. Hierbei wird vorzugsweise auch der Verschlüsselungsschlüssel weitergegeben. Zusätzlich erfolgt eine Erfassung der Transaktionsparameter durch das Anwendungsprogramm 634 sowie eine Erfassung der GUID 632 des Endgeräts 630. Die in der Datenbank 631 enthaltene Pseudonyme des ersten Teilnehmers werden ebenfalls durch das Anwendungsprogramm 634 ausgelesen und dem Transaktionsdatensatz hinzugefügt. Der so entstandene Datensatz bestehend aus dem zweiten Pseudonym des ersten Teilnehmers, den Pseudonymen der weiteren Teilnehmer, der GUID des Endgeräts, sowie den Transaktionsparametern, wird nun mit dem Verschlüsselungsschlüssel des ersten Teilnehmers verschlüsselt 633. Der verschlüsselte Transaktionsdatensatz wird nun als Chiffrat zusammen mit dem ersten Pseudonym des ersten Teilnehmers Bestandteil einer Transaktionsanfrage, die entlang des Kommunikationskanals 603 an den Transaktionsserver 620 übermittelt wird.

Dieser führt die Entschlüsselung 622 des Chiffrats durch. Anschließend extrahiert der Transaktionsserver die Pseudonyme der Teilnehmer sowie die GUID des Endgeräts, auf welchem der Transaktionsdatensatz erstellt wurde, aus dem entschlüsselten Transaktionsdatensatz. Es wird eine erste Zuordnungsmanipulationsprüfung durchgeführt gemäß Ausführungsformen der Erfindung durchgeführt, wie beispielsweise unter Bezugnahme auf Figuren 1-3 beschrieben ist. Die zu den Pseudonymen gehörenden Transaktionsstammdaten werden nun durch den Transaktionsserver 620 am Notarserver 610 angefragt 601. Weiter wird auch die zuvor extrahierte GUID an den Notarserver übermittelt.

Der Notarserver 610 kann beispielsweise zuerst die erste Zuordnungsmanipulationsprüfung durchführen und im Anschluss daran zusätzlich prüfen, ob die erhaltene GUID im Datensatz des ersten Teilnehmers im Register des Notarservers hinterlegt ist. Ist dies nicht der Fall, wird das Verfahren abgebrochen, da davon ausgegangen werden muss, dass das Anwendungsprogramm gegen den Willen des ersten Teilnehmers verwendet wird, beispielsweise aufgrund einer Extraktion des Anwendungsprogramms vom Endgerät des ersten Teilnehmers. Stimmt jedoch die empfangene GUID mit der GUID überein, welche im Datensatz des ersten Teilnehmers enthalten ist, wird eine Authentifizierungsanfrage 604 an die Endgeräte 630 der weiteren Teilnehmer gesendet. Wird die Authentifizierungsanfrage von wenigstens einem Teilnehmer nicht bestätigt, so wird das Verfahren abgebrochen. Wird jedoch die Authentifizierungsanfrage von allen Teilnehmern bestätigt, ordnet der Notarserver den Pseudonymen die entsprechenden Teilnehmer mit den jeweiligen Transaktionsstammdaten zu und übermittelt die Transaktionsstammdaten der Teilnehmer 602 an den Transaktionsserver 620. Dieser führt nun unter Verwendung der zuvor empfangenen Transaktionsparameter die Transaktion durch 621 oder stößt sie an.

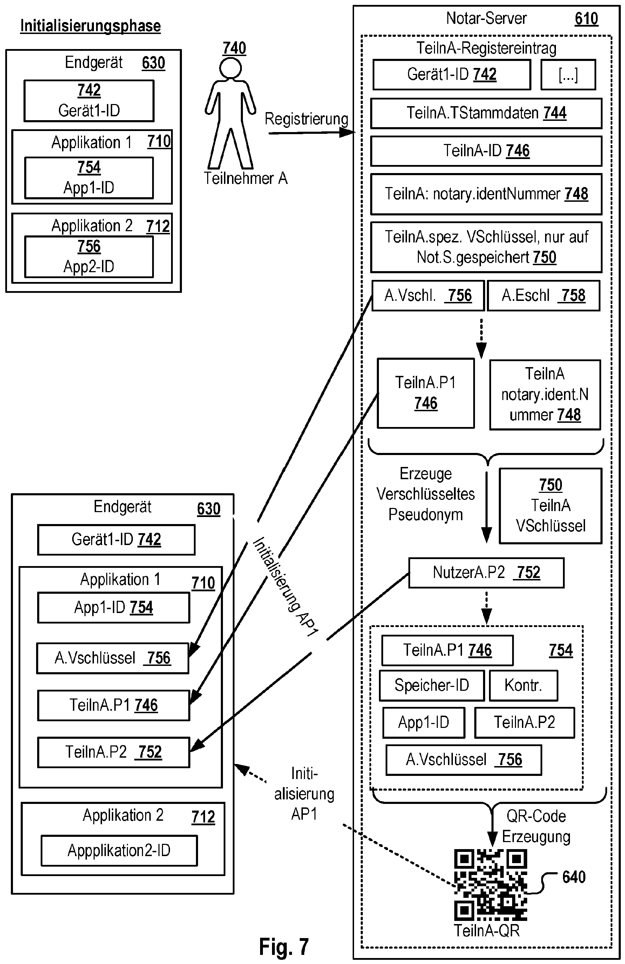

Figur 7 zeigt ein Blockdiagramm eines Endgeräts 630 und des Notarservers 610 während der Initialisierung des Anwendungsprogramms 710.

Auf dem Endgerät des Teilnehmers 740 können mehrere Anwendungsprogramme 710, 712 installiert sein, die unterschiedliche Anwendungsprogramm-IDs 754, 756 beinhalten. Das Endgerät kann zudem eine Geräte-ID, z.B. eine GUID 742 aufweisen, die optional Teil des Chiffrats wird und vom Notarserver daraufhin geprüft wird, ob die Geräte-ID für das jeweilige Anwendungsprogramm 710, 712 im Register des Notarservers hinterlegt ist.

Beispielsweise wird ein neuer Teilnehmer 740 auf dem Notarserver wie folgt registriert: es wird für den Teilnehmer eine globale, anwendungsprogrammübergreifende Teilnehmer-ID ("notary.ident-Nummer") 748 angelegt. Dieser Nummer kann z.B. eine Nummer sein, die für jeden neu registrierten Teilnehmer hochgezählt oder zufällig erzeugt wird und für den Teilnehmer einmalig ist. Sie ist nur dem Notarserver bekannt und wird niemals an andere Systeme kommuniziert.

Der globalen Teilnehmer-ID wird ein teilnehmerspezifischer, anwendungsspezifischer Zufallswert 746 zugeordnet, der als erstes Pseudonym (IDx1) dient ("pers.ident.number").

Für den Teilnehmer wird ein kryptographisches Paar aus einem Verschlüsselungsschlüssel 756 und einem dazu korrespondierenden Entschlüsselungsschlüssel 758 erzeugt. Die beiden Schlüssel 756 und 758 können symmetrische oder asymmetrische Schlüssel sein.

Außerdem wird der globalen Teilnehmer-ID ein anwendungsspezifischer, teilnehmerspezifischer kryptographischer Schlüssel 750 zugeordnet ("pers.ident-Key"). Beispielsweise wird dieser Schlüssel als zufällig generierter Schlüssel, z.B. als One Time Pad-Schlüssel, erzeugt. Auch dieser Schlüssel wird allein auf dem Notar-Server gespeichert. Der "pers.ident-Key" kann z.B. ein symmetrischer Schlüssel sein, der zur Verschlüsselung sämtlicher oder zumindest einiger der für diese Anwendung im Register hinterlegten Daten auf dem Notarserver verwendet wird. Die Daten werden mittels des "pers.ident-Key" temporär und spezifisch für den Teilnehmer und das Anwendungsprogramm entschlüsselt, die mittels des vom Transaktionsserver bereitgestellten anwendungsspezifischen ersten Pseudonyms identifiziert wurden. Diese Daten enthalten also das anwendungsprogrammspezifische zweite Pseudonym des Anmelders und die Transaktionsstammdaten. Nachdem diese Daten an den Transaktionsserver übermittelt wurden, werden die entschlüsselten Daten vom Notarserver wieder gelöscht, sodass die besagten Daten nur noch in der mittels des "pers.ident-Key" verschlüsselten Form vorliegen. Da die Ver- und Entschlüsselung des Pseudonyms durch die selbe Entität erfolgt, ist die Problematik, die eine Übermittlung des Schlüssels mit sich bringen würde, hinfällig.

Aus der notary.ident-Nummer 748 und der pers.ident-Nummer 746 wird unter Nutzung des pers.ident-Key 750 auf dem Notar-Server das zweite Pseudonym 752 des ersten Teilnehmers ("pers.ident-Code" bzw. "IDx2") erstellt und gespeichert.

Die pers.ident-Nummer 746 stellt als "erstes Pseudonym" in Klartextform das identifizierende Pseudonym, der pers.ident-Code stellt als "zweites Pseudonym" das zentrale Sicherheitsmerkmal für die Prüfung der Transaktionsanfrage auf Manipulation der Zuordnung von Transaktionsparametern zu den Teilnehmern dar.

Außerdem können in dem Register weitere teilnehmerspezifische und/oder anwendungsprogrammspezifische Daten vorhanden sein, insbesondere die Geräte-ID 742 eines für den Teilnehmer und/oder für das Anwendungsprogramm registrierten Endgerätes, Transaktionsstammdaten 744 des ersten Teilnehmers, und/oder Transaktionskontrolldaten. Die Transaktionskontrolldaten spezifizieren z.B. Rechte und/oder Rollen des Teilnehmers bei der Transaktion, Ort und Art und Umfang der Datenverarbeitung bestimmter Arten von Transaktionsparameter etc.

Nach einer Ausführungsform ist der Notarserver dazu konfiguriert, im Zuge der Registrierung des Teilnehmers für ein bestimmtes Anwendungsprogramm einen QR-Code ("ident.QR-Code") 640 zu berechnen, der teilnehmerspezifisch ist und anwendungsprogrammspezifisch ist und der das erste und zweite Pseudonym 746, 752 des Teilnehmers sowie optional weitere teilnehmerspezifische und/oder anwendungsprogrammspezifische Daten (z.B. Transaktionskontrolldaten) enthält bzw. codiert. Dieser QR-Code kann in dem Register als Bilddatei verknüpft mit einem Identifikator des Teilnehmers und mit einem Identifikator des Anwendungsprogrammes, für welches der QR-Code erzeugt wurde, gespeichert sein. Dieser QR-Code kann auch als weiteres Pseudonym des ersten Teilnehmers betrachtet werden, da es die Teilnehmerdaten nicht im Klartext enthält und sowohl für den Teilnehmer als auch die Anwendung spezifisch ist.

Das erste Pseudonym ("pers.ident-Nummer"), das zweite Pseudonym ("pers.ident-Code") und oder das als drittes Pseudonym verwendbare QR-Code "ident.QR-Code" 640 können in einer beliebig großen Anzahl für verschiedene Anwendungsprogramme vom Notarserver erzeugt und im Register für den jeweiligen Teilnehmer hinterlegt bzw. gespeichert werden. Sie sind unterschiedliche Erkennungsmerkmale (Pseudonyme) des gleichen Teilnehmers.

Nach Ausführungsformen der Erfindung werden bei der erstmaligen Registrierung eines Anwendungsprogramms für einen bestimmten Teilnehmer die oben genannten Pseudonyme und Schlüssel jeweils für diesen Teilnehmer und dieses Anwendungsprogramm spezifisch erstellt und einige dieser Daten, insbesondere das erste und zweite Pseudonym und der Verschlüsselungsschlüssel 756, in das betreffende Anwendungsprogramm eingelesen. Dies kann durch manuelle Eingabe erfolgen.

Beispielsweise kann das dadurch geschehen, dass der Notarserver das erste und zweite Pseudonym und den Verschlüsselungsschlüssel über einen geschützten Kommunikationskanal an das Anwendungsprogramm überträgt, wie dies mit den durchgezogenen Pfeilen angedeutet ist.

Alternativ dazu kann die Übertragung auch dadurch erfolgen (gestrichelter Pfeil), dass der Notarserver den QR-Code 640 erzeugt, in dem das erste und zweite Pseudonym, der Verschlüsselungsschlüssel und optional noch weitere Daten codiert sind, und diesen QR-Code ausgibt. Beispielsweise kann der QR-Code auf einem postalisch verschickten Aufforderungsschreiben, die Applikation zu registrieren, an den Teilnehmer versendet werden. Der QR-Code kann auch per E-Mail an den Teilnehmer versendet oder auf einem Webportal des Notarservers dem Teilnehmer über eine Webseite angezeigt werden. Durch Einlesen des QR-Codes als digitales Bild durch eine entsprechende Programmschnittstelle des Anwendungsprogramms oder durch einen optischen Sensor des Endgeräts, auf dem das Anwendungsprogramm instanziiert ist, können das erste und zweite Pseudonym auf einfache und fehlersichere Weise vom Notarserver an das zu neutralisierende Anwendungsprogramm übertragen werden. Insbesondere das Eintippen langer Folgen alphanumerischer Zeichen ohne semantischen Bedeutungsgehalt ist sehr fehleranfällig, sodass die Erfassung der Pseudonyme des Teilnehmers mittels eines QR-Codes die Zuverlässigkeit des Initialisierungsprozesses deutlich erhöhen kann.

Anstelle eines QR-Codes können für sämtliche hier beschriebenen Ausführungsformen auch andere graphische Codes verwendet werden, z.B. Barcodes, etc.

Die Kodierung, Speicherung und Übermittlung des ersten und zweiten Pseudonyms in Form eines QR-Codes erleichtert also die Erfassung der ersten und zweiten Pseudonyme im Zuge der Initialisierung des Anmeldungsprogramms, da ein QR-Code mit geringem Aufwand visuell erfasst werden kann, beispielsweise durch die Kamera eines Smartphones oder Tablet-PCs.

Gemäß Ausführungen ist es zudem möglich, den besagten anwendungsprogrammspezifischen QR-Code eines Teilnehmers auch zu nutzen, um das Pseudonym des zweiten Teilnehmers der Transaktion durch das Anwendungsprogramm zu erfassen. Beispielsweise kann auf einem medizinischen Kit zur Erfassung biologischen Probenmaterials (Blut, Gewebe, Urin, Speichel, etc.) ein QR Code aufgedruckt sein, der gemäß des hier beschriebenen Verfahrens vom Notarserver erzeugt wurde und der das erste und zweite Pseudonyms des zweiten Teilnehmers enthält, wobei der zweite Teilnehmer hier z.B. eine Datenbank sein kann, die zur Speicherung der auf Basis der biologischen Probe erhobenen medizinischen Daten (Metabolitwerte einer Blutprobe, Sequenzdaten die aus einer Speichelprobe gewonnen wurden, etc.) dient.

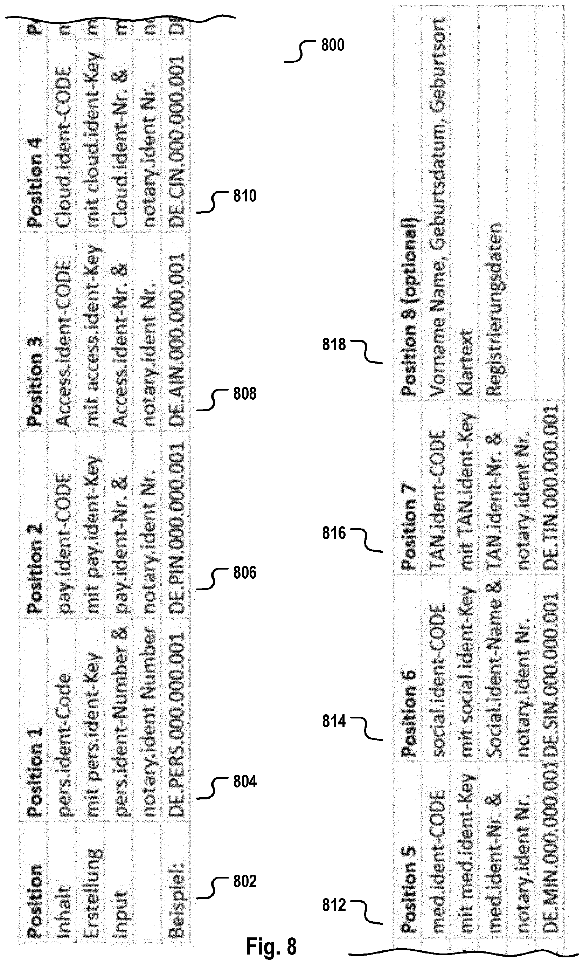

**Figur 8** zeigt ein Blockdiagramm des Inhalts des Registereintrags eines Teilnehmers für mehrere unterschiedliche Anwendungsprogramme.

Gemäß der hier abgebildeten Ausführungsform beinhaltet der Teilnehmerdatensatz eines Teilnehmers im Register des Notarserver mehrere anwendungsprogrammspezifische Teildatensätze, wobei jeweils die erste Zeile ein anwendungsspezifisches Teilnehmerpseudonym, die zweite Zeile die Art dessen Erstellung und die dritte Zeile den für die Erstellung des Pseudonyms verwendeten Input beschreibt. Die letzte Zeile zeigt jeweils ein Beispiel, wie das betreffende Pseudonym konkret aussehen kann:
a) Daten für ein medizinisches Anwendungsprogramm: die "med.ident" ist ein erstes Pseudonym, das den Teilnehmer z.B. als Healthcare-Professional mit definierten Rollen- und Rechten identifiziert
b) Daten für ein Bezahlprogramm: die "pay.ident" identifiziert eine Bankverbindung einer Organisation differenziert nach deren Betriebsstätten oder nach einzelnen Kassen in einer Betriebsstätte;
c) Daten für den Zugriff auf einen Cloud-Speicher: die "cloud.ident" ist ein Identifier für zu nutzenden Cloud-Speicher; durch Einlesen eines cloud.ident-Codes wird ein Datenspeicherungsziel (transaktionslimitierender Datensatz) hinzugefügt, ersetzt oder gelöscht; Mitarbeiter von Cloud-Anbietern können besondere Rechte zugewiesen werden)
d)Daten für ein Zutrittskontrollprogramm: die "access.ident" ist ein Identifier für ein digitales Zutrittssystem;
e) Daten für die pseudonymisierte Nutzung von Sozialen Medien: die "social.ident" dient als Identifikator für die Registrierung in Sozialen Services; alle im Service geschriebenen Beiträge sind verschlüsselt und können nur von Teilnehmern, deren Social. ident-Code freigeschaltet wurde, im Klartext gelesen werden; Das Anwendungsprogramm kann eine mit "Facebook-/ WhatsApp/ u.a.-Frame" kompatible Client-App sein;
f) Daten für eine Logistik-Dienstleistung: die "LOG.ident" ist ein spezifischer Code, der für logistische Dienstleister vergeben wird, die Waren transportieren.
g) Daten für sonstige Transaktionen sonstiger Anwendungsprogramme: die "TAN.ident" ist ein spezifischer Code für sonstige Transaktionsarten der Zukunft, die angebunden werden sollen.

Der Teilnehmer kann bei der erstmaligen Registrierung entscheiden, ob er im ident.QR-Code seinen auf dem Notarserver hinterlegten Vornamen und Namen bzw. zusätzlich Geburtsdatum und -ort hinterlegen möchte.

Die notary.ident-Nummer und der pers.ident-Key werden niemals herausgegeben. Die pers.ident-Nummer wird als Pseudonym und der pers.ident-Code für die Authentifizierung eines Teilnehmers verwendet. Analoges gilt für die Pseudonyme und Schlüssel der anderen Anwendungsprogramme.

Für jeden der Teildatensätze a)-g) erzeugt der Notarserver einen QR-Code, der das jeweilige erste Pseudonym (z.B. pers.ident-Nummer oder pay-ident-Nr oder Access-Ident-Nr), das jeweilige zweite Pseudonym (z.B. pers.ident.Code oder pay.ident.Code oder Access. ident. Code etc) und vorzugsweise auch einen Verschlüsselungsschlüssel (hier nicht gezeigt) in kodierter Form beinhaltet.

Nach Ausführungsformen der Erfindung ist das Anwendungsprogramm dazu ausgebildet, einen vom Notarserver erzeugten QR-Code zu dekodieren, bzw. der Notarserver ist dazu ausgebildet, den QR-Code so zu erstellen, dass das Anwendungsprogramm diesen dekodieren kann.

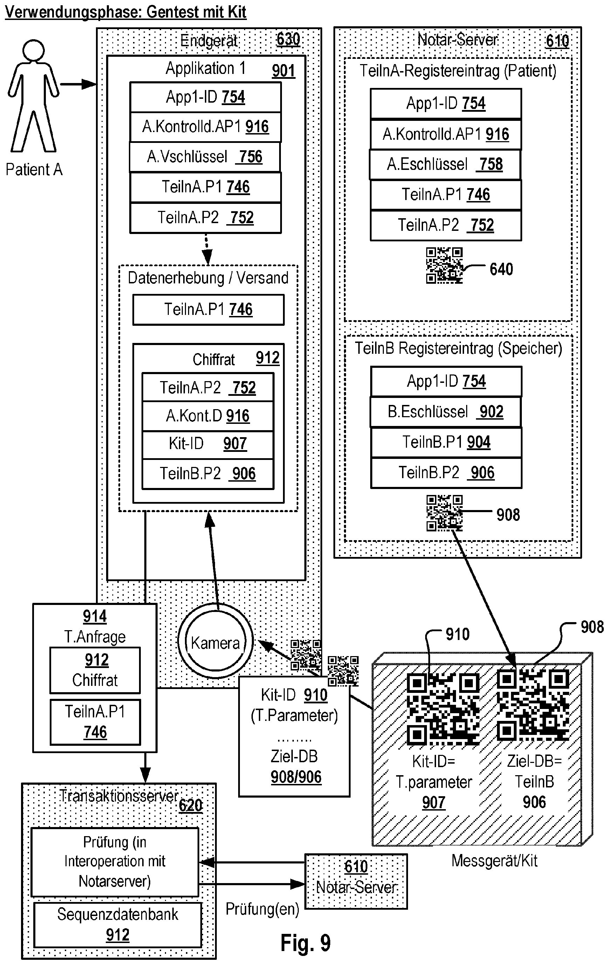

**Figur 9** zeigt ein Blockdiagramm eines Endgeräts und des Notarservers während der Einleitung einer Transaktion.

Die Initialisierung des Anwendungsprogramms "Applikation 1" kann erfolgen wie z.B. für Figur 7 beschrieben. Nach erfolgter Initialisierung sind für den "ersten Teilnehmer", hier ein "Patient A", ein erstes und ein zweites Pseudonym 746, 752 sowohl im Register des Notarservers als auch in dem Anwendungsprogramm hinterlegt. Ein Anwendungsprogrammspezifischer Verschlüsselungsschlüssel 756 ist in dem Anwendungsprogramm gespeichert, der zugehörige Entschlüsselungsschlüssel 758 im Register des Notarservers. Das Anwendungsprogramm dient dazu, einem Patienten zu ermöglichen, eine Genomsequenzierung des eigenen Genoms durchführen zu lassen, ohne hierfür notwendigerweise einen Arzt konsultieren zu müssen. Der Patient A kann z.B. bei einem Sequenzierungsdienstleister ein "Probenset", hier als "Kit" bezeichnet, postalisch bestellen. Das Kit enthält z.B. Wattestäbchen für einen Schleimhautabstrich sowie eine Anleitung, wie dieser Abstrich durchgeführt werden kann und wohin der Abstrich gesendet werden soll.

Auf dem Kit oder der beiliegenden Bedienanleitung sind zwei QR-Codes aufgedruckt: ein QR-Code 908 ist ein QR Code, der zumindest ein Pseudonym eines zweiten Teilnehmers einer geplanten Transaktion kodiert. Der zweite Teilnehmer ist hier eine Datenbank 906 zur Speicherung der Genomdaten, die von dem Sequenzierdienst betrieben wird, wobei die Datenbank auf dem Transaktionsserver 620 instanziiert wird oder mit dem Transaktionsserver operativ verbunden ist, sodass der Transaktionsserver lesend und schreibend auf die Sequenzdatenbank zugreifen kann. Der QR-Code enthält nicht alle Daten, die nötig sind, um die Datenbank zu identifizieren wie z.B. IP-Nummer des Rechners, Portnummer, Datenbankname etc. Vielmehr sind die Daten, die nötig sind, damit sich beispielsweise ein SQL Client mit der Datenbank verbinden kann, als Transaktionsstammdaten des Teilnehmers B in dem Notarserver sicher gespeichert, um die Sicherheit der Sequenzdatenbank zu erhöhen.

Außerdem ist auf dem Kit oder der Bedienanleitung ein weiterer QR-Code 910 aufgedruckt. In diesem sind Transaktionsparameter in Form einer Sequenzierprojekt-ID kodiert. Die Sequenzierprojekt-ID ist eine ID, unter welchen die bei der Sequenzierung erhaltenen Genomdaten des Patienten A gespeichert werden.

Die "Applikation 1" ist eine vom Sequenzierdienst angebotene App, die der Initiierung und Abwicklung des Sequenzierprojektes dient.

Nachdem der Teilnehmer die Sequenzier-App für sich initialisiert hat und in der App wie auf dem Notarserver die entsprechenden Daten hinterlegt sind, scannt der Patient über eine Kamera, auf die die Sequenz-App Zugriff hat, die beiden QR-Codes 908, 910 ein und decodiert diese, um das Pseudonym der Sequenz-Datenbank sowie die Transaktionsparameter in Form der Sequenzprojekt-ID zu erfassen. Der Teilnehmer folgt der Bedienanleitung und schickt den Schleimhautabstrich in einem Rückumschlag, der z.B. ebenfalls den QR-Code 910 mit der Sequenzprojekt-ID enthalten kann, postalisch an den Sequenzierungsdienstleister. Vorzugsweise ist die Probe mit dem Schleimhautabstrich nur mit dem QR-Code 910, nicht jedoch mit dem Klarnamen des Patienten versehen. Es ist dadurch sichergestellt, dass der Sequenzdienstleister oder zumindest die Personen, die mit der Probenhandhabung betraut sind, die Identität des Patienten A nicht kennen.

Außerdem erzeugt der Teilnehmer über die Sequenzier-App eine Transaktionsanfrage 914, die ein Chiffrat 912 und ein erstes Pseudonym 746 des Patienten A enthält. Das Chiffrat enthält die Transaktionsparameter 907 in Form der Kit-ID, das zweite Pseudonym 752 des Patienten A sowie ein Pseudonym 902 der Sequenzdatenbank, die in dem QR Code 908 codiert war. Vorzugsweise enthält das Chiffrat zudem noch Transaktionskontrolldaten 916. Die Transaktionsanfrage kann z.B. durch Aufruf einer entsprechenden Funktion der Sequenzierungs-App über die GUI der App initiiert werden.

Die Sequenzierungs-App sendet die Transaktionsanfrage an den Transaktionsserver. Dieser sendet das erste Pseudonym 746 an den Notarserver. Es wird sodann eine erste Zuordnungsmanipulationsprüfung vom Notarserver oder Transaktionsserver durchgeführt. Die Durchführung dieser ersten Zuordnungsmanipulationsprüfung wurde z.B. mit Verweis auf Figuren 1-3 beschrieben.

Vorzugsweise wird zudem eine zweite Zuordnungsmanipulationsprüfung auf Basis der Transaktionskontrolldaten in analoger Weise durchgeführt.

Außerdem ist der Notarserver dazu konfiguriert, spätestens nachdem die erste und optional auch die zweite Zuordnungsmanipulationsprüfung positiv (Ergebnis: keine Manipulation) abgeschlossen wurde, die für die Sequenzier-App im Register gespeicherten Transaktionskontrolldaten 916 zu analysieren. Beispielsweise könnten diese vorsehen, dass Sequenzdatenbezogene Transaktionen immer die explizite Bestätigung durch zumindest denjenigen Teilnehmer, von dem die Sequenzdaten stammen, benötigen. In diesem Fall würde der Notarserver eine Bestätigungsanfrage an die Sequenzier-App auf dem Endgerät 630 des Patienten schicken, und erst nach Erhalt einer Bestätigung die Transaktionsstammdaten des Patienten und des Sequenzierdienstes an den Transaktionsserver weitergeben.

Schließlich führt der Transaktionsserver die angeforderte Transaktion durch, wenn alle Zuordnungsmanipulationsprüfungen positiv verliefen und der Patient die angeforderte Transaktion bestätigt hat. Die Ausführung der Transaktion bewirkt, dass in der Sequenzierdatenbank ein neuer, noch leerer Datensatz angelegt wird, der die Kit-ID 907 als Schlüssel bzw. Identifikator beinhaltet. Sobald der Sequenzierdienst die Sequenzierung der Proben-DNA beendet hat, schreibt er die genomischen Daten in den durch die Kit-ID 907 identifizierten Datensatz der Sequenzdatenbank.

Somit kann der Patient die Genomsequenzierung weitgehend anonym und damit auf sichere Weise durchführen. Den Mitarbeitern im Sequenzierlabor ist der Klarname des Patienten nicht bekannt und auch in der Sequenzdatenbank ist der Klarname nicht vorhanden. Der Notarserver kann zwar dem Patienten und anderen berechtigten Teilnehmern die exakte Adresse der Sequenzdatenbank (Transaktionsstammdaten des zweiten Teilnehmers) mitteilen, ist jedoch selbst nicht im Besitz der Sequenzdaten. Es wird somit ein sehr sicheres und flexibles System zur Verwaltung und Speicherung sensibler Daten bereitgestellt. Die Sequenzier-App kann noch weitere Funktionen haben und z.B. zur Bezahlung der Sequenzierdienstleistung genutzt werden. Hierfür ist es nur erforderlich, dass die Sequenzier-App neben den Pseudonymen und Schlüssel für die Erstellung sequenzprojektbezogener Transaktionsanfragen auch Pseudonyme und Schlüssel für die Erstellung zahlungsbezogener Transaktionen beinhaltet.

Gemäß mancher Ausführungsformen werden mehrere Prüfungen durchgeführt, die im Folgenden als "Stufen" beschrieben werden, bevor der Notarserver die Transaktionsstammdaten der Teilnehmer an den Transaktionsserver übermittelt:
Stufe 1: Beschränkung von Transaktionen auf registrierte Geräte, autorisierte Teilnehmer und registrierte Software.
   Nach Ausführungsformen können zu einem pers.ident-Code/ einer pers.ident-Nummer können eine vordefinierte maximale Anzahl von mobilen und/oder stationären Endgeräten registriert werden, z.B. 5 mobile und 5 stationäre Endgeräte. Der pers.ident-Code dient zur Mehr- Faktoren Authentifizierung eines Teilnehmers. Die pers.ident-Nummer dient als Pseudonym für den Teilnehmer. Autorisierte Teilnehmer: Daten können im ident.QR-Code-Verfahren nur verarbeitet werden, wenn ein Teilnehmer auf dem Notar-Server registriert ist und zur Datenverarbeitung vom Eigentümer der Daten autorisiert wurde. Registrierte Software: Die Datenverarbeitung der primär unbrauchbar gespeicherten Daten kann nur mit Software, die für das ident.QR-Code-Verfahren registriert wurde, erfolgen. Der Zugangsschutz zu einer Applikation, die das ident.QR-Code-Verfahren nutzt, kann z.B. wie folgt erfolgen: 1) Download der Software 2) Software-spezifische Nutzung der ident.Codes. Das ident.QR-Code-Verfahren ermöglicht z.B. drei Funktionen: 1) Schutz der Transaktionsparameter: Die Transaktionsparameter werden personen-individuell verschlüsselt gespeichert und sind damit primär unbrauchbar für die weitere Datenverarbeitung.
2) Schutz der Eigentümerschaft: Der gespeicherte Datensatz ist und bleibt dauerhaft mit dem Eigentümer der Daten verbunden, da der pers.ident-Code immer gemeinsam mit dem zugehörigen Datensatz verschlüsselt und gespeichert wird.
3) Datenverarbeitung nur nach Einwilligung: Eine Nutzung nach dieser Methode gespeicherter Daten ist nur möglich, wenn der Eigentümer der Daten hierzu sein Einverständnis gegeben hat. Durch Widerruf der Einwilligung (bei zeitlich oder räumlich beschränkter Nutzung) wird die Datenverarbeitung unterbunden, ohne dass zwingend an dem Speicherort der Daten eine Löschung der Daten erfolgen muss.

Gemäß mancher Ausführungsformen wird mit dem gleichen Authentifizierungsverfahren eine Vielzahl an Apps im Gesundheitswesen bereitgestellt, die automatisch die strengen Datenschutzvorgaben in Deutschland/ Europa (DSGVO) ohne eigenen Entwicklungsaufwand erfüllen können. Diese Software wird einem kooperierenden Unternehmen (Unterzeichnung einer Nutzungsrechtevereinbarung) über eine "Download-Plattform" zur Verfügung gestellt.

Über die Sequenzier-App kann auch eine Abfrage zur Bereitschaft von Datenspenden gesteuert werden, z.B. um die Genomdaten in pseudonymisierter Form der Forschung zur Verfügung zu stellen.

Jede Art von Software, die das hier beschriebene Verfahren zur Anbahnung und Durchführung von Transaktionen nutzt, erhält auf dem Notar-Server eine Software-ID. Neu registrierte Software wird den auf dem Notarserver registrierten Teilnehmern als neues Transaktionsverfahren zum Download angeboten.

Die Art und der Umfang der Datenverarbeitung, die durch das hier beschriebene Verfahren geschützt wird (damit deren Zweckbindung), wird gemäß Ausführungsformen der Erfindung durch die Software auf dem Endgerät definiert und dem Teilnehmer im Rahmen der Registrierung für diese Software offengelegt: Eine App, die Asthma-Daten verarbeitet und das hier beschriebene Transaktions-Verfahren nutzt, überträgt nur Asthma-Daten, die der Teilnehmer zuvor individuell festlegen kann. Eine Blutdruck-Tagebuch-App sammelt dagegen Blutdruckdaten. Wer diese Daten erhalten soll (ein Arzt über dessen med.ident-Code; ein Datenspeicherort über dessen Cloud.ident-Code), wird dadurch definiert, dass der ident.QR-Code des Empfängers in der "Daten-Senden"-Funktion der App eingelesen wird.

Gemäß einer Ausführungsform wird die Funktionalität zur Registrierung des Anwendungsprogramms beim Notarserver und zum Austausch von Pseudonymen und anderen Daten während der Initialisierung in der Form einer Programmbibliothek oder Programmmoduls bereitgestellt, sodass sich der Anwendungsentwickler nur noch um die eigentliche Geschäftslogik des Anwendungsprogramms kümmern muss. Hierdurch ergeben sich neue Möglichkeiten, viele Produkte gleicher Grundstruktur für verschiedene medizinische Anwendungsgebiete in kurzer Zeit zu entwickeln. Für welche Daten in einer dem Teilnehmer "fremden" App (d.h. Software, die er noch nicht selbst nutzt) die Einwilligung zur Datenverarbeitung gegeben werden soll, wird dabei durch Zusendung einer DSGVO-konformen Einverständniserklärung auf das zur pers.ident- Nummer registrierte Endgerät ermöglicht. Beispielsweise kann unter Nennung aller Daten, für die Zugriff aus/ in die ePA gewährt werden soll, und unter Nennung des Zwecks der Datenverarbeitung nach Einlesen des ident.QR-Codes das Einverständnis durch Bestätigung auf einem registrierten Endgerät "revisions-sicher" gegeben werden. Damit ist es dem Versicherten, der seinen ident.QR-Code in eine kooperierende App einliest, auch möglich, sein Einverständnis zum Datenaustausch allein für definierte Daten zu geben.

Bei welcher Funktion der App das Einlesen des ident.QR-Codes (im obigen Beispiel also Code 908) stattfindet, kann darüber hinaus gemäß Ausführungsformen der Erfindung die Art der Datenverarbeitung bestimmen. Die Art des Anwendungsprogramms ("App") im Allgemeinen und der Funktionen im Speziellen bestimmen damit den Umfang der Daten und die Art der Datenverarbeitung, für die das Einverständnis zur Datenverarbeitung durch einen Teilnehmer des ident.QR-Code-Verfahrens erklärt wird.

Die Herausforderung bei der Zusammenführung der Daten aus externen Quellen in die elektronische Patientenakte (ePA) eines Versicherten besteht in der Gewährleistung der Datenintegrität (Schnittstellendefinition, dass nur Daten des gleichen Datentyps in der Akte am selben Ort gespeichert werden) und dem zuverlässigen Auffinden des zugehörigen Speicherorts (in welche Datenbank sollen die Daten gespeichert werden?). Gemäß Ausführungsformen der Erfindung werden die Datenintegrität und der Speicherort über die Standardisierung mittels des hier beschriebenen Transaktionsverfahrens und die Verwendung von Applikationsident.Codes und/oder Funktionsident.Codes erreicht. Pro Funktionsregistrierung (pay.ident; access.ident; med.ident; etc.) kann z.B. eine Landeskennung (zweistellig, DE für Deutschland) und eine laufende Nummer (001 bis 999) vergeben werden, die die jeweiligen ident.QR-Code nutzen kann (d.h. je ident-Funktion können 999 Anwendungen (bei Verwendung von Buchstaben entsprechend mehr) je Land Verwendung finden, ohne dass neue ident.QR-Codes/ -Nummern herausgegeben werden müssen). Der pers.ident-Code authentifiziert also den Teilnehmer, der Funktions-ident-Code den User mit besonderen Rechten in einer spezifischen Art der Anwendung: pay.ident = Zahlungabwicklung, Rollen & Rechte für Mitarbeiter von Finanzdienstleistern med.ident = medizinische Datenverarbeitung, Healthcare-Professionals werden über die med.ident-Nummer identifiziert und erhalten qualifikationsbezogen Rollen und Rechte der Datenverarbeitung; Cloud.ident = Datenspeicherung in der Cloud, Mitarbeiter von Cloud-Service-Anbietern und bei Bedarf auch autorisierte staatliche Behörden erhalten gesonderte Rechte; Access.ident = Zutritts- und Zugangsverwaltung, Mitarbeiter der Anbieter erhalten Rollen wie Aufträge zur Abarbeitung von Aufgaben oder Rechte, wie Zutritt zu definierten Mobilien/ Immobilien; Log.ident= logistische Dienstleistung, z.B. Probentransport; Social.ident = Schutz vor unberechtigter Datennutzung in sozialen Medien durch Verschlüsselung der Daten auf dem Server der Anwendung und Entschlüsselung der Daten für berechtigte Teilnehmer, Rollen und Rechte können definiert werden;

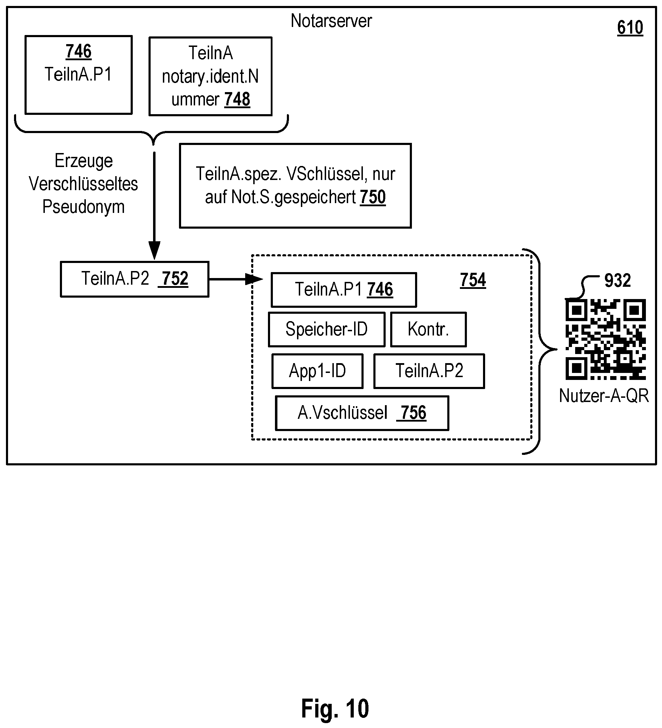

**Figur 10** zeigt ein Blockdiagramm bezüglich der Ableitung eines graphischen Codes 932 aus anwendungsprogrammspezifischen Teilnehmerdaten.

Die Ableitung des QR Codes geschieht vorzugsweise während der Initialisierung eines Anwendungsprogramms für einen bestimmten Teilnehmer, wie dies z.B. bereits unter Bezugnahme auf Figur 7 beschrieben wurde.

Der Notarserver erstellt im Zuge der Registrierung des Teilnehmers für ein bestimmtes Anwendungsprogramm ein anwendungsspezifisches erste Pseudonym ("pers.ident-Nummer") 746. Durch Anwendung eines "Pseudonymableitungsschlüssels 750, der teilnehmerspezifisch ist und geschützt gespeichert ist und den Notar-server niemals verlässt, auf das erste Pseudonym 746 wird das zweite Pseudonym ("pers.ident-Code") 752 erzeugt. Eine Gesamtheit aus erstem 746 und zweitem 752 Pseudonym, dem Verschlüsselungsschlüssel 756 und optionalen weiteren Daten wie z.B. anwendungsprogrammspezifische und/oder globale Transaktionskontrollparameter wird in Form eines QR-Code "ident.QR-Code" 640, 932 codiert, der als weiteres Pseudonym verwendbar ist.

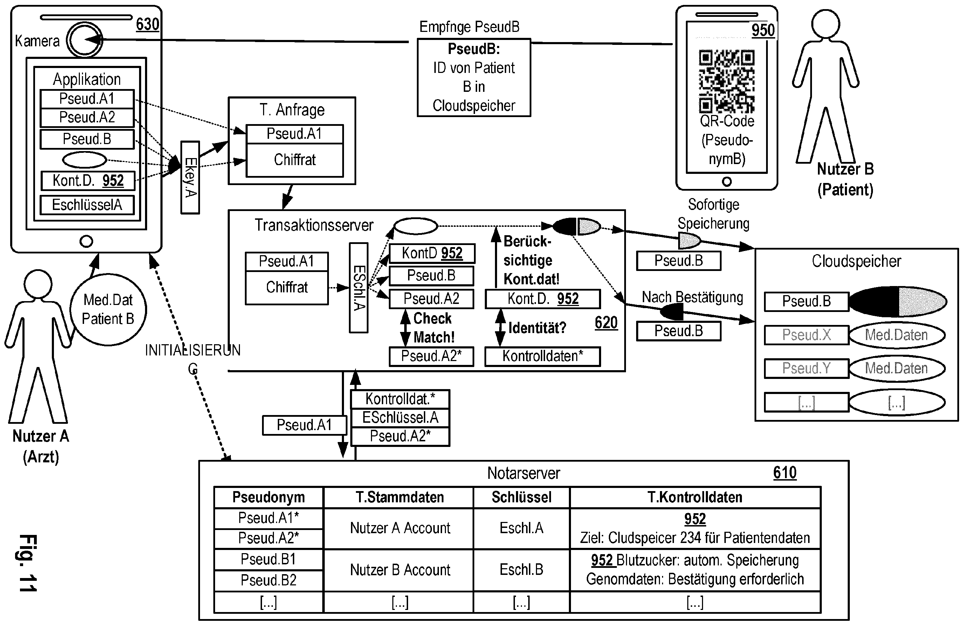

**Figur 11** zeigt ein Blockdiagramm eines Systems mit zusätzlicher Prüfung der Transaktionskontrolldaten. Das System beinhaltet einen Notarserver 610, einen oder mehrere Transaktionsserver 620 sowie ein Endgerät 630 eines Teilnehmers, in diesem Fall ein Arzt A. In funktionaler Hinsicht entsprechen der Notarserver, der Transaktionsserver und das Endgerät den bereits beschriebenen Ausführungsbeispielen, wobei das System in dem in Figur 11 gezeigten Beispiel für ein Anwendungsszenario verwendet wird, bei welchem das Anwendungsprogramm ("Applikation") für den Arzt A initialisiert wurde und dafür verwendet wird, die medizinischen Daten verschiedener Patienten, z.B. Patient "B", in der jeweiligen elektronischen Patientenakte des Patienten auf einem zentralen Speicherdienst (Cloudspeicher) zu speichern.

Im Zuge der Initialisierung der Applikation werden die Pseudonyme und der Verschlüsselungsschlüssel des Arztes A in die Applikation eingelesen und dort bleibend gespeichert. Beispielsweise kann dies dadurch erfolgen, dass auf einem Dokument, welches den Teilnehmer A als Arzt ausweist, ein vom Notarserver für den Arzt erstellter graphischer Code gespeichert ist, der die Pseudonyme, den Verschlüsselungsschlüssel und optional auch Transaktionskontrolldaten beinhalten. Die Transaktionskontrolldaten können jedoch auch schon von Beginn an in der Applikation hinterlegt und optional durch den Arzt über eine GUI änderbar sein. Beispielsweise können die Kontrolldaten das Format angeben, unter welchem die Patientendaten in der Akte zu speichern sind, und Angaben dazu, ob und welche Informationen zu der Person oder der Praxis des Arztes verknüpft mit den medizinischen Daten des Patienten in der Patientenakte gespeichert werden sollen. Bei der Applikation kann es sich um ein Patientenverwaltungsprogramm handeln.

Nachdem die Applikation für den Arzt initialisiert ist, kann ein Patient (Teilnehmer B) die Praxis des Arztes aufsuchen und dort einen Ausweis vorlegen (z.B. Versichertenkarte, etc.), auf welcher ein vom Notarserver erzeugten graphischen Code mit einem Pseudonym des Patienten aufgedruckt ist. Alternativ dazu kann der graphische Code mit dem Pseudonym des Patienten auch auf einer Patienten-Applikation auf einem Endgerät 950 des Patienten, z.B. einem Smartphone, angezeigt werden. Durch das Einlesen des Codes des Patienten durch die Applikation wird das Ziel der Transaktion zur Speicherung von Patientendaten in einer elektronischen Patientenakte, nämlich die elektronische Patientenakte des Patienten B, erfasst. Der Sender der Transaktion, der Teilnehmer A, ist durch die im Zuge der Initialisierung des Anwendungsprogramms hinterlegten Pseudonyme ebenfalls festgelegt. Bei den Transaktionsparametern, die im Zuge der Transaktion in die Patientenakte gespeichert werden sollen, kann es sich z.B. um erfasste Symptome, Diagnosen und/oder vom Arzt verschriebene Medikamente handeln. Mit dem Verschlüsselungsschlüssel des Arztes wird ein Chiffrat erzeugt, das neben dem zweiten Pseudonym des Arztes auch ein Pseudonym des Patienten, die Transaktionsparameter und weitere Daten, z.B. die Transaktionskontrolldaten und/oder die GUID, enthält. Das Chiffrat und das erste Pseudonym des Arztes wird an den Transaktionsserver über ein Netzwerk gesendet und dort verarbeitet wie bereits für andere Beispiele beschrieben. In dem hier gezeigten Beispiel wird die erste Zuordnungsmanipulationsprüfung bezüglich der Identität des im Chiffrat enthaltenen Pseudonyms mit dem im Notarserver hinterlegten Pseudonym von Teilnehmer A im Transaktionsserver durchgeführt, es ist jedoch auch möglich, dass die Prüfung vom Notarserver durchgeführt wird. Zusätzlich zu der ersten Zuordnungsmanipulationsprüfung wird in funktional analoger Weise eine zweite Zuordnungsmanipulationsprüfung bezüglich der Identität der im Chiffrat enthaltenen Transaktionskontrolldaten 952 mit den im Notarserver hinterlegten Kontrolldaten durchgeführt. Dieser Schritt stellt sicher, dass die Kontrolldaten, welche die Ausführung der angeforderten Transaktion steuern (also z.B. angeben, in welchem Format, mit welchem Übertragungsprotokoll, auf welchem Datenbankserver oder Datenbank etc. die zu speichernden medizinischen Daten übertragen und gespeichert und/oder verarbeitet werden sollen), nicht auf dem Endgerät des Teilnehmers A oder nach der Entschlüsselung des Chiffrats auf dem Transaktionsserver manipuliert werden können. Beispielsweise wäre es denkbar, dass ein Angreifer, der erfolgreich in das Endgerät des Arztes oder den Transaktionsserver eindringt, dort die die Transaktion steuernden Kontrolldaten so manipuliert, dass die sensiblen medizinischen Daten an Dritte übermittelt oder verändert werden könnten. Dies wird dadurch verhindert, dass im Zuge der zweiten Zuordnungsmanipulationsprüfung geprüft wird, dass die Transaktionskontrolldaten, die als Bestandteil des Chiffrats mit der Transaktionsanfrage erhalten wurden, identisch sind zu den Kontrolldaten, die der Teilnehmer A und/oder der Entwickler des Anwendungsprogrammes auf dem Notarserver gespeichert hat. Nur wenn neben der ersten Zuordnungsmanipulationsprüfung bezüglich der Integrität des Pseudonyms von Teilnehmer A auch die zweite Zuordnungsmanipulationsprüfung bezüglich der Integrität der Transaktionskontrolldaten ergibt, dass die jeweiligen Daten nicht manipuliert wurden, wird die angeforderte Transaktion unter Berücksichtigung der Transaktionskontrolldaten durchgeführt. Beispielsweise können die Transaktionskontrolldaten vorsehen, dass Daten, die von einem bestimmten Typ von Anwendungsprogramm erstellt wurden, immer auf einem bestimmten Cloudspeicher gespeichert werden müssen. Diese Kontrolldatenanweisung kann ergänzt werden durch weitere Transaktionskontrolldaten, die anwendungsspezifisch oder transaktionstypspezifisch auf dem Notarserver hinterlegt sind und optional auch einzelnen Teilnehmern zugeordnet und von diesen nach erfolgreicher Authentifizierung am Notarserver geändert werden können. Beispielsweise kann der Patient in Form von personenbezogenen Transaktionsdaten für das Anwendungsprogramm beim Notarserver hinterlegt haben, dass Patientendaten, die DNA-Sequenzinformationen beinhalten, nur nach einer expliziten Bestätigung durch den Patienten in die Patientenakte (oder einen speziellen Sequenzdatenserver) gespeichert werden dürfen, wohingegen Blutdruckdaten ohne explizite Bestätigung des Patienten B in die eigene Patientenakte oder in eine der mehreren anderen Datenbanken geschrieben werden dürfen. Der Transaktionsserver führt jede angeforderte Transaktion so durch, dass die für diese Transaktion relevanten Kontrolldaten berücksichtigt werden. Stellt der Transaktionsserver beispielsweise fest, dass die medizinischen Daten, die in dem Chiffrat enthalten waren, sowohl aus Sequenzdaten als auch aus Blutdruckdaten bestanden, teilt der Transaktionsserver automatisch die medizinischen Daten des Patienten auf und speichert die Blutdruckdaten sofort in das in den Kontrolldaten spezifizierte Zielverzeichnis des Patienten, die Sequenzdaten dagegen erst nach expliziter Bestätigung durch Patient B. Die zweite Zuordnungsmanipulationsprüfung muss nicht sämtliche für eine Transaktion relevanten Kontrolldaten umfassen, sondern nur denjenigen Teil der Kontrolldaten, der als Teil des Chiffrats mit der Transaktionsanfrage übermittelt wurde. Darüber hinaus können auf dem Notarserver weitere Kontrolldaten hinterlegt sein, die z.B. in Antwort auf den Empfang des ersten Pseudonyms an den Transaktionsserver gesendet werden.

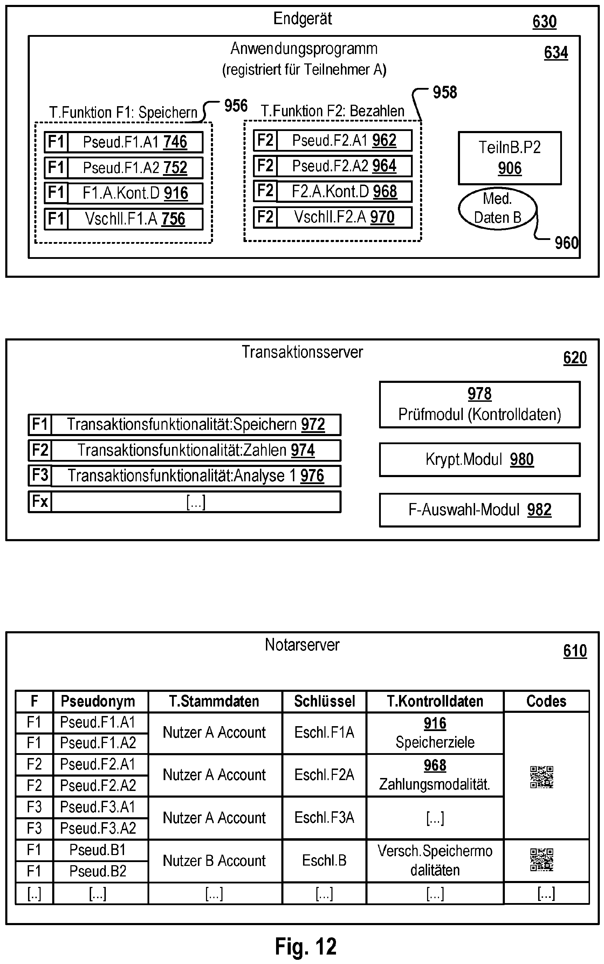

**Figur 12** zeigt ein Blockdiagramm eines Systems mit einem Notarserver, mindestens einem Transaktionsserver und einem Endgerät.

Auf dem Transaktionsserver 620 sind mehrere unterschiedliche Transaktionstypen, hier als "Transaktionsfunktionen" bzw. "Transaktionsfunktionalitäten" 972, 974, 976 bezeichnet, implementiert. Jeder Transaktionstyp ist eine einzeln ausführbare Software- und/oder Hardwarefunktionalität, deren Ausführung auf dem Transaktionsserver die Ausführung einer angeforderten Transaktion bewirkt oder veranlasst. Beispielsweise können die Transaktionstypen einen Transaktionstyp zur Speicherung medizinischer Daten umfassen und/oder einen Transaktionstyp zur Überweisung eines Geldbetrages und/oder einen Transaktionstyp zur Durchführung einer bestimmten Analyse (z.B. Assotiationsstudien von Geno- und Phenotypen) und zur Speicherung des Ergebnisses an einem bestimmten Speicherziel umfassen. Der Transaktionsserver hat ein Modul 980 zur Entschlüsselung von Chiffraten, die von einem oder mehreren Endgeräten als Bestandteil einer Transaktionsanfrage empfangen wurden. Der Transaktionsserver beinhaltet zudem ein Prüfmodul 978 zur Durchführung der ersten und optional auch ein oder mehreren zweiten Zuordnungsmanipulationsprüfungen und ein Auswahlmodul, das dazu ausgebildet ist, diejenigen der Transaktionstypen 972-976 zu identifizieren, die die Durchführung oder Veranlassung der jeweils angefragten Transaktion bewirken können. Falls das Prüfmodul 978 als Ergebnis zurückgibt, dass keinerlei Manipulation vorliegt und die Transaktionsanfrage integer ist und der Teilnehmer die benötigten Rechte hat, wählt das Auswahlmodul die entsprechende Transaktionstyp aus und führt diese aus.

Das Endgerät ist für einen ersten Teilnehmer A initialisiert. In dem hier dargestellten Beispiel unterstützt und integriert das Endgerät zwei der mehreren auf dem Transaktionsserver implementierten Transaktionstypen, nämlich die Funktionalität "F1" zur Speicherung von Patientendaten in einer Patientenakte und die Funktionalität F2 zur Überweisung eines Geldbetrages. Beispielsweise kann der Arzt das Anwendungsprogramm 634 nicht nur dazu verwenden, Patientendaten zu erfassen und zu speichern, sondern auch um bestimmte damit verbundene Zahlungen vorzunehmen. Beispielsweise kann der Arzt ein Labor mit der Durchführung einer Blutanalyse beauftragen und über die Bezahlfunktion des Anwendungsprogramm das Labor bezahlen. Zur Einleitung einer Patientendaten-Speicher-Transaktion bedient sich der Arzt (Teilnehmer A, für welchen das Programm 634 initialisiert ist) bzw. das Anwendungsprogramm 634 der Schlüssel 756, Pseudonyme 746, 752 und optional auch Transaktionskontrolldaten 916, die in ihrer Gesamtheit 956 dem Transaktionstypen "F1" 972 zugeordnet sind. Zur Einleitung einer Geldüberweisung bedient sich der Arzt bzw. das Anwendungsprogramm 634 der Schlüssel 970, Pseudonyme 962, 964 und optional auch Transaktionskontrolldaten 968, die in ihrer Gesamtheit 958 dem Transaktionstypen "F2" 974 zugeordnet sind.

Der Notarserver 610 beinhaltet ein Register, in welchem einzelnen registrierten Teilnehmern mehrere der Transaktionstypen sowie die jeweils zugehörigen Schlüssel, Pseudonyme und Kontrolldaten zugewiesen sind. Vorzugsweise sind zumindest das erste und zweite Pseudonym und optional auch der Verschlüsselungsschlüssel und/oder die Transaktionskontrolldaten, die zu zwei oder mehr der Transaktionstypengehören, in Form eines graphischen Codes kodiert und in dem Register für den jeweiligen Teilnehmer gespeichert. Vorzugsweise wird pro Anwendungsprogramm, das für einen bestimmten Teilnehmer initialisiert wurde, in dem Registereintrag des Teilnehmers ein einzelner graphischer Code erzeugt und verknüpft mit einem Identifikator dieses Anwendungsprogrammes gespeichert. Dieser eine graphische Code beinhaltet für alle Transaktionstypen, die dieses Anwendungsprogramm unterstützt, zumindest das erste und zweite Pseudonym des Teilnehmers, und optional weitere Daten wie z.B. Verschlüsselungsschlüssel, Transaktionskontrolldaten, GUID etc.

Der Notarserver ist gemäß bevorzugter Beispiele dazu konfiguriert, diesen anwendungsspezifischen Code dem jeweiligen Teilnehmer zur Verfügung zu stellen, z.B. über einen Ausdruck oder eine Client-App des Notarservers. Durch Vorzeigen des graphischen Codes an das Applikationsprogramm kann der Teilnehmer das Applikationsprogramm für sich initialisieren und/oder sich mit diesem Code bei dem bereits initialisierten Anwendungsprogramm und/oder bei dem Notarserver zu authentifizieren (z.B. um Konfigurationsdaten zu ändern).

Das in Figur 12 gezeigte Beispiel kann den Vorteil haben, dass die wesentlichen Funktionen zur Durchführung einer Transaktion für viele verschiedene Transaktionstypen in modularer Form bereitgestellt werden. Dies erleichtert die Entwicklung von Anwendungsprogrammen erheblich, denn diese können mit sehr geringfügigen Codeänderungen die bestehenden Transaktionstypenintegrieren. Es ist somit möglich, komplexe, z.B. datenschutzgesetzkonforme, Transaktionsabläufe auf einfache Art und Weise in neue Anwendungen zu integrieren.

## Patentansprüche

1. Verfahren zur Durchführung von Transaktionen zwischen einer Anzahl von Teilnehmern, wobei jedem der Teilnehmer in einem Register eines Notarservers mindestens zugeordnet ist:
• ein erstes eindeutiges Pseudonym des Teilnehmers,
• ein zweites eindeutiges Pseudonym des Teilnehmers;
• teilnehmerspezifische Transaktionsstammdaten;
• ein Entschlüsselungsschlüssel;
- Bereitstellen (702) mindestens eines Transaktionsservers (620),
- Bereitstellen eines Anwendungsprogramms (634), das für einen ersten der Teilnehmer (740) initialisiert (704) wurde, wobei das initialisierte Anwendungsprogramm beinhaltet:
• das erste Pseudonym (746) des ersten Teilnehmers;
• das zweite Pseudonyms (752) des ersten Teilnehmers;
• einen Verschlüsselungsschlüssel (756), der zu dem im Register für den ersten Teilnehmer gespeicherten Entschlüsselungsschlüssel (758) korrespondiert
- Erfassung (706) eines Pseudonyms (906) eines zweiten der Teilnehmer durch das Anwendungsprogramm (634);
- Übermittlung (708) von Transaktionsparametern an das Anwendungsprogramm (634),
- Erzeugung (710) eines Chiffrats (912) durch Verschlüsselung zumindest des zweiten Pseudonyms des ersten Teilnehmers, des Pseudonyms des zweiten Teilnehmers und der Transaktionsparameter mit dem Verschlüsselungsschlüssel durch das Anwendungsprogramm
- Übermittlung (712) einer Transaktionsanfrage (914), die das erste Pseudonym des ersten Teilnehmers im Klartext und das Chiffrat beinhaltet, von dem Anwendungsprogramm (634) an einen der Transaktionsserver (620),
- In Antwort auf den Erhalt der Transaktionsanfrage, Übermittlung (714, 601) zumindest des ersten Pseudonyms des ersten Teilnehmers von dem mindestens einen Transaktionsserver (620) an den Notarserver (610),
- Identifikation (716) des im Register gespeicherten Entschlüsselungsschlüssels anhand des ersten Pseudonyms des ersten Teilnehmers durch den Notarserver;
- Übermittlung (717) des teilnehmerspezifischen Entschlüsselungsschlüssels durch den Notarserver an den Transaktionsserver,
- Entschlüsselung (718) des Chiffrats mit dem teilnehmerspezifischen Entschlüsselungsschlüssel, um das zweite Pseudonym des ersten Teilnehmers, die Transaktionsparameter und das Pseudonym des zweiten Teilnehmers in entschlüsselter Form zu erhalten, durch den Transaktionsserver;
- Durchführung (720) einer ersten Zuordnungsmanipulationsprüfung bezüglich der Zuordnung der Transaktionsparameter zum ersten Teilnehmer, wobei die Zuordnung als manipuliert gilt, wenn das durch die Entschlüsselung des Chiffrats erhaltene zweite Pseudonym des ersten Teilnehmers nicht identisch ist zu dem im Register des Notarservers für den ersten Teilnehmer gespeicherten zweiten Pseudonyms;
- Übermittlung (724, 602) zumindest der Transaktionsstammdaten des ersten Teilnehmers an den mindestens einen Transaktionsserver (620) durch den Notarserver (610) nur dann, wenn die erste Zuordnungsmanipulationsprüfung ergibt, dass die Zuordnung nicht manipuliert wurde,
- In Antwort auf den Empfang der Transaktionsstammdaten des ersten Teilnehmers, Durchführung oder Veranlassung (728) der Transaktion zwischen dem ersten Teilnehmer und dem zweiten Teilnehmer unter Verwendung der Transaktionsparameter und den Transaktionsstammdaten durch den mindestens einen Transaktionsserver (620).

2. Das Verfahren nach Anspruch 1,
- wobei die Anzahl und Art des zumindest einen Transaktionsservers, der die Transaktionsstammdaten vom Notarserver erhält und/oder die Art der von dem zumindest einen Transaktionsserver durchgeführten Transaktionen individuell für einzelne Transaktionsparameter oder für die Gesamtheit der Transaktionsparameter durch teilnehmerspezifisch festgelegte Transaktionskontrolldaten bestimmt werden, die im Register des Notarservers verknüpft mit dem ersten Pseudonym des jeweiligen Teilnehmers gespeichert sind.

3. Das Verfahren nach einem Anspruch 2, wobei die Transaktionskontrolldaten angeben, welche anderen Teilnehmer oder Teilnehmergruppen welche Typen von Daten dieses Teilnehmer unter welchen Bedingungen lesen, verarbeiten, speichern, löschen, modifizieren oder weiterleiten dürfen, und/oder angeben, ob eine Bestätigung von dem ersten und/oder zweiten Teilnehmer eingeholt werden muss, bevor die Transaktion ausgeführt wird, wobei die Transaktionskontrolldaten vorzugsweise applikationsübergreifend und/oder Transaktionsparameterspezifisch definiert sind und berücksichtigt werden.

4. Das Verfahren nach einem der vorigen Ansprüche, wobei der Entschlüsselungsschlüssel, der jedem der Teilnehmer in dem Register zugeordnet ist, sowie der zu diesem korrespondierende Verschlüsselungsschlüssel, jeweils ein für den jeweiligen Teilnehmer individuell erzeugter, einmaliger kryptographischer Schlüssel ist.

5. Das Verfahren nach einem der vorigen Ansprüche, wobei die Anzahl von Teilnehmern natürliche Personen, juristische Personen, Datenspeicher oder sonstige physische Objekte, insbesondere medizinische Geräte oder Kits, oder eine Kombination von zwei oder mehr der vorgenannten Arten von Teilnehmern umfasst.

6. Das Verfahren nach einem der vorigen Ansprüche, wobei der erste Teilnehmer der Ersteller oder Bearbeiter der Transaktionsparameter ist und/oder wobei der zweite Teilnehmer ein Datenspeicher und/oder ein Empfänger der Transaktionsparameter ist.

7. Das Verfahren nach einem der vorigen Ansprüche, ferner umfassend:
- Initialisierung des Anwendungsprogramms für den ersten Teilnehmer, wobei die Initialisierung vorzugsweise ein Erfassen eines vom Notarserver erzeugten graphischen Codes umfasst, wobei der Code zumindest das erste und zweite Pseudonym des ersten Teilnehmers umfasst.

8. Das Verfahren nach Anspruch 7, wobei die Initialisierung umfasst:
- Erzeugung des ersten und zweiten Pseudonyms und Speicherung des ersten und zweiten Pseudonyms im Register des Notarservers und in dem Anwendungsprogramm;
- Erzeugen des Verschlüsselungsschlüssels und des Entschlüsselungsschlüssels, insbesondere durch Ableitung des Verschlüsselungsschlüssels oder Entschlüsselungsschlüssels von zumindest einem der Pseudonyme des ersten Teilnehmers, und Speicherung des Verschlüsselungsschlüssels im Anwendungsprogramm und des Entschlüsselungsschlüssels im Register des Notarservers.

9. Das Verfahren nach einem der vorigen Ansprüche, umfassend:
- Durchführung der Initialisierung für den ersten Teilnehmer für jeweils eines von mehreren verschiedenen Anwendungsprogrammen und/oder
- Durchführung der Initialisierung des Anwendungsprogrammes für ein oder mehrere weitere Teilnehmer,
- wobei die für den jeweiligen Teilnehmer erzeugten applikationsspezifischen Daten verknüpft mit einem globalen Identifikator des jeweiligen Teilnehmers in dem Register des Notarservers gespeichert werden, wobei der globale Teilnehmeridentifikator für alle Applikationen, die für einen Teilnehmer initialisiert werden, identisch ist und so in dem Register gespeichert ist, dass der globale Teilnehmeridentifikator nur dem Notarserver bekannt ist.

10. Das Verfahren nach einem der Ansprüche 7-9,
- wobei die Initialisierung des Anwendungsprogramms umfasst eine Speicherung von anwendungsprogrammspezifischen Teilnehmerdaten (746, 752, 916) des ersten Teilnehmers im Anwendungsprogramm und in Kopie in dem Register des Notarservers,
- wobei die anwendungsprogrammspezifischen Teilnehmerdaten insbesondere eine Anwendungs-ID und/oder Transaktionskontrolldaten umfassen;
wobei die anwendungsprogrammspezifischen Teilnehmerdaten Teil der Transaktionsanfrage, insbesondere Teil des Chiffrats der Transaktionsanfrage, sind;
wobei das Verfahren ferner umfasst:
- Durchführung einer zweiten Zuordnungsmanipulationsprüfung durch den Notarserver oder den Transaktionsserver bezüglich der Zuordnung der Transaktionsanfrage zu dem Anwendungsprogramm, wobei die Zuordnung als manipuliert gilt, wenn im Register keine mit dem ersten Pseudonym verknüpft gespeicherten anwendungsprogrammspezifischen Teilnehmerdaten enthalten sind, die identisch sind zu den als Bestandteil der Transaktionsanfrage erhaltenen anwendungsprogrammspezifischen Teilnehmerdaten;
wobei der Notarserver die Transaktionsstammdaten nicht an den Transaktionsserver sendet, wenn die zweite Zuordnungsmanipulationsprüfung eine Manipulation der Zuordnung feststellt.

11. Das Verfahren nach einem der Ansprüche, ferner umfassend:
- Bei der Initialisierung des Anwendungsprogramms für den ersten Teilnehmer, Speicherung von anwendungsprogrammspezifischen Transaktionskontrolldaten im Anwendungsprogramm und in Kopie in dem Register des Notarservers, wobei die anwendungsspezifischen Transaktionskontrolldaten insbesondere Transaktionskontrolldaten beinhalten, welche Rechte und/oder Rollen des ersten Teilnehmers bezüglich der von dem Anwendungsprogramm bereitgestellten Transaktionsparameter spezifizieren;
wobei das Verfahren ferner umfasst:
- Identifikation, durch den Notarserver in Antwort auf den Empfang des ersten Pseudonyms des ersten Teilnehmers vom Transaktionsserver, der im Register verknüpft mit dem ersten Pseudonym gespeicherten Transaktionskontrolldaten dieses Anwendungsprogramms;
- Übermittlung der identifizierten anwendungsprogrammspezifischen Transaktionskontrolldaten an den Transaktionsserver;
- Durchführung oder Veranlassung der Transaktion unter Berücksichtigung der anwendungsspezifischen Transaktionskontrolldaten durch den Transaktionsserver.

12. Das Verfahren nach einem der Ansprüche,
- wobei der zumindest eine Transaktionsserver eine vordefinierte Menge an Transaktionstypen (972-976) beinhaltet;
- wobei der Notarserver dazu ausgebildet ist, anhand des ersten und/oder zweiten Pseudonyms des ersten und/oder zweiten Teilnehmers nicht nur den Teilnehmer zu identifizieren, dem dieser zugeordnet ist, sondern auch den Typ der in der Transaktionsanfrage, die das erste und/oder zweite Pseudonym enthält, angefragten Transaktion;
- wobei der Transaktionsserver dazu ausgebildet ist, den Typ der durchzuführenden Transaktion anhand der in der Transaktionsanfrage als Klartext und/oder Teil des Chiffrats enthaltenen ersten oder zweiten Pseudonyms des ersten und/oder zweiten Teilnehmers zu identifizieren.

13. Das Verfahren nach Anspruch 12, ferner umfassend:
- Registrierung des ersten und/oder des zweiten Teilnehmers im Zuge einer Registrierung dieses Teilnehmers für das Anwendungsprogramm jeweils für eine oder mehrere der Transaktionstypen, die von dem Transaktionsserver unterstützt werden und welche zudem durch das Anwendungsprogramm unterstützt werden, wobei die Unterstützung eines Transaktionstyps durch das Anwendungsprogramm beinhaltet, dass das Anwendungsprogramm dazu konfiguriert ist, eine Transaktionsanfrage für diesen Transaktionstyp zu erzeugen; und/oder
- Prüfung, durch den Notarserver, ob der erste Teilnehmer für den in der Transaktionsanfrage spezifizierten Transaktionstyp registriert ist, und Übermittlung der Transaktionsstammdaten des ersten Teilnehmers an den Transaktionsserver nur dann, wenn dies der Fall ist.

14. Das Verfahren nach Anspruch 12 oder 13, wobei der erste Teilnehmer sich für mehrere verschiedene Anwendungsprogramme registriert hat, die unterschiedliche Anwendungen implementieren, wobei die von den unterschiedlichen Anwendungen unterstützten Transaktionstypen überlappen, sodass ein Transaktionstyp des Transaktionsservers von den mehreren Anwendungsprogrammen angefragt werden kann, ferner umfassend:
- Erzeugung eines graphischen Codes durch den Notarserver für den ersten Teilnehmer für eines der Anwendungsprogramme, wobei der graphische Code für jeden von diesem einen Anwendungsprogramm unterstützen Transaktionstyp zumindest ein erstes und zweites Pseudonym beinhaltet;
- Erfassung dieses graphischen Codes im durch dieses eine Anwendungsprogramm und/oder durch ein anderes Anwendungsprogramm zur Initialisierung des Anwendungsprogramms für den ersten Teilnehmer oder zur Einleitung einer Transaktion, an welcher der erste Teilnehmer beteiligt ist.

15. Das Verfahren nach Anspruch 12, 13 oder 14,
- wobei die Erfassung des ersten und/oder zweiten Pseudonyms des ersten und/oder zweiten Teilnehmers erfolgt durch Erfassung eines graphischen Codes, in welchem das erste und/oder zweite Pseudonym kodiert enthalten ist;
ferner umfassend:
- Erzeugung, durch den Notarserver, für jeden der Teilnehmer und jedes Anwendungsprogramm, für das der Teilnehmer registriert ist, einen graphischen Code, wobei der Code vorzugsweise für jede der von diesem Anwendungsprogramm unterstützen Transaktionstypen ein erstes und/oder zweites Pseudonym und vorzugsweise weitere die Durchführung einer Transaktion dieses Transaktionstyps bestimmende Daten beinhaltet, und
- Bereitstellung jedes der erzeugten graphischen Codes an den Teilnehmer, für den er ausgestellt wurde, durch den Notarserver, um dem Teilnehmer zu ermöglichen, durch Vorlage des graphischen Codes als erster und/oder zweiter Teilnehmer an einer Transaktion eines der vordefinierten Transaktionstypen teilzunehmen.

16. System zur Durchführung oder Veranlassung von Transaktionen zwischen einer Anzahl von Teilnehmern, umfassend:
- einen Notarserver (610), wobei der Notarserver ein Register beinhaltet, welches einen Registereintrag für jeden der Teilnehmer beinhaltet, wobei der Registereintrag jedes der Teilnehmer jeweils umfasst:
• ein erstes eindeutiges Pseudonym des Teilnehmers,
• ein zweites eindeutiges Pseudonym des Teilnehmers;
• teilnehmerspezifische Transaktionsstammdaten;
• ein kryptographischer Entschlüsselungsschlüssel;
- zumindest einen Transaktionsserver (620), wobei der zumindest eine Transaktionsserver eine Schnittstelle zu dem Notarserver und zu zumindest einem Anwendungsprogramm (634) umfasst, wobei das Anwendungsprogramm für einen ersten der Teilnehmer initialisiert wurde, wobei der zumindest eine Transaktionsserver dazu ausgebildet ist, um:
• Empfang einer Transaktionsanfrage, die das erste Pseudonym des ersten Teilnehmers im Klartext und ein Chiffrat beinhaltet, von dem Anwendungsprogramm (634)
• Senden des ersten Pseudonyms der Transaktionsanfrage an den Notarserver;
• In Antwort auf das Senden des ersten Pseudonyms, Empfang des Entschlüsselungsschlüssels, das dem ersten Teilnehmer im Register des Notarservers über das erste Pseudonym zugeordnet ist, von dem Notarserver;
• Entschlüsselung des Chiffrats mit dem Entschlüsselungsschlüssel, um zumindest zu erhalten: das erste Pseudonym des ersten Teilnehmers; ein zweites Pseudonyms des ersten Teilnehmers; und Transaktionsparameter;
wobei der zumindest eine Transaktionsserver und/oder der Notarserver ausgebildet ist zur Durchführung einer ersten Zuordnungsmanipulationsprüfung bezüglich der Zuordnung der Transaktionsparameter zum ersten Teilnehmer, wobei die Zuordnung als manipuliert gilt, wenn das durch die Entschlüsselung des Chiffrats erhaltene zweite Pseudonym des ersten Teilnehmers nicht identisch ist zu dem im Register des Notarservers für den ersten Teilnehmer gespeicherten zweiten Pseudonyms;
- wobei der Notarserver ausgebildet ist zur Übermittlung (602) zumindest der Transaktionsstammdaten des ersten Teilnehmers an den mindestens einen Transaktionsserver (620) durch den Notarserver (610) nur dann, wenn die erste Zuordnungsmanipulationsprüfung ergibt, dass die Zuordnung nicht manipuliert wurde,
- wobei der zumindest eine Transaktionsserver ausgebildet ist zur:
∘ In Antwort auf den Empfang der Transaktionsstammdaten des ersten Teilnehmers, Durchführung oder Veranlassung der Transaktion zwischen dem ersten Teilnehmer und dem zweiten Teilnehmer unter Verwendung der Transaktionsparameter und den Transaktionsstammdaten durch den mindestens einen Transaktionsserver (620).
- wobei der Notarserver ausgebildet ist zur:
∘ Identifikation des im Register gespeicherten Entschlüsselungsschlüssels anhand des ersten Pseudonyms des ersten Teilnehmers durch den Notarserver;
∘ Übermittlung des teilnehmerspezifischen Entschlüsselungsschlüssels durch den Notarserver an den Transaktionsserver.

17. System nach Anspruch 16 oder 17, wobei in dem Register des Notarservers teilnehmerspezifische Transaktionskontrolldaten (952, 916, 968) in den Registereinträgen der jeweiligen Teilnehmer enthalten sind, wobei der Notarserver eine Schnittstelle umfasst, die jedem der Teilnehmer nach erfolgreicher Authentifikation eine Manipulation der in dem Registereintrag dieses Teilnehmers gespeicherten Transaktionskontrolldaten ermöglicht, wobei der Notarserver ausgebildet ist zum:
- Empfang von Änderungen der Transaktionskontrolldaten eines der Teilnehmer bezüglich eine der Anwendungen und/oder bezüglich eines Transaktionstyps über die Schnittstelle von dem einen Teilnehmer;
- Identifikation aller derjenigen Anwendungen und/oder Transaktionstypen, die für den Teilnehmer registriert sind und für welche der Registereintrag des Teilnehmers Transaktionskontrolldaten enthält, die die gleichen Transaktionsaspekte kontrollieren wie die empfangenen Änderungen;
- Aktualisierung der Transaktionskontrolldaten dieser identifizierten Anwendungsprogramme und/oder Transaktionstypen im Registerdatensatz dieses einen Teilnehmers.

18. System nach Anspruch 16 oder 17, ferner umfassend zumindest ein Anwendungsprogramm, wobei das Anwendungsprogramm für einen ersten der Teilnehmer initialisiert wurde, wobei das initialisierte Anwendungsprogramm beinhaltet:
• das erste Pseudonym des ersten Teilnehmers;
• das zweite Pseudonyms des ersten Teilnehmers;
• einen kryptographischen Verschlüsselungsschlüssel, der zu dem im Register für den ersten Teilnehmer gespeicherten Entschlüsselungsschlüssel korrespondiert
wobei das Anwendungsprogramm dazu konfiguriert ist zum:
- Erfassung des Pseudonyms des zweiten Teilnehmers;
- Empfang von Transaktionsparametern,
- Erzeugung eines Chiffrats durch Verschlüsselung zumindest des zweiten Pseudonyms des ersten Teilnehmers, des Pseudonyms des zweiten Teilnehmers und der Transaktionsparameter mit dem Verschlüsselungsschlüssel;
- Erzeugung der Transaktionsanfrage, die das erste Pseudonym des ersten Teilnehmers im Klartext und das Chiffrat beinhaltet.

19. Anwendungsprogramm (634) zur Durchführung von Transaktionen zwischen einer Anzahl von Teilnehmern, wobei das Anwendungsprogramm über zumindest einen Transaktionsserver operativ gekoppelt ist an einen Notarserver, der jedem der Teilnehmer in einem Register mindestens zuordnet:
• ein erstes eindeutiges Pseudonym des Teilnehmers,
• ein zweites eindeutiges Pseudonym des Teilnehmers;
• teilnehmerspezifische Transaktionsstammdaten;
• ein kryptographischer Entschlüsselungsschlüssel;
- wobei das Anwendungsprogramm initialisiert ist für den ersten Teilnehmer, wobei das initialisierte Anwendungsprogramm beinhaltet:
• das erste Pseudonym des ersten Teilnehmers;
• das zweite Pseudonyms des ersten Teilnehmers;
• einen kryptographischen Verschlüsselungsschlüssel, der zu dem im Register für den ersten Teilnehmer gespeicherten Entschlüsselungsschlüssel korrespondiert
- wobei das Anwendungsprogramm konfiguriert ist zur:
• Erfassung eines Pseudonyms eines zweiten der Teilnehmer;
• Erfassung von Transaktionsparametern,
• Erzeugung eines Chiffrats durch Verschlüsselung zumindest des zweiten Pseudonyms des ersten Teilnehmers, des Pseudonyms des zweiten Teilnehmers und der Transaktionsparameter mit dem Verschlüsselungsschlüssel durch das Anwendungsprogramm
• Übermittlung (603) einer Transaktionsanfrage, die das erste Pseudonym des ersten Teilnehmers im Klartext und das Chiffrat beinhaltet, von dem Anwendungsprogramm (634) an den Transaktionsserver (620).
